# EUROPÄISCHE PATENTANMELDUNG

(11) **EP 4 841 121 A2**
(43) Veröffentlichungstag der Anmeldung: **18.11.2026**
(21) Anmeldenummer: 26203562.9
(22) Anmeldetag: 31.01.2020
(51) Int. Cl.: F16B 21/16, F16B 21/18, A45C 13/10

(54) **VERSCHLUSSVORRICHTUNG MIT ANEINANDER ANSETZBAREN VERSCHLUSSTEILEN**

(30) Priorität: 31.01.2019 DE 102019201259
(62) Dokumentnummer(n) der früheren Anmeldung(en) nach Art. 76 EPÜ: 23211880.2 / 4 302 636; 20705138.4 / 3 857 075
(71) Anmelder: Fidlock GmbH, 30659 Hannover (DE)
(72) Erfinder: FIEDLER, Joachim, 30519 Hannover (DE); BOTKUS, Breido, 30175 Hannover (DE); HILLER, Lasse, 30952 Ronnenberg (DE)
(74) Vertreter: Maikowski & Ninnemann Patentanwälte Partnerschaft mbB

(57) **Zusammenfassung**

Eine Verschlussvorrichtung (1) umfasst ein einen Körper (20) aufweisendes erstes Verschlussteil (2) und ein zweites Verschlussteil (3), die zum Schließen der Verschlussvorrichtung (1) entlang einer Schließrichtung (X) aneinander ansetzbar und in einer Schließstellung miteinander verbunden sind. Zumindest ein Verriegelungselement (23) ist verstellbar an dem Körper (20) des ersten Verschlussteils (2) angeordnet und steht mit zumindest einem Eingriffsabschnitt (310) des zweiten Verschlussteils (3) in einer Schließstellung derart in Eingriff, dass das erste Verschlussteil (2) und das zweite Verschlussteil (3) miteinander verriegelt sind. Dabei ist vorgesehen, dass das erste Verschlussteil (2) eine erste Magneteinrichtung (22) und das zweite Verschlussteil (3) eine zweite Magneteinrichtung (32) aufweisen, wobei die erste Magneteinrichtung (22) und die zweite Magneteinrichtung (32) bei Ansetzen des ersten Verschlussteils (2) und des zweiten Verschlussteils (3) aneinander magnetisch anziehend zusammenwirken und das zumindest eine Verriegelungselement (23) derart magnetisch ausgebildet ist, dass das zumindest eine Verriegelungselement (23) in der Schließstellung durch die erste Magneteinrichtung (22) und/oder die zweite Magneteinrichtung (32) in Richtung eines Eingriffs mit dem zumindest einen Eingriffsabschnitt (310) belastet ist.

## Beschreibung

Die Erfindung betrifft eine Verschlussvorrichtung nach dem Oberbegriff des Anspruchs 1.

Eine derartige Verschlussvorrichtung umfasst ein einen Körper aufweisendes erstes Verschlussteil und ein zweites Verschlussteil, die zum Schließen der Verschlussvorrichtung entlang einer Schließrichtung aneinander ansetzbar und in einer Schließstellung miteinander verbunden sind. Die Verschlussvorrichtung weist weiter zumindest ein Verriegelungselement auf, das verstellbar an dem Körper des ersten Verschlussteils angeordnet ist. An dem zweiten Verschlussteil ist zumindest ein Eingriffsabschnitt geformt. In der Schließstellung stehen das zumindest eine Verriegelungselement und der zumindest eine Eingriffsabschnitt derart miteinander in Eingriff, dass das erste Verschlussteil und das zweite Verschlussteile miteinander verriegelt sind.

Eine solche Verschlussvorrichtung dient generell zum Verbinden zweier Baugruppen miteinander. Eine solche Verschlussvorrichtung kann zum Beispiel an einem elektronischen Gerät, zum Beispiel einem Mobiltelefon oder Tablet-Computer, verwendet werden, um das elektronische Gerät an einer übergeordneten Baugruppe (lösbar) festzulegen, zum Beispiel an einem Armaturenbrett eines Fahrzeugs oder dergleichen. Eine solche Verschlussvorrichtung kann zum Beispiel aber auch an einem Fahrrad zum Befestigen eines Gegenstands, zum Beispiel einer Trinkflasche, an einem Fahrradrahmen Verwendung finden.

Eine solche Verschlussvorrichtung soll in der Schließstellung eine feste, belastbare Verbindung der Verschlussteile miteinander herstellen. Die Verbindung soll hierbei in einfacher, komfortabler Weise lösbar sein, um einem Nutzer das Trennen der zugeordneten Baugruppen voneinander zu ermöglichen.

Bei einer aus der US 6,182,336 bekannten Verschlussvorrichtung ist ein sogenanntes Male-Teil an ein sogenanntes Female-Teil anzusetzen. An dem Male-Teil ist ein Magnet angeordnet, der beim steckenden Verbinden mit einem scheibenförmigen Verriegelungselement an dem Female-Teil wechselwirkt, um das Male-Teil und das Female-Teil in einer Schließstellung miteinander zu verriegeln.

Aufgabe der vorliegenden Erfindung ist es, eine Verschlussvorrichtung zur Verfügung zu stellen, die in einer Schließstellung eine feste, belastbare Verbindung zwischen den Verschlussteilen herstellt, dabei aber einfach und komfortabel lösbar ist.

Diese Aufgabe wird durch einen Gegenstand mit den Merkmalen des Anspruchs 1 gelöst.

Demnach weisen das erste Verschlussteil eine erste Magneteinrichtung und das zweite Verschlussteil eine zweite Magneteinrichtung auf. Die erste Magneteinrichtung und die zweite Magneteinrichtung wirken bei Ansetzen des ersten Verschlussteils und des zweiten Verschlussteils aneinander magnetisch anziehend zusammen. Das zumindest eine Verriegelungselement ist dabei derart magnetisch ausgebildet, dass das zumindest eine Verriegelungselement in der Schließstellung durch die erste Magneteinrichtung und/oder die zweite Magneteinrichtung in Richtung eines Eingriffs mit dem zumindest einen Eingriffsabschnitt belastet ist.

Die Verschlussvorrichtung ist somit als magnetische Verschlussvorrichtung ausgebildet. An dem ersten Verschlussteil und an dem zweiten Verschlussteil ist jeweils eine Magneteinrichtung angeordnet, beispielsweise jeweils ausgebildet durch einen Permanentmagneten oder an einem Verschlussteil durch einen Permanentmagneten und am anderen Verschlussteil durch einen magnetischen Anker aus einem ferromagnetischen Material. Die Magneteinrichtungen wirken derart magnetisch zusammen, dass bei Ansetzen der Verschlussteile aneinander die Verschlussteile auf einander zu und in Eingriff miteinander gezogen werden und somit das Schließen der Verschlussvorrichtung magnetisch unterstützt wird.

Die Magneteinrichtungen dienen hierbei auch zum Herstellen der Verriegelung zwischen dem ersten Verschlussteil und dem zweiten Verschlussteil in der Schließstellung.

So ist - zusätzlich zur ersten Magneteinrichtung am ersten Verschlussteil und zur zweiten Magneteinrichtung am zweiten Verschlussteil - das zumindest eine Verriegelungselement magnetisch ausgebildet, beispielsweise indem das zumindest eine Verriegelungselement ganz oder teilweise aus einem ferromagnetischen Material gefertigt oder permanentmagnetisch ausgebildet ist, sodass das zumindest eine Verriegelungselement magnetisch mit der ersten Magneteinrichtung des ersten Verschlussteils und/oder der zweiten Magneteinrichtung des zweiten Verschlussteils zusammenwirkt.

Das zumindest eine Verriegelungselement kann insbesondere als passiver Anker zum Beispiel aus einem ferromagnetischen Material ausgebildet sein, der magnetisch anziehend mit der als Permanentmagnet ausgebildeten Magneteinrichtung des ersten Verschlussteils und/oder des zweiten Verschlussteils zusammenwirkt. Alternativ kann das zumindest eine Verriegelungselement auch als Permanentmagnet und somit aktiv magnetisch ausgebildet sein.

Unabhängig davon, ob das zumindest eine Verrieglungselement aktiv oder passiv magnetisch ausgebildet ist, wirkt das zumindest eine Verrieglungselement derart magnetisch mit der Magneteinrichtung des ersten Verschlussteils und/oder der Magneteinrichtung des zweiten Verschlussteils zusammen, dass das zumindest eine Verriegelungselement in der Schließstellung mit einer magnetischen Anziehungskraft in Richtung eines Eingriffs mit dem zumindest einen Eingriffsabschnitt belastet ist.

Das magnetische Zusammenwirken ist hierbei insbesondere derart, dass in der Schließstellung das zumindest eine Verriegelungselement aufgrund der magnetischen Wechselwirkung in Eingriff mit dem zugeordneten Eingriffsabschnitt gezogen wird . In der Schließstellung greift das zumindest eine Verriegelungselement des ersten Verschlussteils somit in den zugeordneten Eingriffsabschnitt am zweiten Verschlussteil ein, sodass dadurch eine Verriegelung zwischen dem ersten Verschlussteil und dem zweiten Verschlussteil hergestellt ist. Die Verriegelung wird aufgrund der magnetischen Wechselwirkung gehalten, sodass die Verschlussteile in der Schließstellung fest und belastbar miteinander verbunden sind.

Durch Einwirken auf das zumindest eine Verriegelungselement, beispielsweise unmittelbar oder mittelbar über ein zugeordnetes Verstellteil, kann die Verriegelung - entgegen der Magnetwirkung - aufgehoben werden, sodass die Verschlussteile voneinander getrennt werden können. Dadurch, dass das zumindest eine Verriegelungselement außer Eingriff von dem zugeordneten Eingriffsabschnitt gebracht wird, können die Verschlussteile somit voneinander gelöst und die Verschlussvorrichtung geöffnet werden.

Beispielsweise wird das zumindest eine Verriegelungselement des ersten Verschlussteils in der Schließstellung durch die zweite Magneteinrichtung des zweiten Verschlussteils magnetisch angezogen und in Eingriff mit dem Eingriffsabschnitt des zweiten Verschlussteils gebracht. Aufgrund der magnetischen Wechselwirkung zwischen dem magnetischen Verriegelungselement und dem zweiten Verschlussteil wird somit bei Schließen der Verschlussvorrichtung die Verriegelung selbsttätig hergestellt, sodass die Verschlussteile in der Schließstellung fest und belastbar aneinander gehalten sind.

In einer Ausgestaltung weist das erste Verschlussteil oder das zweite Verschlussteil eine Eingriffsöffnung auf, in die zum Schließen der Verschlussvorrichtung ein zum Beispiel zapfenförmiges Eingriffselement des jeweils anderen Verschlussteils eingeführt werden kann. Eines der Verschlussteile ist somit als Female-Teil (mit einer Eingriffsöffnung) ausgebildet, während das andere der Verschlussteile als Male-Teil (mit einem Eingriffselement) gestaltet ist. Das zumindest eine Verriegelungselement kann an dem Female-Teil und der zumindest eine Eingriffsabschnitt entsprechend an dem Male-Teil angeordnet sein. Umgekehrt ist aber auch denkbar möglich, dass das zumindest eine Verriegelungselement an dem Male-Teil angeordnet ist, während der zumindest eine Eingriffsabschnitt an dem Female-Teil geformt ist.

In einer Ausgestaltung ist das zumindest eine Verriegelungselement in einer Ebene, die durch die Schließrichtung und eine quer zur Schließrichtung (und quer zu einer Längsrichtung, entlang derer das zumindest eine Verriegelungselement längserstreckt ist) erstreckte Querrichtung aufgespannt ist, linear verstellbar. Alternativ kann das zumindest eine Verriegelungselement auch in der durch die Schließrichtung und die Querrichtung aufgespannten Ebene verschwenkbar sein. Jeweils ist das zumindest eine Verriegelungselement an dem ersten Verschlussteil verstellbar, um in einer ersten Stellung in den zumindest einen Eingriffsabschnitt des zweiten Verschlussteils einzugreifen und die Verschlussteile somit in der Schließstellung miteinander zu verriegeln. Aus dieser ersten Stellung ist das zumindest eine Verriegelungselement verstellbar, um die Verriegelung aufzuheben und die Verschlussteile somit in einfacher Weise voneinander lösen zu können.

Das zumindest eine Verriegelungselement ist vorzugsweise in einer Aufnahmeöffnung im Körper des ersten Verschlussteils aufgenommen und in dieser Aufnahmeöffnung verstellbar. Die Aufnahmeöffnung kann eine Führung für das zumindest eine Verriegelungselement vorgeben, um eine lineare Verstellbewegung oder eine Schwenkbewegung des zumindest einen Verrieglungselements an dem Körper des ersten Verschlussteils zu definieren.

In einer Ausgestaltung ist die Aufnahmeöffnung derart schräg zur Schließrichtung und zur Querrichtung erstreckt, dass das zumindest eine Verriegelungselement entlang einer schräg zur Schließrichtung und schräg zur Querrichtung erstreckten Verstellrichtung in der Aufnahmeöffnung verstellbar ist. In diesem Fall ist das zumindest eine Verriegelungselement linear an dem Körper des ersten Verschlussteils verstellbar. Die Verstellrichtung ist hierbei schräg zur Schließrichtung erstreckt, sodass das zumindest eine Verriegelungselement schräg zur Schließrichtung in Eingriff mit oder außer Eingriff von dem zumindest einen Eingriffsabschnitt gebracht werden kann.

Die schräge Ausrichtung der Aufnahmeöffnung kann derart sein, dass bei einem Ansetzen der Verschlussteile aneinander das zumindest eine Verriegelungselement selbsttätig in der Aufnahmeöffnung ausweichen kann. So kann bei einem Einwirken des Eingriffselements des zweiten Verschlussteils auf das zumindest eine Verriegelungselement das zumindest eine Verriegelungselement in der schräg zur Schließrichtung geneigten Aufnahmeöffnung so verschoben werden, dass das Eingriffselement an dem zumindest einen Verriegelungselement entlang bewegt und das zumindest eine Verriegelungselement in Eingriff mit dem zumindest einen Eingriffsabschnitt an dem Eingriffselement gebracht werden kann.

Ist das zumindest eine Verriegelungselement an dem Körper des ersten Verschlussteils verschwenkbar, so ist die Schwenkrichtung vorzugsweise entlang der Querrichtung gerichtet. Um die Schwenkachse ist das zumindest eine Verriegelungselement verschwenkbar, um das Verriegelungselement in Eingriff mit oder außer Eingriff von dem zumindest einen Eingriffsabschnitt zu bringen.

In einer Ausgestaltung weisen der Eingriffsabschnitt eine schräg zur Schließrichtung erstreckte, geradlinig erstreckte oder gekrümmte erste Schrägfläche und das erste Verschlussteil im Bereich der Aufnahmeöffnung eine schräg zur Schließrichtung erstreckte, geradlinig erstreckte oder gekrümmte zweite Schrägfläche auf. In der Schließstellung ist das zumindest eine Verriegelungselement zwischen der ersten Schrägfläche und der zweiten Schrägfläche angeordnet, sodass darüber eine Verriegelung zwischen dem ersten Verschlussteil und dem zweiten Verschlussteil hergestellt ist.

Die Verriegelung zwischen dem ersten Verschlussteil und dem zweiten Verschlussteil wirkt insbesondere entlang der Schließrichtung derart, dass das erste Verschlussteil und das zweite Verschlussteil entlang der Schließrichtung aneinander gehalten und somit nicht entlang der Schließrichtung ohne weiteres, jedenfalls nicht ohne Lösen der Verriegelung, voneinander lösbar sind. Werden die Verschlussteile entlang der Schließrichtung zueinander belastet, werden Kräfte über die Schrägflächen in das zumindest eine Verriegelungselement eingeleitet, wobei die Winkelstellung der Schrägflächen zueinander die Stärke und Festigkeit der Verriegelung bestimmt.

In einer ersten Ausgestaltung sind die erste Schrägfläche und die zweite Schrägfläche in der durch die Schließrichtung und die Querrichtung aufgespannten Ebene parallel zueinander erstreckt. Dies bewirkt, dass bei einer Belastung der Verschlussteile zueinander in der Schließstellung das zumindest eine Verriegelungselement zwischen parallel miteinander gerichteten Ebenen verklemmt wird und somit eine Verriegelung zwischen den Verschlussteilen herstellt. Bei einer Belastung können sich die Verschlussteile mit einem gewissen Spiel zueinander bewegen. Es ist denkbar, dass bei Überschreiten einer Grenzkraft sich die Verriegelung selbsttätig löst und die Verschlussteile somit voneinander getrennt werden können (z.B. wenn sich durch ein Spiel zwischen Eingriffselement und Eingriffsöffnung unter Last das Eingriffselement verkippt und die Schrägflächen nicht mehr exakt parallel zueinander ausgerichtet sind).

In alternativer Ausgestaltung kann der Winkel zwischen den Schrägflächen größer Null sein. In der durch die Schließrichtung und die Querrichtung aufgespannten Ebene beschreiben die Schrägfläche somit einen Winkel zueinander, der größer Null ist, wobei bei einer gekrümmten Schrägfläche der Winkel zu einer Tangente zur Schrägfläche zu messen ist. Hierunter ist zu verstehen, dass sich die lichte Weite zwischen den Schrägflächen nach außen hin, also weg von dem Eingriffsabschnitt, weitet, die Schrägflächen also eine nach außen sich weitende Keilform beschreiben. Eine solche winklige Anordnung der Schrägflächen zueinander hat die Wirkung, dass die Verschlussteile in der Schließstellung zumindest näherungsweise spielfrei zueinander gehalten werden. Wirken zum Beispiel Vibrationskräfte zwischen den Verschlussteilen, hat dies die Wirkung, dass das zumindest eine Verriegelungselement tiefer in Eingriff mit dem zumindest einen Eingriffsabschnitt gezogen wird, sodass die Verschlussteile spielfrei miteinander in Eingriff gedrückt werden. Bei Überschreiten einer gewissen Grenzkraft können die Verschlussteile sich hierbei selbsttätig voneinander lösen, unter selbsttätiger Aufhebung der Verriegelung.

In wiederum alternativer Ausgestaltung ist der Winkel zwischen den Schrägflächen kleiner Null, wobei bei einer gekrümmten Schrägfläche der Winkel zu einer Tangente zur Schrägfläche zu messen ist. Die Schrägflächen beschreiben somit in der durch die Schließrichtung und die Querrichtung aufgespannten Ebene einen solchen Winkel zueinander, dass sich die lichte Weite zwischen den Schrägflächen nach außen hin, also weg von dem zumindest einen Eingriffsabschnitt, verkleinert. Die Schrägflächen beschreiben somit miteinander eine Keilform, die sich nach außen hin zuspitzt. Eine auf diese Weise winklige Anordnung der Schrägflächen zueinander hat die Wirkung, dass die Verbindung zwischen den Verschlussteilen in der Schließstellung selbstsichernd ist. Bei Belastung zwischen den Verschlussteilen wird das zumindest eine Verriegelungselement derart zwischen den Schrägflächen verkeilt, dass das zumindest eine Verriegelungselement tiefer in Eingriff mit dem zumindest einen Eingriffsabschnitt belastet wird und die Verbindung zwischen dem zumindest einen Verriegelungselement und dem Eingriffsabschnitt sich somit stabilisiert. Bei Belastung kann hierbei ein gewisses Spiel zwischen den Verschlussteilen auftreten.

In einer Ausgestaltung weist eine der Schrägflächen einen ersten Abschnitt, der in der durch die Schließrichtung und die Querrichtung aufgespannten Ebene unter einem Winkel größer Null zu der anderen der Schrägflächen angeordnet ist, und zudem einen zweiten Abschnitt, der in der durch die Schließrichtung und die Querrichtung aufgespannten Ebene unter einem Winkel kleiner Null zu der anderen der Schrägflächen angeordnet ist, auf. Beispielsweise kann die Schrägfläche des ersten Verschlussteils solche unterschiedlichen Abschnitte aufweisen. Denkbar ist aber auch, dass die Schrägfläche am Eingriffsabschnitt des zweiten Verschlussteils solche unterschiedlichen Abschnitte aufweist.

Durch die unterschiedlichen Abschnitte der Schrägfläche kann erreicht werden, dass die Verschlussvorrichtung zum einen in der Schließstellung im Wesentlichen spielfrei ist, das erste Verschlussteil und das zweite Verschlussteil somit im Wesentlichen spielfrei aneinander gehalten werden. Insbesondere können in der Schließstellung in unbelastetem oder wenig belastetem Zustand das erste Verschlussteil und das zweite Verschlussteil so zueinander angeordnet sein, dass das Verrieglungselement zwischen dem ersten Abschnitt der einen Schrägfläche und der anderen Schrägfläche angeordnet ist, das Verriegelungselement sich also in einem Bereich zwischen den Schrägflächen befindet, in dem die Schrägflächen nach Art eines sich nach außen weitenden Keils zueinander angeordnet sind.

Wirkt eine Belastung zwischen den Verschlussteilen, die beispielsweise eine Grenzkraft übersteigt, so kann das Verrieglungselement aus dem Bereich zwischen dem ersten Abschnitt der einen Schrägfläche und der andere Schrägfläche gelangen und beispielsweise sich so zwischen den Schrägflächen verschieben, dass das Verriegelungselement nunmehr zwischen dem zweiten Abschnitt der einen Schrägfläche und der anderen Schrägfläche gehalten ist. Aufgrund der Anordnung des zweiten Abschnitts der einen Schrägfläche und der anderen Schrägfläche mit einem negativen Winkel, also nach Art eines sich nach außen verjüngenden Keils, wird erreicht, dass bei einer weiteren Belastung die Verriegelung zwischen den Verschlussteilen selbstverstärkend ist. Bei großer Belastung zwischen den Verschlussteilen wird das Verriegelungselement in Richtung eines Eingriffs mit dem Eingriffsabschnitt des zweiten Verschlussteils belastet, sodass es nicht zu einem selbsttätigen Lösen der Verriegelung kommen kann.

Durch das Vorsehen solcher unterschiedlichen Abschnitte an der zugeordneten Schrägfläche kann somit zum einen eine spielfreie Anordnung der Verschlussteile zueinander und zum anderen auch eine sichere, selbstverstärkende, auch bei großer Belastung nicht selbsttätig lösbare Verbindung geschaffen werden.

Die erste Schrägfläche und/oder die zweite Schrägfläche können bei den vorangehenden Ausgestaltungen gekrümmt oder geradlinig in der durch die Schließrichtung und die Querrichtung aufgespannten Ebene erstreckt sein. Ist die Schrägfläche gekrümmt ausgebildet, so ist die Tangente zumindest an einem Punkt der Schrägfläche schräg unter einem Winkel zur Schließrichtung gerichtet.

Die erste Schrägfläche und/oder die zweite Schrägfläche können insbesondere mit einem einheitlichen, konstanten Krümmungsradius oder mit einem variablen Krümmungsradius gekrümmt sein.

Weist die erste Schrägfläche und/oder die zweite Schrägfläche unterschiedliche Abschnitte auf, so können die Abschnitte gekrümmt oder geradlinig erstreckt sein. Beispielsweise können der erste Abschnitt und der zweite Abschnitt einer Schrägfläche jeweils gekrümmt sein, wobei eine Tangente am ersten Abschnitt derart schräg gestellt ist, dass sie unter einem Winkel größer Null zu der anderen Schrägfläche angeordnet ist, während eine Tangente am zweiten Abschnitt derart schräg gestellt ist, dass sie unter einem Winkel kleiner Null zu der anderen Schrägfläche erstreckt ist.

Bei den unterschiedlichen Abschnitten kann es sich auch um aneinander anschließende Abschnitte einer gekrümmten Fläche, insbesondere einer Kreisbahn handeln.

Eine Schrägfläche kann gekrümmte und geradlinig erstreckte Abschnitte aufweisen, die aneinander anschließen und gegebenenfalls unterschiedlich gerichtet sind.

In einer Ausgestaltung ist das zumindest eine Verriegelungselement senkrecht zu der durch die Schließrichtung und die Querrichtung aufgespannten Ebene längserstreckt. Das Verriegelungselement kann beispielsweise bolzenförmig (mit einer entlang einer Längsrichtung senkrecht zur Schließrichtung und zur Querrichtung zylindrischen Form) ausgebildet sein. In der Schließstellung ist das zumindest eine Verriegelungselement in Eingriff mit dem zugeordneten Eingriffsabschnitt. Zum Lösen der Verschlussteile voneinander kann das zumindest eine Verriegelungselement beispielsweise schräg zur Schließrichtung in der zugeordneten Aufnahmeöffnung am Körper des ersten Verschlussteils bewegt werden, um das zumindest eine Verriegelungselement außer Eingriff von dem zugeordneten Eingriffsabschnitt zu bringen.

Alternativ kann das zumindest eine Verriegelungselement ringförmig ausgebildet sein, wobei das zumindest eine Verriegelungselement in diesem Fall umfänglich um die Schließrichtung erstreckt und dabei umfänglich geschlossen oder umfänglich an einem Ort geöffnet (also als geöffneter Ring ausgebildet) ist. In der Schließstellung ist das zumindest eine Verriegelungselement in Eingriff mit einem zum Beispiel umlaufend um die Schließrichtung an einem Eingriffselement des zweiten Verschlussteils geformten Eingriffsabschnitt. Zum Lösen der Verbindung der Verschlussteile voneinander kann das zumindest eine Verriegelungselement verstellt werden, beispielsweise indem der Radius des ringförmigen Verrieglungselements geweitet und das Verriegelungselement somit außer Eingriff von dem zugeordneten Eingriffsabschnitt des zweiten Verschlussteils gebracht wird. Das Verriegelungselement ist in diesem Fall somit vorteilhafterweise zumindest abschnittsweise elastisch ausgebildet.

Das Verstellen des zumindest einen Verriegelungselements zum Aufheben der Verriegelung kann händisch durch unmittelbares Einwirken auf das zumindest eine Verriegelungselement erfolgen. So kann das zumindest eine Verriegelungselement händisch zum Beispiel in der zugeordneten Aufnahmeöffnung des ersten Verschlussteils bewegt werden, um auf diese Weise das zumindest eine Verriegelungselement entgegen der Magnetkraft der zweiten Magneteinrichtung des zweiten Verschlussteils außer Eingriff von dem Eingriffsabschnitt des zweiten Verschlussteils zu bringen.

In einer Ausgestaltung weist die Verschlussvorrichtung demgegenüber ein Verstellteil auf, das zum Einwirken und Verstellen des zumindest einen Verriegelungselements dient. Das Verstellteil ist in eine Betätigungsrichtung betätigbar, um das zumindest eine Verriegelungselement zum Lösen des ersten Verschlussteils und des zweiten voneinander außer Eingriff von dem zumindest einen Eingriffsabschnitt zu bringen. Auf das Verstellteil kann somit ein Nutzer einwirken, um durch Betätigen des Verstellteils auf das zumindest eine Verriegelungselement einzuwirken und dieses aus seinem Eingriff mit dem zumindest einen Eingriffsabschnitt zu lösen und auf diese Weise die Verschlussteile in einfacher, komfortabler Weise voneinander trennen zu können.

Das Verstellteil kann beispielsweise verstellbar an dem ersten Verschlussteil angeordnet sein. Das Verstellteil kann aber auch verstellbar an dem zweiten Verschlussteil oder als zu den Verschlussteilen gesondertes Element ausgebildet sein. Im letzten Fall ist das Verstellteil zu beiden Verschlussteilen verstellbar, dabei aber nicht (unmittelbar) an den Verschlussteilen geführt.

Das Verstellteil kann quer zur Schließrichtung oder entlang der Schließrichtung zu dem Körper des ersten Verschlussteils zu bewegen sein. Entsprechend ist die Betätigungsrichtung quer zur Schließrichtung oder entlang der Schließrichtung gerichtet. Grundsätzlich sind aber auch andere Ausrichtungen der Betätigungsrichtung denkbar und möglich.

Ist das Verstellteil entlang der Schließrichtung zu verstellen, so kann das Verstellteil beispielsweise auf Enden des zumindest einen Verriegelungselements einwirken, um durch Verstellen des Verstellteils entlang der Schließrichtung das zumindest eine Verriegelungselement in der beispielsweise schräg zur Schließrichtung erstreckten Aufnahmeöffnung des ersten Verschlussteils zu bewegen und dadurch außer Eingriff von dem zumindest einen Eingriffsabschnitt des zweiten Verschlussteils zu bringen. Durch Verstellen des Verstellteils wird das zumindest eine Verriegelungselement somit in der durch die Schließrichtung und die Querrichtung aufgespannten Ebene in der Aufnahmeöffnung bewegt und dadurch außer Eingriff von dem zumindest einen Eingriffsabschnitt des zweiten Verschlussteils gebracht.

Ist das Verstellteil quer zur Schließrichtung zu verstellen, so kann durch Verstellen des Verstellteils das zumindest eine Verriegelungselement senkrecht zu der durch die Schließrichtung und die Querrichtung aufgespannten Ebene außer Eingriff von dem zumindest einen Eingriffsabschnitt gebracht werden. In diesem Fall wird zum Aufheben der Verriegelung das zumindest eine Verriegelungselement somit nicht in der durch die Schließrichtung und die Querrichtung aufgespannten Ebene bewegt, sondern senkrecht dazu.

In einer Ausgestaltung kann das Verstellteil auch zu dem Körper des ersten Verschlussteils schwenkbar sein und somit durch Verschwenken bewegt werden, um das zumindest eine Verriegelungselement außer Eingriff von dem Eingriffsabschnitt des zweiten Verschlussteils zu bringen.

Das Verstellteil kann mechanisch auf das zumindest eine Verriegelungselement einwirken, um bei Betätigen des Verstellteils in die Betätigungsrichtung das zumindest eine Verriegelungselement außer Eingriff von dem zugeordneten Eingriffsabschnitt zu bringen. Alternativ kann das Verstellteil auch ein Verstellen der ersten und/oder der zweiten Magneteinrichtung bewirken, sodass die auf das zumindest eine Verriegelungselement wirkenden Magnetkräfte verändert werden und das zumindest eine Verriegelungselement magnetisch außer Eingriff von dem zugeordneten Eingriffsabschnitt gezogen wird. In diesem Fall wird das zumindest eine Verriegelungselement somit nicht mechanisch verstellt, sondern durch Magnetwirkung außer Eingriff von dem Eingriffsabschnitt gebracht, wenn das Verstellteil betätigt wird.

Alternativ kann das Verstellteil auch durch mechanische oder magnetische Einwirkung eines von den beiden Verschlussteilen unabhängigen, nicht direkt verbundenen Körpers außer Eingriff gebracht werden. Eine solche Baugruppe kann man als mechanischen Transistor charakterisieren, bei dem ein drittes Element die zwei Hauptverschlussteile "schaltet". Beispielsweise kann das erste Verschlussteil mit einem Ende einer Führungsstange, z.B. einer Stange für Laufelemente eines Vorhanges, ausgebildet sein, und das erste Verschlussteil kann an ein an einer Wand oder einer Decke angeordnetes zweites Verschlussteils ansetzbar sein. Wenn nun ein an mehreren Laufelementen an der Stange angebrachter Vorhang verschoben wird und das am nächsten zu dem ersten Verschlussteil liegende Laufelement mechanisch auf das Verriegelungselement einwirkt und es außer Eingriff bringt, kann die Vorhangstange abgenommen werden. Ein Laufelement, das einen Magneten enthält, kann bei Annäherung an das erste Verschlussteil eine magnetische Verstellung bewirken, wenn Magnetstärke, Anordnung und Polarisierung relativ zu den Magneten im ersten und zweiten Verschlussteil geeignet dimensioniert sind. Beispielsweise kann ein Außer-Eingriff-bringen des Verriegelungselements dadurch bewirkt werden, dass ein in einem Laufelement angeordneter Magnet deutlich stärker ist als ein in dem ersten Verschlussteil angeordnete Magnet. Der im Laufelement angeordnete Magnet kann auch bewirken, dass das Laufelement magnetisch zu dem ersten Verschlussteil hingezogen wird. Eine derartige Anordnung ist selbstverständlich nicht auf die Anordnung eines Vorhangs beschränkt, sondern kann vielfache Anwendung in kleinem oder großen Maßstab finden.

In einer Ausgestaltung ist das Verstellteil entgegen der Betätigungsrichtung zu einem Abschnitt des ersten Verschlussteils federvorgespannt. Nach einem Betätigen des Verstellteils in die Betätigungsrichtung wird das Verstellteil somit selbsttätig aufgrund einer Federvorspannung zurück in eine Ausgangsstellung gestellt.

In einer Ausgestaltung ist die erste Magneteinrichtung des ersten Verschlussteils an dem Verstellteil angeordnet und gemeinsam mit dem Verstellteil verstellbar. Dies hat zur Folge, dass durch Verstellen des Verstellteils auch die magnetischen Anziehungskräfte zwischen dem ersten Verschlussteil und dem zweiten Verschlussteil beeinflusst, insbesondere abgeschwächt werden, sodass durch Betätigen des Verstellteils nicht nur die Verriegelung gelöst, sondern auch der magnetische Halt zwischen den Verschlussteilen abgeschwächt und gegebenenfalls sogar in eine Abstoßung umgedreht wird. Dies kann das Lösen der Verschlussteile voneinander weiter unterstützen.

Ist das Verstellteil entlang der Schließrichtung an dem Körper des ersten Verschlussteils verstellbar angeordnet, wird durch Betätigen des Verstellteils die erste Magneteinrichtung entsprechend in der Schließrichtung von dem zweiten Verschlussteil und der daran angeordneten zweiten Magneteinrichtung entfernt. Ist das Verstellteil quer zur Schließrichtung und somit senkrecht zu der durch die Schließrichtung und die Querrichtung aufgespannten Ebene verstellbar, so wird die erste Magneteinrichtung bei einem Verstellen des Verstellteils quer zur Schließrichtung von dem zweiten Verschlussteil und der daran angeordneten zweiten Magneteinrichtung entfernt.

In einer Ausgestaltung wirkt ein Nutzer direkt auf das Verstellteil ein, um das Verstellteil zu betätigen und dadurch die Verriegelung zwischen den Verschlussteilen aufzuheben und die Verschlussteile somit voneinander lösen zu können.

In einer anderen Ausgestaltung kann das erste Verschlussteil zusätzlich zu dem Verstellteil zumindest ein Wirkelement aufweisen, das entlang einer von der Betätigungsrichtung unterschiedlichen Wirkrichtung zu dem Verstellteil verstellbar und derart mit dem Verstellteil wirkverbunden ist, dass ein Verstellen des Wirkelements in die Wirkrichtung eine Betätigung des Verstellteils in die Betätigungsrichtung bewirkt.

Ein Nutzer wirkt in diesem Fall auf das Wirkelement ein, um das Verstellteil zu betätigen. Das Wirkelement kann beispielsweise kraftumlenkend mit dem Verstellteil gekoppelt sein, beispielsweise über aneinander gleitend gelagerte schiefe Ebenen, sodass ein Verstellen des Wirkelements entlang der Wirkrichtung zu einem Verstellen des Verstellteils entlang der Betätigungsrichtung führt. Die Wirkrichtung kann beispielsweise quer zur Schließrichtung gerichtet sein, während die Betätigungsrichtung, entlang derer das Verstellteil zu bewegen ist, entlang der Schließrichtung gerichtet ist. Ein Nutzer kann beispielsweise auf das Wirkelement drücken, um darüber das Verstellteil entlang der Betätigungsrichtung zu betätigen und somit die Verriegelung zwischen den Verschlussteilen durch Einwirken auf das zumindest eine Verriegelungselement aufzuheben.

Das Wirkelement ist, in einer Ausgestaltung, entgegen der Wirkrichtung zu einem Abschnitt des ersten Verschlussteils federvorgespannt. Wirkt ein Nutzer nicht mehr das Wirkelement ein, wird das Wirkelement somit selbsttätig in eine Ausgangsstellung zurückgestellt, aufgrund der zwischen dem Wirkelement und dem Abschnitt des ersten Verschlussteils wirkenden Federvorspannung.

Ein Verstellteil kann - zusätzlich oder alternativ zu dem Verstellteil an dem ersten Verschlussteil - auch an dem zweiten Verschlussteil angeordnet sein. An dem Verstellteil des zweiten Verschlussteils kann beispielsweise die zweite Magneteinrichtung angeordnet sein, sodass durch Verstellen des Verstellteils die zweite Magneteinrichtung verstellt und dadurch eine auf das zumindest eine Verriegelungselement wirkende Magnetkraft verändert werden kann.

In einer Ausgestaltung weist das erste Verschlussteil ein Wippenelement auf, das um eine Schwenkachse zu dem Körper des ersten Verschlussteils verschwenkbar ist und durch das Verstellteil zum Verstellen des zumindest einen Verriegelungselements bewegbar ist. Das Verstellteil kann hierbei beispielsweise linear an dem Körper des ersten Verschlussteils bewegbar sein, beispielsweise durch Verschieben des Verstellteils relativ zum Körper des ersten Verschlussteils quer zur Schließrichtung. Durch Betätigen des Verstellteils wird das Wippenelement verschwenkt und wirkt somit auf das zumindest eine Verriegelungselement ein, um das Verriegelungselement zu entriegeln und somit außer Eingriff von dem Eingriffsabschnitt des zweiten Verschlussteils zu bringen.

Das Verstellteil kann aber auch gemeinsam mit dem Wippenelement verschwenkbar sein und kann in diesem Fall beispielsweise integral und einstückig mit dem Wippenelement ausgebildet sein.

Die Schwenkachse des Wippenelements kann beispielsweise parallel zur Längserstreckungsachse des Verriegelungselements gerichtet sein. Ist das Verriegelungselement beispielsweise als längserstreckter Stab ausgebildet, so ist das Wippenelement beispielsweise um eine Schwenkachse, die parallel zu dem Stab des Verriegelungselements gerichtet ist, zu dem Körper des ersten Verschlussteils verstellbar.

In einer Ausgestaltung weist das Wippenelement einen Betätigungsabschnitt zum Einwirken auf das zumindest eine Verriegelungselement auf. Das Wippenelement ist hierbei zu dem Körper des ersten Verschlussteils verschwenkbar, um das zumindest eine Verriegelungselement zum Lösen des ersten Verschlussteils und des zweiten Verschlussteils voneinander außer Eingriff von dem zumindest einen Eingriffsabschnitt zu bringen. Mit dem Betätigungsabschnitt wirkt das Wippenelement auf das zumindest eine Verriegelungselement ein, um bei Betätigen des Wippenelements das Verriegelungselement relativ zu dem Eingriffsabschnitt des zweiten Verschlussteils zu bewegen und somit die Verbindung zwischen den Verschlussteilen zu entriegeln.

Das Verstellteil kann manuell zu bewegen sein. So kann beispielsweise ein Nutzer auf das Verstellteil einwirken, um das Verstellteil zu betätigen und dadurch das zumindest eine Verriegelungselement zu entriegeln.

In einer Ausgestaltung ist aber auch denkbar, dass das Verstellteil selbsttätig beispielsweise durch eine Bewegung der Verschlussteile zueinander betätigt wird. So kann das zweite Verschlussteil beispielsweise an dem ersten Verschlussteil linear verschiebbar sein, beispielsweise in einer Eingriffsöffnung, in die das zweite Verschlussteil mit dem Eingriffsabschnitt zum Verbinden mit dem ersten Verschlussteil einsteckbar ist. Die Verschiebebewegung des zweiten Verschlussteils relativ zum ersten Verschlussteil kann quer zur Schließrichtung gerichtet sein, wobei sich durch das Verschieben des zweiten Verschlussteils relativ zum ersten Verschlussteil die magnetische Anziehungskraft zwischen dem zweiten Verschlussteil und dem Verstellteil umdrehen kann, sodass das Verstellteil zum Lösen der Verriegelung betätigt wird.

Eine solche Umkehr der Magnetwirkung kann bei Anordnung von mehreren Magnetpolen an dem Verstellteil dadurch bewirkt werden, dass das zweite Verschlussteil und das Verstellteil mit gleichnamigen Polen einander angenähert werden. Eine Umkehr der Magnetwirkung kann aber auch bewirkt werden, wenn an dem Verstellteil ein (einziges) Magnetelement angeordnet ist, das mit lediglich einem Magnetpol hin zu dem zweiten Verschlussteil weist. Bei einem Verschieben des zweiten Verschlussteils relativ zum Verstellteil kann es zu einem sogenannten Kanteneffekt kommen, bei dem sich die Magnetwirkung von einer Anziehung in eine Abstoßung umgekehrt, wenn ein Magnetelement des zweiten Verschlussteils tangential zu dem Magnetelement des Verstellteils bewegt und somit von dem Magnetelement des Verstellteils abgeschert wird.

Alternativ kann das zweite Verschlussteil auch mechanisch auf das Verstellteil einwirken, um das Verstellteil mechanisch zu betätigen und somit das Minis eine Verlegens Elemente zu entriegeln.

In anderer Ausgestaltung kann das zweite Verschlussteil quer zur Schließrichtung an dem ersten Verschlussteil bewegbar sein, wobei durch Bewegen des zweiten Verschlussteils relativ zum ersten Verschlussteil das zumindest eine Verriegelungselement aus der Schließstellung bewegbar ist. In diesem Fall ist ein Verstellteil nicht unbedingt erforderlich. Das zweite Verschlussteil kann bei einer Verschiebebewegung zum Beispiel mechanisch oder magnetisch auf das zumindest eine Verriegelungselement einwirken, um das Verrieglungselement aus der Schließstellung heraus zu verstellen und die Verschlussvorrichtung somit zu entriegeln. Eine mechanische Wechselwirkung kann beispielsweise dadurch bewirkt werden, dass das zweite Verschlussteil beim Verschieben über eine schräge Ebene mit dem zumindest einen Verriegelungselement wechselwirkt. Eine magnetische Wechselwirkung kann dadurch erfolgen, dass zum Beispiel eine magnetische Anziehungskraft auf das zumindest eine Verrieglungselement in Richtung eines Eingriffs mit dem Eingriffsabschnitt umgekehrt wird in eine magnetische Abstoßung, beispielsweise indem an dem zumindest einen Verriegelungselement unterschiedlich magnetisierte Abschnitte angeordnet sind, beispielsweise mehrere Magnetpole oder auch magnetische und nicht magnetische Abschnitte.

Das erste Verschlussteil kann beispielsweise lediglich ein Verriegelungselement aufweisen. In einer Ausgestaltung weist das erste Verschlussteil jedoch zwei (oder mehr) Verriegelungselemente auf. Sind zwei Verriegelungselemente an dem ersten Verschlussteil vorgesehen, sind die Verriegelungselemente beispielsweise beidseitig einer an dem ersten Verschlussteil geformten Eingriffsöffnung angeordnet und können somit beidseitig mit dem Eingriffselement des zweiten Verschlussteils und daran geformten Eingriffsabschnitten wechselwirken, um eine zweiseitige Verriegelung in der Schließstellung herzustellen.

In einer Ausgestaltung ist das zweite Verschlussteil als starres Element mit einer Basis und einem integral an der Basis geformten, starren Eingriffselement nach Art eines Zapfens zum Eingriff in eine zugeordnete Eingriffsöffnung des ersten Verschlussteils ausgestaltet. An dem Eingriffselement kann, in einer Ausgestaltung, die zweite Magneteinrichtung des zweiten Verschlussteils angeordnet sein, sodass bei Ineingriffbringen des Eingriffselements mit der Eingriffsöffnung das erste Verschlussteil und das zweite Verschlussteil magnetisch anziehend zusammenwirken und selbsttätig in Eingriff miteinander gezogen werden. Ein oder mehrere Eingriffsabschnitte können hierbei an dem Eingriffselement des zweiten Verschlussteils geformt sein, sodass in der Schließstellung der Verschlussvorrichtung ein oder mehrere Verriegelungselemente des ersten Verschlussteils in verriegelndem Eingriff mit dem zweiten Verschlussteil stehen.

In einer anderen Ausgestaltung ist der zumindest eine Eingriffsabschnitt elastisch bewegbar an der Basis angeordnet. In diesem Fall ist der Eingriffsabschnitt nicht starr zu der Basis des zweiten Verschlussteils geformt, sondern elastisch zu der Basis auslenkbar, sodass durch Auslenken des zumindest einen Eingriffsabschnitts die Verriegelung zwischen den Verschlussteilen gelöst werden kann.

Das Verschlussteil weist beispielsweise ein zu der Basis verstellbares Sperrstück auf. In der Schließstellung ist die Position des Eingriffsabschnitts zu der Basis über das Sperrstück gesperrt, sodass die Verriegelung zwischen den Verschlussteilen gesichert ist. Entsprechend ist das Sperrstück in einer Sperrstellung in einer solchen Lage zu dem zumindest einen Eingriffsabschnitt, dass der zumindest eine Eingriffsabschnitt nicht außer Eingriff von dem zumindest einen Verriegelungselement gebracht werden kann. Aus der Sperrstellung heraus ist das Sperrstück verstellbar, um ein elastisches Auslenken des zumindest einen Eingriffsabschnitts zu ermöglichen, sodass durch Verformung des Eingriffsabschnitts die Verriegelung zwischen den Verschlussteilen aufgehoben werden kann.

In einer Ausgestaltung ist die zweite Magneteinrichtung, die dem zweiten Verschlussteil zugeordnet ist, an dem Sperrstück angeordnet und somit gemeinsam mit dem Sperrstück bewegbar. Bei Betätigen des Sperrstücks wird somit auch die magnetische Wechselwirkung zwischen den Verschlussteilen beeinflusst, insbesondere für ein Abschwächen der magnetischen Anziehungskräfte zwischen den Verschlussteilen, sodass dadurch das Entnehmen der Verschlussteile weiter vereinfacht wird.

Durch das Vorsehen eines elastischen Eingriffsabschnitts und eines betätigbaren Sperrstücks kann die Verriegelung - zusätzlich oder alternativ zum Verstellen des zumindest einen Verriegelungselements - aufgehoben werden. Es wird somit eine weitere Möglichkeit zum Lösen der Verriegelung zwischen den Verschlussteilen und somit zum Öffnen der Verschlussvorrichtung geschaffen.

In einer Ausgestaltung weist das erste Verschlussteil zumindest einen ersten elektrischen Anschluss auf, der in der Schließstellung der Verschlussvorrichtung mit einem zweiten elektrischen Anschluss elektrisch verbunden ist, wobei die elektrische Verbindung durch Trennen der Verschlussteile voneinander aufgehoben werden kann. Der zweite elektrische Anschluss kann hierbei ebenfalls an dem ersten Verschlussteil oder auch an dem zweiten Verschlussteil vorgesehen sein. Durch Verbinden der Verschlussteile kann somit eine elektrische Kontaktierung zwischen elektrischen Anschlüssen hergestellt werden. Dies kann beispielsweise zum Bereitstellen eines elektrischen Anschlusses für ein Elektronikgerät, beispielsweise ein Mobiltelefon, Verwendung finden, beispielsweise um das Elektronikgerät mit einer Ladeeinrichtung zu verbinden.

In einer Ausgestaltung ist der erste elektrische Anschluss elektrisch mit dem zumindest einen Verriegelungselement verbunden. Der zweite elektrische Anschluss kann hierbei beispielsweise mit einem im Bereich des Eingriffsabschnitts an dem zweiten Verschlussteil angeordneten elektrischen Kontaktelement verbunden sein. In der Schließstellung ist das zumindest eine Verriegelungselement und dadurch der erste elektrische Anschluss in Kontakt mit dem elektrischen Kontaktelement an dem Eingriffsabschnitt des zweiten Verschlussteils, sodass dadurch eine elektrische Verbindung zwischen den elektrischen Anschlüssen hergestellt ist. Durch Trennen der Verschlussteile kann diese elektrische Verbindung aufgehoben werden, sodass der elektrische Kontakt lösbar ist. In dieser Ausgestaltung wird die elektrische Verbindung nur in der Eingriffsstellung des Verriegelungselements hergestellt. Sollte sich der Verschluss in einer Fehlstellung befinden, beispielsweise weil Schmutz zwischen den Verschlussteilen eine vollständige Annäherung nicht zulässt, würde die elektrische Verbindung nicht hergestellt sein und somit die Fehlstellung elektrisch detektierbar sein.

Ähnliches gilt für eine Ausgestaltung, in der beide elektrischen Anschlüsse im ersten Verschlussteil liegen und in Schließstellung mittels des Verriegelungselements, das zumindest abschnittsweise aus einem leitfähigen Material besteht, elektrisch verbunden werden.

In einer Ausgestaltung weist die Verschlussvorrichtung zumindest zwei zweite Verschlussteile auf, die jeweils zumindest einen Eingriffsabschnitt und eine zweite Magneteinrichtung aufweisen und gemeinsam an das erste Verschlussteil angesetzt werden können. Die Verschlussvorrichtung kann somit eine Drei-Punkt-Verbindung (zwischen einem ersten Verschlussteil und zwei zweiten Verschlussteilen) oder auch eine Mehr-Punkt-Verbindung (zwischen einem ersten Verschlussteil und mehr als zwei zweiten Verschlussteilen) schaffen, beispielsweise um Gurte miteinander zu verbinden. Eine solche Verschlussvorrichtung kann beispielsweise als Gurtsystem an einem Sitz, insbesondere einem Fahrzeugsitz, beispielsweise einem Kindersitz, oder auch an einem Kinderwagen zum Einsatz kommen.

Hierbei können in einer vorteilhaften Ausgestaltung die Magneteinrichtungen im ersten Verschlussteil und in den mehreren zweiten Verschlussteilen und das Verriegelungselement (hinsichtlich seiner Anordnung und Bewegungsfreiheit) so aufeinander abgestimmt sein, dass beim Ansetzen eines zweiten Verschlussteils an das erste Verschlussteil das Verriegelungselement eine stärkere magnetische Anziehung zu der Magneteinrichtung des ersten Verschlussteils erfährt, also noch nicht in die Eingriffsstellung gezogen wird. Wenn jedoch das zweite - oder bei einer Vielzahl von zweiten Verschlussteilen das letzte - der zweiten Verschlussteile eingesetzt wird, überwiegt die Magnetkraft der zweiten Verschlussteile auf das Verriegelungselement, sodass das Verriegelungselement in Eingriff gezogen wird. Dies ist insbesondere bei Kinderwagenverschlüssen vorteilhaft, bei denen in einigen Ländern von nationalen Normen gefordert ist, dass der Verschluss nicht einrasten darf, solange nicht alle Teile des Mehrpunktverschlusses verriegelt sind.

Bei einer solchen Verschlussvorrichtung ist eine Eingriffsöffnung an dem ersten Verschlussteil so beschaffen, dass mehrere zweite Verschlussteile gemeinsam in die Eingriffsöffnung des ersten Verschlussteils eingesetzt werden können. Die Verschlussvorrichtung kann hierbei so gestaltet sein, dass die mehreren zweiten Verschlussteile nur gemeinsam in Verbindung mit dem ersten Verschlussteil gebracht werden können. Denkbar und möglich ist aber auch, dass ein jedes zweites Verschlussteil einzeln mit dem ersten Verschlussteil verbunden werden kann und somit eine Verbindung zwischen den Verschlussteilen auch durch selektive Auswahl aus den zweiten Verschlussteilen hergestellt werden kann.

Es kann auch ein zweites Verschlussteil eingesetzt und magnetisch positioniert, jedoch noch nicht mechanisch verrastet sein, solange bis ein weiteres zweites Verschlussteil (oder sämtliche der zweiten Verschlussteile) eingesetzt sind.

In einer Ausgestaltung weist eine Baugruppe ein Elektronikgerät, zum Beispiel ausgebildet durch ein Mobiltelefon, einen Tablet-Computer oder ein anderes Kommunikationsendgerät, und eine Verschlussvorrichtung der vorangehend beschriebenen Art auf. Eines der Verschlussteile der Verschlussvorrichtung ist hierbei mit dem Elektronikgerät verbunden, während das andere Verschlussteil an einer übergeordneten Baugruppe, an der das Elektronikgerät befestigt werden soll, angeordnet ist. Auf diese Weise kann ein Elektronikgerät beispielsweise in oder an einem Fahrzeug, beispielsweise einem Kraftfahrzeug oder einem Fahrrad, befestigt werden. Beispielsweise kann ein Mobiltelefon über eine solche Verschlussvorrichtung an einem Armaturenbrett eines Fahrzeugs oder an einer Lenkerstange oder einem Rahmen eines Fahrrads festgelegt werden.

Ein Verschlusssystem weist eine Mehrzahl von Verschlussvorrichtungen nach der vorangehend beschriebenen Art auf. Im Rahmen eines solchen Verschlusssystems können die ersten Verschlussteile der Verschlussvorrichtung in einer ersten Baugruppe miteinander verbunden sein, während die zweiten Verschlussteile der Verschlussvorrichtung in einer zweiten Baugruppe miteinander verbunden sind. Die erste Baugruppe und die zweite Baugruppe können aneinander angesetzt werden, indem die Verschlussvorrichtungen jeweils geschlossen werden, sodass die erste Baugruppe und die zweite Baugruppe über die mehreren Verschlussvorrichtungen aneinandergehalten sind.

Die ersten Verschlussteile der Verschlussvorrichtungen können hierbei, in einer Ausgestaltung, jeweils ein Verstellteil zum Verstellen des zumindest einen Verrieglungselements einer jeden Verschlussvorrichtung aufweisen. Das Verstellteil einer jeden Verschlussvorrichtung ist betätigbar, um das zumindest eine Verriegelungselement des jeweils zugeordneten ersten Verschlussteils zum Lösen des ersten Verschlussteils und eines zugeordneten zweiten Verschlussteils voneinander außer Eingriff von dem zumindest einen Eingriffsabschnitt des zugeordneten zweiten Verschlussteils zu bringen. Die Verstellteile der ersten Verschlussteile der Verschlussvorrichtungen sind vorzugsweise miteinander wirkverbunden, sodass die Verstellteile gemeinsam betätigt werden können.

Die Verschlussvorrichtungen können im Rahmen eines solchen Verschlusssystems beispielsweise linear aneinander angereiht sein. Die ersten Verschlussteile und die zweiten Verschlussteile können hierbei jeweils starr über Verbindungsabschnitte miteinander verbunden sein. Ebenso können die Verstellteile der Verschlussvorrichtungen starr miteinander verbunden sein, sodass die Verstellteile gemeinsam zum Betätigen der Verriegelungselemente der Verschlussvorrichtungen verstellt werden können.

Die Verstellteile können hierbei gleichzeitig zu betätigen sein. Die Wirkverbindung zwischen den Verstellteilen kann aber auch derart sein, dass die Verstellteile in zeitlich gestaffelter Weise eines nach dem anderen verstellt wird und die Verschlussvorrichtungen somit nicht gleichzeitig, sondern in zeitlich gestaffelter Weise geöffnet werden.

Anzumerken ist hierzu, dass die Verstellteile nicht notwendigerweise miteinander verbunden sein müssen. Denkbar ist auch, dass die Verstellteile einzelnen und unabhängig voneinander zu betätigen sind, sodass die Verschlussvorrichtungen des Verschlusssystems einzeln und unabhängig voneinander geöffnet werden können.

Der der Erfindung zugrunde liegende Gedanke soll nachfolgend anhand der in den Figuren dargestellten Ausführungsbeispiele näher erläutert werden. Es zeigen:
- Fig. 1A: eine Ansicht eines ersten Ausführungsbeispiels einer Verschlussvorrichtung mit einem ersten Verschlussteil und einem zweiten Verschlussteil, in einer geöffneten Stellung;
- Fig. 1B: eine Seitenansicht der Anordnung gemäß Fig. 1A;
- Fig. 1C: eine Schnittansicht entlang der Linie A-A gemäß Fig. 1B;
- Fig. 1D: eine Schnittansicht entlang der Linie B-B gemäß Fig. 1B;
- Fig. 2A-D: Ansichten der Verschlussvorrichtung in einer Schließstellung;
- Fig. 3A-D: Ansichten der Verschlussvorrichtung bei Belastung der Verschlussteile zueinander;
- Fig. 4A-D: Ansichten der Verschlussvorrichtung beim Entriegeln;
- Fig. 5A-D: Ansichten der Verschlussvorrichtung nach dem Öffnen;
- Fig. 6: eine Ansicht eines anderen Ausführungsbeispiels einer Verschlussvorrichtung;
- Fig. 7: eine Seitenansicht der Anordnung gemäß Fig. 6;
- Fig. 8A-C: Ansichten der Verschlussvorrichtung gemäß Fig. 6 und 7, geschnitten entlang der Linie O-O gemäß Fig. 7, in einer ersten Ausgestaltung;
- Fig. 9A-D: Ansichten der Verschlussvorrichtung in einer modifizierten Ausgestaltung, wiederum geschnitten entlang der Linie O-O gemäß Fig. 7;
- Fig. 10-14: Ansichten von Ausführungsbeispielen von Verschlussvorrichtungen mit unterschiedlichen an den Verschlussteilen angeordneten Magneteinrichtungen;
- Fig. 15A: eine Explosionsansicht eines anderen Ausführungsbeispiels einer Verschlussvorrichtung;
- Fig. 15B: eine montierte Ansicht der Verschlussvorrichtung gemäß Fig. 15A;
- Fig. 16A: eine Explosionsansicht eines wiederum anderen Ausführungsbeispiels einer Verschlussvorrichtung;
- Fig. 16B: eine montierte Ansicht der Verschlussvorrichtung;
- Fig. 17A: eine Explosionsansicht eines wiederum anderen Ausführungsbeispiels einer Verschlussvorrichtung;
- Fig. 17B: eine montierte Ansicht der Verschlussvorrichtung;
- Fig. 18A: eine Explosionsansicht eines wiederum anderen Ausführungsbeispiels einer Verschlussvorrichtung;
- Fig. 18B: eine montierte Ansicht der Verschlussvorrichtung;
- Fig. 19A-F: Ansichten einer Verschlussvorrichtung mit einem ersten Verschlussteil und zwei daran anzusetzenden zweiten Verschlussteilen zum Bereitstellen einer Drei-Punkt-Verbindung;
- Fig. 20A-E: andere Ansichten der Verschlussvorrichtung gemäß Fig. 19A-F;
- Fig. 21: eine Ansicht eines anderen Ausführungsbeispiels einer Verschlussvorrichtung;
- Fig. 22: eine Seitenansicht der Verschlussvorrichtung gemäß Fig. 21;
- Fig. 23A-C: Schnittansicht entlang der Linie A-A gemäß Fig. 22;
- Fig. 23D: eine ausschnittsweise vergrößerte Ansicht der Schnittansicht gemäß Fig. 23C;
- Fig. 24: eine Ansicht eines anderen Ausführungsbeispiels einer Verschlussvorrichtung;
- Fig. 25: eine Seitenansicht der Verschlussvorrichtung gemäß Fig. 24;
- Fig. 26A-C: Schnittansicht entlang der Linie K-K gemäß Fig. 25;
- Fig. 27: eine Ansicht eines anderen Ausführungsbeispiels einer Verschlussvorrichtung;
- Fig. 28: eine Seitenansicht der Verschlussvorrichtung gemäß Fig. 27;
- Fig. 29A-C: Schnittansichten entlang der Linie M-M gemäß Fig. 28;
- Fig. 30A-C: Ansichten eines wiederum anderen Ausführungsbeispiels einer Verschlussvorrichtung, in einer geöffneten Stellung;
- Fig. 31A-C: Ansichten der Verschlussvorrichtung in einer Schließstellung;
- Fig. 32A-C: Ansichten der Verschlussvorrichtung beim Entriegeln;
- Fig. 33A-C: Ansichten der Verschlussvorrichtung nach dem Öffnen;
- Fig. 34A-E: Ansichten eines wiederum anderen Ausführungsbeispiels einer Verschlussvorrichtung, in einer geöffneten Stellung;
- Fig. 35A-E: Ansichten der Verschlussvorrichtung in einer Schließstellung;
- Fig. 36A-E: Ansichten der Verschlussvorrichtung beim Entriegeln;
- Fig. 37A-E: Ansichten der Verschlussvorrichtung nach dem Öffnen;
- Fig. 38A-D: Ansichten eines wiederum anderen Ausführungsbeispiels einer Verschlussvorrichtung, in einer geöffneten Stellung;
- Fig. 39A-D: Ansichten der Verschlussvorrichtung in einer Schließstellung;
- Fig. 40A-D: Ansichten der Verschlussvorrichtung beim Entriegeln;
- Fig. 41A-D: Ansichten der Verschlussvorrichtung nach dem Öffnen;
- Fig. 42: eine Explosionsansicht eines wiederum anderen Ausführungsbeispiels einer Verschlussvorrichtung;
- Fig. 43A-C: Ansichten der Verschlussvorrichtung in einer geöffneten Stellung;
- Fig. 44A-C: Ansichten der Verschlussvorrichtung in einer Schließstellung;
- Fig. 45A-C: Ansichten der Verschlussvorrichtung beim Entriegeln;
- Fig. 46A-C: Ansichten der Verschlussvorrichtung nach dem Öffnen;
- Fig. 47A-E: Ansichten eines Ausführungsbeispiels eines Verschlusssystems mit mehreren Verschlussvorrichtungen, in einer geöffneten Stellung;
- Fig. 48AE: Ansichten des Verschlusssystems in einer Schließstellung;
- Fig. 49A-E: Ansichten des Verschlusssystems beim Entriegeln;
- Fig. 50A-E: Ansichten des Verschlusssystems nach dem Öffnen;
- Fig. 51A-E: Ansichten eines anderen Ausführungsbeispiels eines Verschlusssystems mit mehreren Verschlussvorrichtungen, in einer geöffneten Stellung;
- Fig. 52A-E: Ansichten des Verschlusssystems in einer Schließstellung;
- Fig. 53A-E: Ansichten des Verschlusssystems beim Entriegeln der Verschlussvorrichtungen;
- Fig. 54A-E: Ansichten der Verschlussvorrichtung nach dem Öffnen der Verschlussvorrichtungen;
- Fig. 55A-D: Ansichten eines Ausführungsbeispiels einer Verschlussvorrichtung mit einem ersten Verschlussteil und mehreren zweiten Verschlussteilen, in einer geöffneten Stellung;
- Fig. 56A-D: Ansichten der Verschlussvorrichtung, in einem Zustand, in dem ein zweites Verschlussteil an das erste Verschlussteil angesetzt ist;
- Fig. 57A-D: Ansichten der Verschlussvorrichtung, in einem Zustand, in dem zwei zweite Verschlussteile an das erste Verschlussteil angesetzt sind;
- Fig. 58A-D: Ansichten der Verschlussvorrichtung, in einem Zustand, in dem drei zweite Verschlussteile an das erste Verschlussteil angesetzt sind;
- Fig. 59A-D: Ansichten der Verschlussvorrichtung nach dem Öffnen;
- Fig. 60A, 60B: Ansichten eines anderen Ausführungsbeispiels einer Verschlussvorrichtung, mit einem am zweiten Verschlussteil angeordneten Sperrstück, in einer geöffneten Stellung;
- Fig. 61A, 61B: Ansichten der Verschlussvorrichtung, beim Schließen;
- Fig. 62A, 62B: Ansichten der Verschlussvorrichtung, in einer Schließstellung;
- Fig. 63A, 63B: Ansichten der Verschlussvorrichtung, beim Betätigen des Sperrstücks;
- Fig. 64A, 64B: Ansichten der Verschlussvorrichtung, beim Öffnen;
- Fig. 65A, 65B: Ansichten eines wiederum anderen Ausführungsbeispiels einer Verschlussvorrichtung, in einer geöffneten Stellung;
- Fig. 66A, 66B: Ansichten der Verschlussvorrichtung, beim Schließen;
- Fig. 67A, 67B: Ansichten der Verschlussvorrichtung, in einer Schließstellung;
- Fig. 68A, 68B: Ansichten der Verschlussvorrichtung, beim Öffnen;
- Fig. 69A, 69B: Ansichten der Verschlussvorrichtung, beim weiteren Öffnen;
- Fig. 70A, 70B: Ansichten eines Ausführungsbeispiels einer Verschlussvorrichtung, mit elektrischen Anschlüssen, in einer geöffneten Stellung der Verschlussvorrichtung;
- Fig. 71A, 71B: Ansichten der Verschlussvorrichtung gemäß Fig. 70A, 70B, in einer Schließstellung;
- Fig. 72A, 72B: Ansichten einer Verschlussvorrichtung mit elektrischen Anschlüssen, in einer geöffneten Stellung;
- Fig. 73A, 73B: Ansichten der Verschlussvorrichtung gemäß Fig. 72A, 72B, in einer Schließstellung;
- Fig. 74A,74B: Ansichten eines anderen Ausführungsbeispiels einer Verschlussvorrichtung mit elektrischen Anschlüssen, in einer geöffneten Stellung;
- Fig. 75A, 75B: Ansichten der Verschlussvorrichtung gemäß Fig. 74A, 74B, in einer Schließstellung;
- Fig. 76A, 76B: Ansichten eines wiederum anderen Ausführungsbeispiels einer Verschlussvorrichtung, in einer geöffneten Stellung;
- Fig. 77A, 77B: Ansichten der Verschlussvorrichtung, beim Schließen;
- Fig. 78A, 78B: Ansichten der Verschlussvorrichtung, beim weiteren Schließen;
- Fig. 79A, 79B: Ansichten der Verschlussvorrichtung, in einer Schließstellung;
- Fig. 80A, 80B: Ansichten der Verschlussvorrichtung, beim Entriegeln;
- Fig. 81A, 81B: Ansichten der Verschlussvorrichtung, nach dem Öffnen;
- Fig. 82A, 82B: Ansichten eines wiederum anderen Ausführungsbeispiels einer Verschlussvorrichtung, in einer Schließstellung;
- Fig. 83A, 83B: Ansichten der Verschlussvorrichtung, beim Entriegeln;
- Fig. 84A, 84B: Ansichten der Verschlussvorrichtung, nach dem Öffnen;
- Fig. 85A: eine schematische Ansicht eines weiteren Ausführungsbeispiels einer Verschlussvorrichtung, in einer Schließstellung;
- Fig. 85B: eine Ansicht der Verschlussvorrichtung in einer entriegelten Stellung;
- Fig. 86: eine Ansicht eines wiederum anderen Ausführungsbeispiels einer Verschlussvorrichtung;
- Fig. 87: eine Explosionsansicht eines anderen Ausführungsbeispiels einer Verschlussvorrichtung;
- Fig. 88: eine andere Explosionsansicht der Verschlussvorrichtung;
- Fig. 89A: eine stirnseitige Seitenansicht der Verschlussvorrichtung, in einer geöffneten Stellung;
- Fig. 89B: eine Schnittansicht entlang der Linie A-A gemäß Fig. 89A;
- Fig. 89C: eine Ansicht der Längsseite der Verschlussvorrichtung, in der geöffneten Stellung;
- Fig. 89D: eine Schnittansicht entlang der Linie C-C gemäß Fig. 89C;
- Fig. 89E: eine Schnittansicht entlang der Linie B-B gemäß Fig. 89C;
- Fig. 90A: eine stirnseitige Seitenansicht der Verschlussvorrichtung, in einer geschlossenen Stellung;
- Fig. 90B: eine Schnittansicht entlang der Linie A-A gemäß Fig. 90A;
- Fig. 90C: eine Ansicht der Längsseite der Verschlussvorrichtung, in der geschlossenen Stellung;
- Fig. 90D: eine Schnittansicht entlang der Linie C-C gemäß Fig. 90C;
- Fig. 90E: eine Schnittansicht entlang der Linie B-B gemäß Fig. 90C;
- Fig. 91A: eine stirnseitige Seitenansicht der Verschlussvorrichtung, bei einer Öffnungsbewegung bei unbelasteter Verschlussvorrichtung;
- Fig. 91B: eine Schnittansicht entlang der Linie A-A gemäß Fig. 91A;
- Fig. 91C: eine Ansicht der Längsseite der Verschlussvorrichtung, bei der Öffnungsbewegung;
- Fig. 91D: eine Schnittansicht entlang der Linie C-C gemäß Fig. 91C;
- Fig. 91E: eine Schnittansicht entlang der Linie B-B gemäß Fig. 91C;
- Fig. 92A: eine stirnseitige Seitenansicht der Verschlussvorrichtung, bei einer Öffnungsbewegung bei belasteter Verschlussvorrichtung;
- Fig. 92B: eine Schnittansicht entlang der Linie A-A gemäß Fig. 92A;
- Fig. 92C: eine Ansicht der Längsseite der Verschlussvorrichtung, bei der Öffnungsbewegung;
- Fig. 92D: eine Schnittansicht entlang der Linie C-C gemäß Fig. 92C;
- Fig. 92E: eine Schnittansicht entlang der Linie B-B gemäß Fig. 92C;
- Fig. 93A: eine stirnseitige Seitenansicht der Verschlussvorrichtung, in einer geöffneten Stellung;
- Fig. 93B: eine Schnittansicht entlang der Linie A-A gemäß Fig. 93A;
- Fig. 93C: eine Ansicht der Längsseite der Verschlussvorrichtung, in der geöffneten Stellung;
- Fig. 93D: eine Schnittansicht entlang der Linie C-C gemäß Fig. 93C;
- Fig. 93E: eine Schnittansicht entlang der Linie B-B gemäß Fig. 93C;
- Fig. 94A: eine Explosionsansicht eines anderen Ausführungsbeispiels einer Verschlussvorrichtung;
- Fig. 94B: eine andere Explosionsansicht der Verschlussvorrichtung;
- Fig. 95A: eine Ansicht der Verschlussvorrichtung, in einer geschlossenen Stellung;
- Fig. 95B: eine Ansicht der Längsseite der Verschlussvorrichtung, in der geschlossenen Stellung;
- Fig. 95C: eine Schnittansicht entlang der Linie A-A gemäß Fig. 95B;
- Fig. 95D: eine stirnseitige Seitenansicht der Verschlussvorrichtung, in der geschlossenen Stellung;
- Fig. 96A: eine Ansicht der Verschlussvorrichtung, bei einer Öffnungsbewegung eines Verstellteils;
- Fig. 96B: eine Ansicht der Längsseite der Verschlussvorrichtung;
- Fig. 96C: eine Schnittansicht entlang der Linie A-A gemäß Fig. 96B;
- Fig. 96D: eine stirnseitige Seitenansicht der Verschlussvorrichtung;
- Fig. 97A: eine Ansicht der Verschlussvorrichtung, beim Öffnen;
- Fig. 97B: eine Ansicht der Längsseite der Verschlussvorrichtung;
- Fig. 97C: eine Schnittansicht entlang der Linie A-A gemäß Fig. 97B;
- Fig. 97D: eine stirnseitige Seitenansicht der Verschlussvorrichtung;
- Fig. 98A: eine Ansicht der Verschlussvorrichtung, beim Zurückstellen des Verstellteils;
- Fig. 98B: eine Ansicht der Längsseite der Verschlussvorrichtung;
- Fig. 98C: eine Schnittansicht entlang der Linie A-A gemäß Fig. 98B;
- Fig. 98D: eine stirnseitige Seitenansicht der Verschlussvorrichtung;
- Fig. 99A: eine Ansicht der Verschlussvorrichtung, beim erneuten Schließen;
- Fig. 99B: eine Ansicht der Längsseite der Verschlussvorrichtung;
- Fig. 99C: eine Schnittansicht entlang der Linie A-A gemäß Fig. 99B;
- Fig. 99D: eine stirnseitige Seitenansicht der Verschlussvorrichtung;
- Fig. 100A: eine Explosionsansicht eines wiederum anderen Ausführungsbeispiels einer Verschlussvorrichtung;
- Fig. 100B: eine andere Explosionsansicht der Verschlussvorrichtung;
- Fig. 101A: eine Ansicht der Verschlussvorrichtung, in einer geschlossenen Stellung;
- Fig. 101B: eine Ansicht der Längsseite der Verschlussvorrichtung, in der geschlossenen Stellung;
- Fig. 101C: eine Schnittansicht entlang der Linie A-A gemäß Fig. 101B;
- Fig. 101D: eine stirnseitige Seitenansicht der Verschlussvorrichtung, in der geschlossenen Stellung;
- Fig. 102A: eine Ansicht der Verschlussvorrichtung, bei einer Öffnungsbewegung eines Verstellteils;
- Fig. 102B: eine Ansicht der Längsseite der Verschlussvorrichtung;
- Fig. 102C: eine Schnittansicht entlang der Linie A-A gemäß Fig. 102B;
- Fig. 102D: eine stirnseitige Seitenansicht der Verschlussvorrichtung;
- Fig. 103A: eine Ansicht der Verschlussvorrichtung, beim Öffnen;
- Fig. 103B: eine Ansicht der Längsseite der Verschlussvorrichtung;
- Fig. 103C: eine Schnittansicht entlang der Linie A-A gemäß Fig. 103B;
- Fig. 103D: eine stirnseitige Seitenansicht der Verschlussvorrichtung;
- Fig. 104A: eine Ansicht der Verschlussvorrichtung, beim Zurückstellen des Verstellteils;
- Fig. 104B: eine Ansicht der Längsseite der Verschlussvorrichtung;
- Fig. 104C: eine Schnittansicht entlang der Linie A-A gemäß Fig. 104B;
- Fig. 104D: eine stirnseitige Seitenansicht der Verschlussvorrichtung;
- Fig. 105A: eine Ansicht der Verschlussvorrichtung, beim erneuten Schließen;
- Fig. 105B: eine Ansicht der Längsseite der Verschlussvorrichtung;
- Fig. 105C: eine Schnittansicht entlang der Linie A-A gemäß Fig. 105B;
- Fig. 105D: eine stirnseitige Seitenansicht der Verschlussvorrichtung;
- Fig. 106: eine schematische Ansicht eines Ausführungsbeispiels einer Verschlussvorrichtung, bei der eine Schrägfläche an einem ersten Verschlussteil unterschiedliche Abschnitte zum Zusammenwirken mit einem Verrieglungselement zum Verriegeln des ersten Verschlussteils mit einem zweiten Verschlussteil aufweist;
- Fig. 107A: eine stirnseitige Ansicht der Verschlussteile;
- Fig. 107B: eine Schnittansicht durch die Verschlussteile;
- Fig. 108A: eine stirnseitige Ansicht der Verschlussteile;
- Fig. 108B: eine Schnittansicht durch die Verschlussteile;
- Fig. 109A: eine stirnseitige Ansicht der Verschlussteile; und
- Fig. 109B: eine Schnittansicht durch die Verschlussteile.

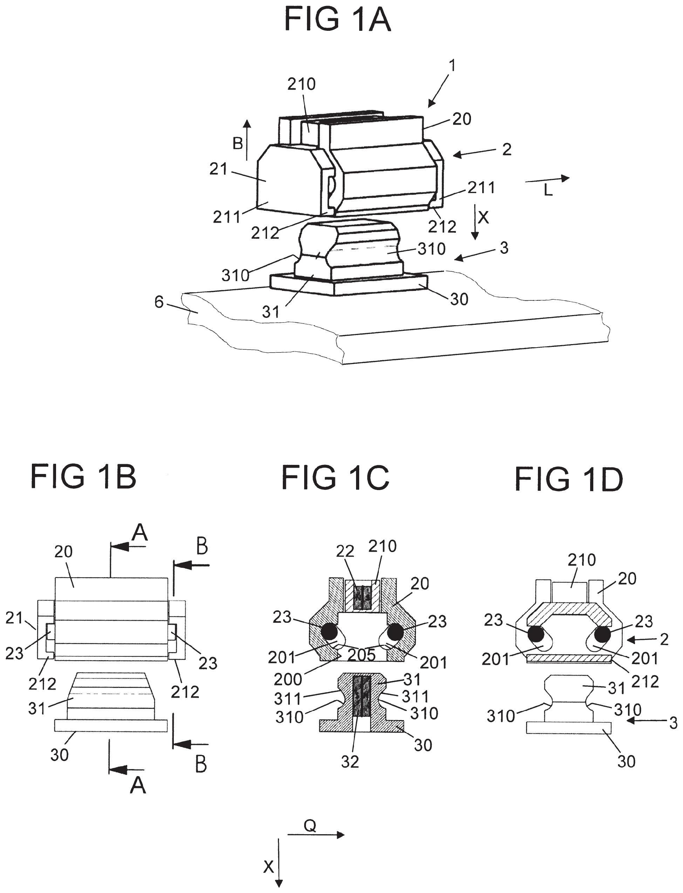

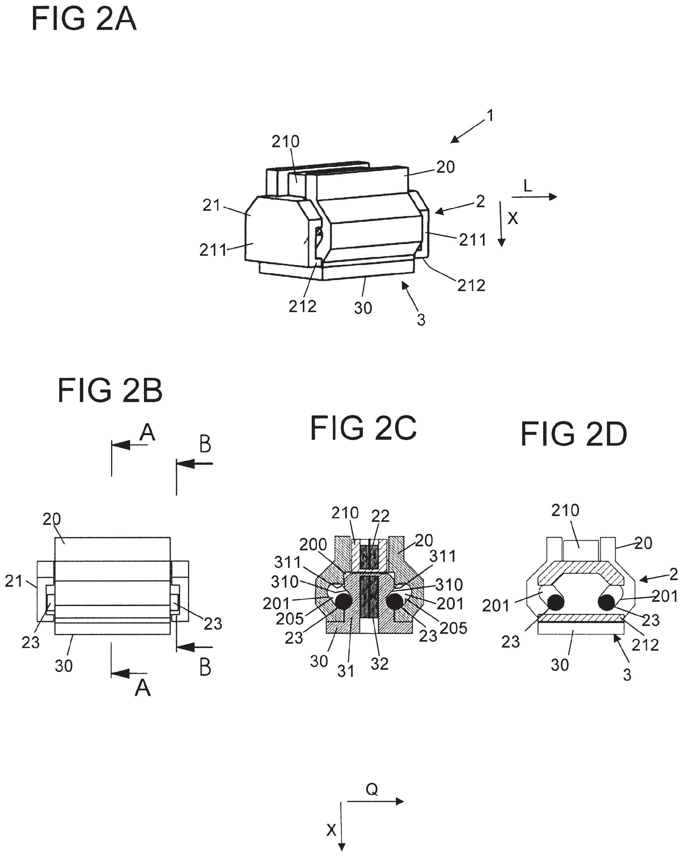

Fig. 1A-D bis Fig. 5A-D zeigen ein erstes Ausführungsbeispiel einer Verschlussvorrichtung 1, die ein erstes Verschlussteil 2 und ein zweites Verschlussteil 3 aufweist. Die Verschlussteile 2, 3 können entlang einer Schließrichtung X aneinander angesetzt werden und sind in einer Schließstellung (Fig. 2A-D) fest miteinander verbunden und entlang der Schließrichtung X zueinander verriegelt.

In Fig. 1A-D bis Fig. 5A-D zeigt die mit "A" bezeichnete Figur jeweils eine perspektivische Ansicht, die mit "B" bezeichnete Figur eine Seitenansicht, die mit "C" bezeichnete Figur eine Schnittansicht entlang der Linie A-A gemäß der mit "B" bezeichneten Figur und die mit "D" bezeichnete Figur eine Schnittansicht entlang der Linie B-B gemäß der mit "B" bezeichneten Figur.

Bei dem dargestellten Ausführungsbeispiel weist das erste Verschlussteil 2 einen Körper 20 und ein entlang einer Betätigungsrichtung B verstellbar an dem Körper 20 angeordnetes Verstellteil 21 auf. In dem Körper 20 ist eine Eingriffsöffnung 200 geformt, in die ein an einer Basis 30 geformtes Eingriffselement 31 nach Art eines Zapfens des zweiten Verschlussteils 3 entlang der Schließrichtung X eingesteckt werden kann, um die Verschlussteile 2, 3 miteinander zu verbinden.

In dem Körper 20 des ersten Verschlussteils 2 sind zwei Aufnahmeöffnungen 201 geformt, in denen jeweils ein Verriegelungselement 23 einliegt. Die Aufnahmeöffnungen 201 sind an einander gegenüberliegenden Seiten der Eingriffsöffnung 200 geformt, sodass die Verriegelungselemente 23 beidseits der Eingriffsöffnung 200 angeordnet sind, wie dies beispielsweise aus Fig. 1C ersichtlich ist.

Die Verriegelungselemente 23 sind jeweils bolzenförmig als entlang einer Längsrichtung L erstreckte zylindrische Stifte ausgebildet. Die Verriegelungselemente 23 sind magnetisch ausgebildet, indem sie ganz oder teilweise aus einem ferromagnetischen Material gefertigt sind oder einen oder mehrere Permanentmagnete aufweisen.

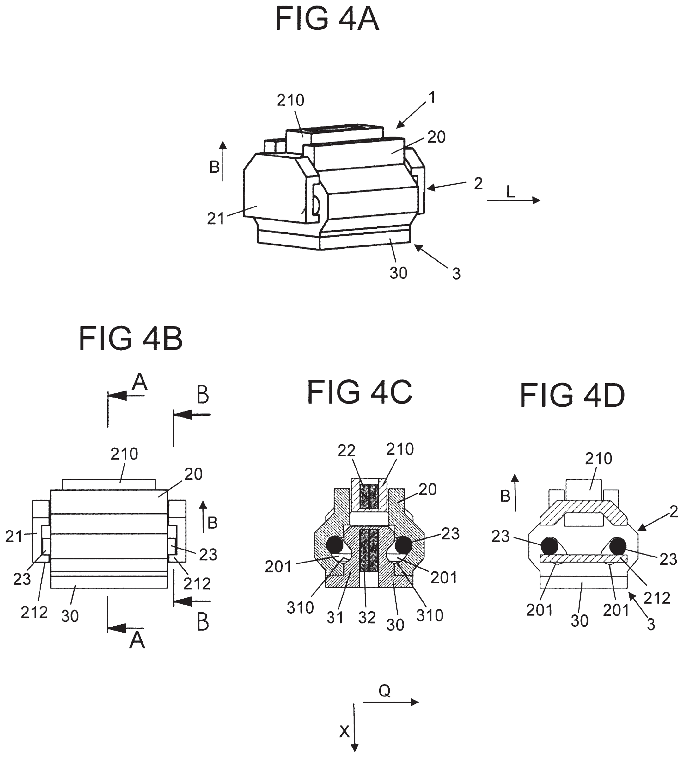

Die Verriegelungselemente 23 sind jeweils in einer zugeordneten Aufnahmeöffnung 201 des Körpers 20 geführt. Die Aufnahmeöffnungen 201 erstrecken sich entlang der Längsrichtung L durch den Körper 20 hindurch und sind in einer Ebene, die durch die Schließrichtung X und eine quer zur Schließrichtung X und quer zur Längsrichtung L gerichtete Querrichtung Q aufgespannt ist und in der sich die Eingriffsabschnitte 310 in gekrümmter Weise erstrecken, nach Art von Langlöchern ausgebildet und dabei schräg zur Schließrichtung X und zur Querrichtung Q erstreckt, wie dies beispielsweise aus Fig. 1C ersichtlich ist. Die bolzenförmigen Verriegelungselemente 23 können somit in der durch die Schließrichtung X und die Querrichtung Q aufgespannten Ebene an dem Körper 20 verstellt werden derart, dass die Verriegelungselemente 23 in einer Verriegelungsstellung (Fig. 2C) nach innen in den Bereich der Eingriffsöffnung 200 vorstehen und in einer entriegelten Stellung (Fig. 4C) aus dem Bereich der Eingriffsöffnung 200 zurückgezogen sind.

Das Verstellteil 21 des ersten Verschlussteils 2 weist einen Zwischenabschnitt 210 auf, mit dem das Verstellteil 21 entlang der Betätigungsrichtung B an dem Körper 20 des ersten Verschlussteils 2 geführt ist. Beidseits des Zwischenabschnitts 210, entlang der Längsrichtung L zueinander beabstandet, weist das Verstellteil 21 jeweils einen Flankenabschnitt 211 auf, der sich über von dem Körper 20 entlang der Längsrichtung L vorstehende Enden der Verriegelungselemente 23 hinweg erstreckt und die Verriegelungselemente 23 mit einem ein Betätigungselement ausbildenden Randabschnitt 212 umgreift, wie dies zum Beispiel aus Fig. 1B und 4B ersichtlich ist.

An dem Zwischenabschnitt 210 des Verstellteils 21 ist eine Magneteinrichtung 22 in Form eines Permanentmagneten mit Polen N, S angeordnet.

An dem Eingriffselement 31 des zweiten Verschlussteils 3 ist beidseitig je ein Eingriffsabschnitt 310 in Form einer nach innen weisenden Aussparung geformt. An dem Eingriffselement 31 ist zudem eine Magneteinrichtung 32 in Form eines Permanentmagneten mit Polen S, N angeordnet, die magnetisch anziehend mit der Magneteinrichtung 22 am Verstellteil 21 des ersten Verschlussteils 2 zusammenwirkt und dadurch ein Schließen der Verschlussvorrichtung 1 magnetisch unterstützt.

Fig. 1A-D zeigt die Verschlussvorrichtung 1 in einer geöffneten Stellung vor Ansetzen der Verschlussteile 2, 3 aneinander.

Zum Schließen der Verschlussrichtung 1 werden die Verschlussteile 2, 3 entlang der Schließrichtung X derart aneinander angesetzt, dass das Eingriffselement 31 in Eingriff mit der Eingriffsöffnung 200 gelangt. Das Eingriffselement 31 drängt beim Einführen in die Eingriffsöffnung 200 hierbei die Verriegelungselemente 23 nach außen und somit in den Aufnahmeöffnungen 201 beiseite, sodass die Verschlussteile 2, 3 in die in Fig. 2A-D dargestellte Schließstellung gelangen.

Die Magneteinrichtung 32 des zweiten Verschlussteils 3 wirkt magnetisch anziehend mit dem Verriegelungselement 23 zusammen. Dies bewirkt, dass in der Schließstellung die Verriegelungselemente 23 in Eingriff mit den Eingriffsabschnitten 310 am Eingriffselement 31 gezogen werden, sodass darüber eine formschlüssige Verriegelung zwischen den Verschlussteilen 2, 3 hergestellt ist, wie dies aus Fig. 2A-D ersichtlich ist.

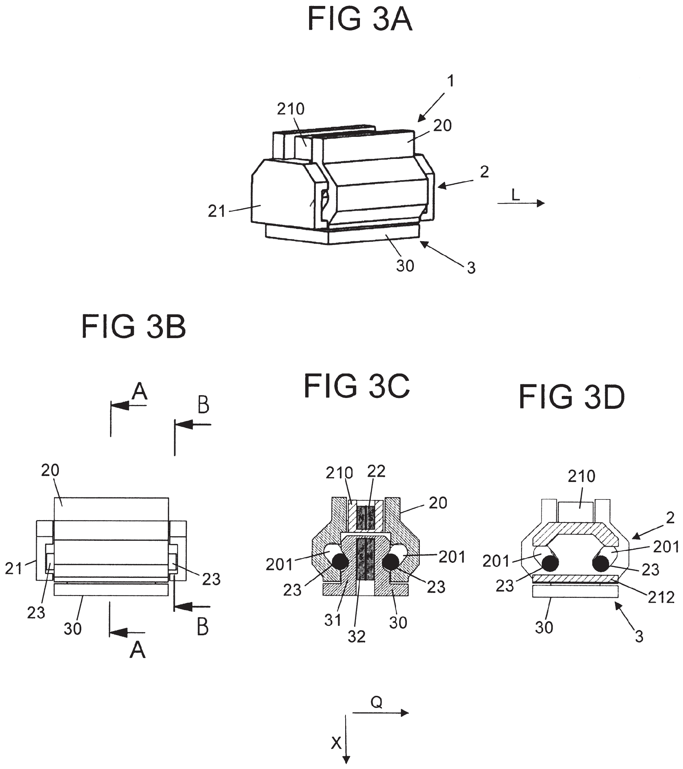

Werden die Verschlussteile 2, 3, wie in Fig. 3A-D dargestellt, zueinander belastet, so verkeilen die Verriegelungselemente 23 zwischen Schrägflächen 311 an den Eingriffsabschnitten 310 und gegenüberliegenden Schrägflächen 205 am Körper 20 im Bereich der Aufnahmeöffnungen 201. Die Verschlussteile 2, 3 sind somit in verriegelter Weise aneinander gehalten und können sich nicht ohne weiteres, jedenfalls nicht ohne Lösen der Verriegelung, voneinander lösen (wobei gegebenenfalls ein Trennen der Verschlussteile 2, 3 bei Überschreiten einer vorbestimmten Grenzkraft möglich ist).

Sollen die Verschlussteile 2, 3 voneinander gelöst werden, so kann das Verstellteil 21 in die Betätigungsrichtung B an dem Körper 20 des ersten Verschlussteils 2 betätigt werden, wie dies aus Fig. 4A-D ersichtlich ist. Dadurch wirkt das Verstellteil 21 mit den an den Flankenabschnitten 211 ausgebildeten, Betätigungselemente verwirklichenden Randabschnitten 212 auf die vom Körper 20 vorstehenden Enden der Verriegelungselemente 23 ein und verstellt auf diese Weise die Verriegelungselemente 23 in den Aufnahmeöffnungen 201 derart in die Betätigungsrichtung B nach oben und somit - aufgrund der schrägen Erstreckung der Aufnahmeöffnungen 201 - nach außen, dass die Verriegelungselemente 23 außer Eingriff von den Eingriffsabschnitten 310 gelangen und die Verschlussteile 2, 3 somit voneinander entriegelt sind.

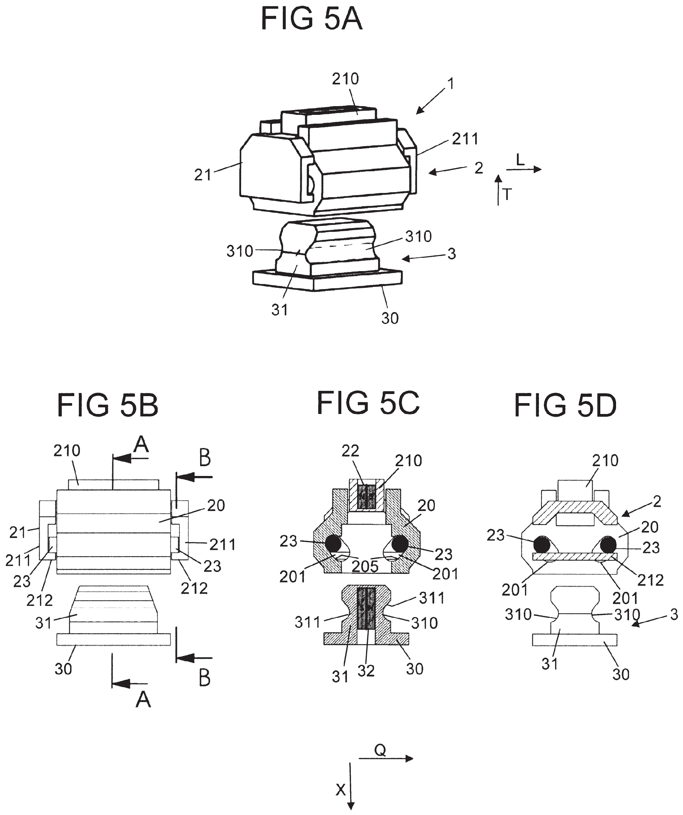

Weil an dem Zwischenabschnitt 210 des Verstellteils 21 die Magneteinrichtung 22 des ersten Verschlussteils 2 angeordnet ist, wird bei Verstellen des Verstellteils 21 auch die magnetische Anziehung zwischen den Magneteinrichtungen 22, 32 abgeschwächt. Die Verschlussteile 2, 3 können somit in einfacher Weise entlang der Schließrichtung X voneinander gelöst werden, wie dies in Fig. 5A-D dargestellt ist. Die zum Öffnen benötigte Kraft ist bei dieser Ausführungsform durch die Magnetkraft vorgegeben, die zwischen der Magneteinrichtung 22 und Magneteinrichtung 32 wirkt. Das Verstellteil 21 ist also magnetisch vorgespannt und kann nicht ohne weiteres durch kleine Auslösekräfte versehentlich geöffnet werden. Dies kann beispielsweise bei der Verwendung eines derartigen Verschlusses an einer Hundeleine vorteilhaft sein.

Unter Last erhöht sich hierbei die Kraft, die zum Verschieben des Verstellteils 21 notwendig ist.

Das Öffnen der Verschlussvorrichtung 1 ist einfach und komfortabel. Insbesondere kann ein Nutzer zum Öffnen einfach das Verstellteil 21 greifen und in die Betätigungsrichtung B an dem Verstellteil 21 ziehen. Weil die Betätigungsrichtung B parallel zu der Schließrichtung X und gleichgerichtet mit einer Trennrichtung T (Fig. 5A) ist, können durch Angreifen an dem Verstellteil 21 in einem Bewegungsablauf die Verriegelung gelöst und die Verschlussteile 2, 3 voneinander abgenommen werden.

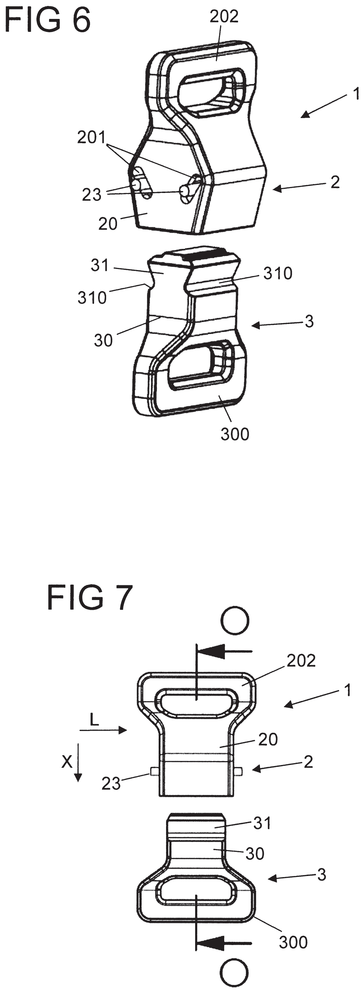

Fig. 6 und 7 zeigen ein Ausführungsbeispiel einer Verschlussvorrichtung 1, das funktional weitestgehend identisch dem Ausführungsbeispiel gemäß Fig. 1A-D bis 5A-D ist, aber kein Verstellteil 21 aufweist und entsprechend eine Magneteinrichtung 22 unmittelbar an dem Körper 20 des ersten Verschlussteils 2 angeordnet ist.

Insbesondere weist ein erstes Verschlussteil 2 einen Körper 20 mit in Aufnahmeöffnungen 201 geführten Verriegelungselementen 23 auf. In eine Eingriffsöffnung 200 des Körpers 20 kann ein zweites Verschlussteil 3 mit einem Eingriffselement 31 eingesteckt werden, um die Verschlussvorrichtung 1 zu schließen und über einen Eingriff der Verriegelungselemente 23 in an dem Eingriffselement 31 geformte Eingriffsabschnitte 310 zu verriegeln.

An dem Körper 22 des ersten Verschlussteils 2 und der Basis 30 des zweiten Verschlussteils 3 sind jeweils Befestigungsabschnitte 202, 300 zum Beispiel zum Befestigen eines Gurts angeordnet.

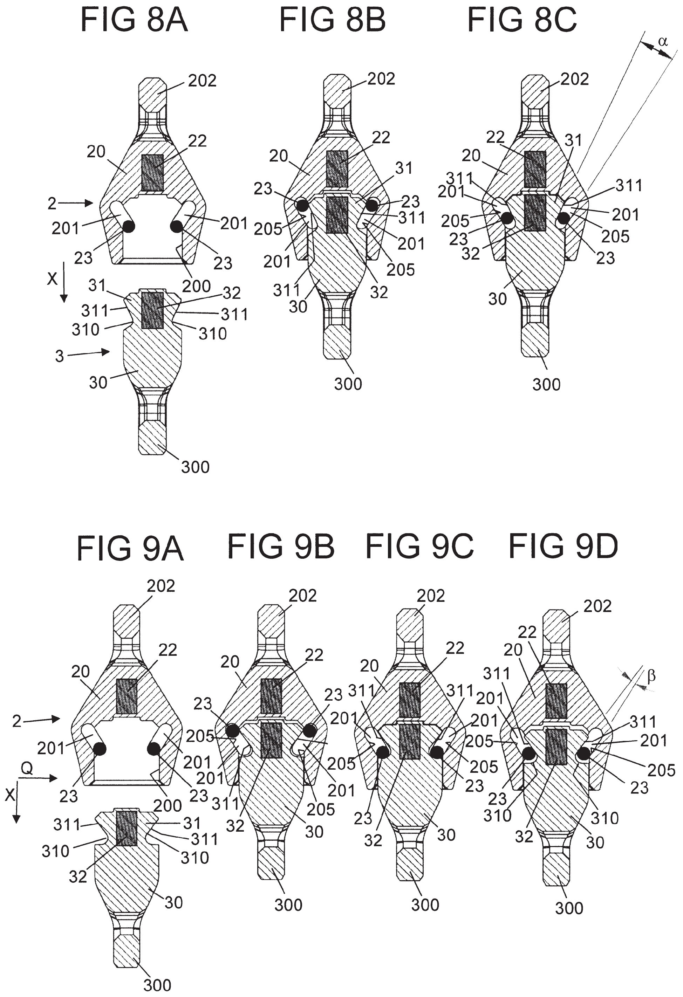

Fig. 8A-C und 9A-D veranschaulichen, in welcher Weise die Schrägflächen 205, 311 an den Aufnahmeöffnung 201 und den Eingriffsabschnitten 311 zueinander ausgerichtet sein können.

In einer ersten Ausgestaltung kann die an jedem Eingriffsabschnitt 310 geformte Schrägfläche 311 parallel zu der gegenüberliegenden Schrägfläche 205 der zugeordneten Aufnahmeöffnung 201 gerichtet sein (wie dies beispielsweise in Fig. 2C dargestellt ist). In diesem Fall verkeilen sich die Verriegelungselemente 23 bei Belastung der Verschlussteile 2, 3 zwischen den Schrägflächen 205, 311, wobei die Verschlussteile 2, 3, wie aus Fig. 3A-D ersichtlich ist, ein Spiel zueinander aufweisen und bei Belastung somit (geringfügig) entlang der Schließrichtung X voneinander entfernt werden, wie dies insbesondere aus Fig. 3C deutlich wird.

Bei der in Fig. 8A-C dargestellten Ausgestaltung weisen die Schrägflächen 205, 311 einen Winkel α zueinander auf, der größer Null ist, sodass die Schrägflächen 205, 311 eine sich nach außen weitende Keilform ausbilden. Dies bewirkt, dass bei einer Vibrationsbelastung der Verschlussteile 2, 3 in der Schließstellung zueinander die Verriegelungselemente 23 weiter in Eingriff mit den Eingriffsabschnitten 310 gezogen werden, was dazu führt, dass die Verschlussteile 2, 3 spielfrei in Eingriff miteinander gebracht und spielfrei zueinander gehalten werden, wie dies aus Fig. 8C ersichtlich ist.

Diese winklige Ausrichtung der Schrägflächen 205, 311 zueinander hat dabei die Auswirkung, dass bei einer Belastung der Verschlussteile 2, 3 entlang der Schließrichtung X zueinander, die eine vorbestimmte Grenzkraft überschreitet, sich die Verschlussteile 2, 3 unter Beiseitedrängen der Verriegelungselemente 23 in den Aufnahmeöffnungen 201 selbsttätig voneinander lösen können. Die Verbindung der Verschlussteile 2, 3 in der Schließstellung ist nicht selbstsichernd

Die Betätigungskraft zum Öffnen unter Last kann bei diesem Ausführungsbeispiel im Vergleich zu den anderen Ausführungen am geringsten sein.

Bei der Ausgestaltung gemäß Fig. 9A-D bilden die Schrägflächen 205, 311 einen Winkel β zueinander aus, der kleiner Null ist derart, dass die Schrägflächen 205, 311 eine nach außen verjüngende Keilform ausbilden. Dies hat zur Folge, dass bei einer Belastung der Verschlussteile 2, 3 entlang der Schließrichtung X zueinander sich die Verriegelungselemente 23 in selbstsichernder Weise zwischen den Schrägflächen 205, 311 verkeilen und somit die Verbindung der Verschlussteile 2, 3 in der Schließstellung gesichert ist und auch bei großen Kräften nicht selbsttätig gelöst werden kann. Die Verbindung ist somit selbstsichernd. Ein Lösen der Verschlussteile 2, 3 voneinander ist nur durch Entriegeln der Verriegelungselemente 23, beispielsweise über ein Verstellteil 21, möglich.

Die Betätigungskraft zum Öffnen unter Last kann bei diesem Ausführungsbeispiel im Vergleich zu den anderen Ausführungen am größten sein.

Die winklige Ausrichtung der Schrägflächen 205, 311 bei der Ausgestaltung gemäß Fig. 9A-D hat zur Folge, dass die Verschlussteile 2, 3 bei Belastung ein Spiel zueinander aufweisen, wie dies aus Fig. 9D ersichtlich ist.

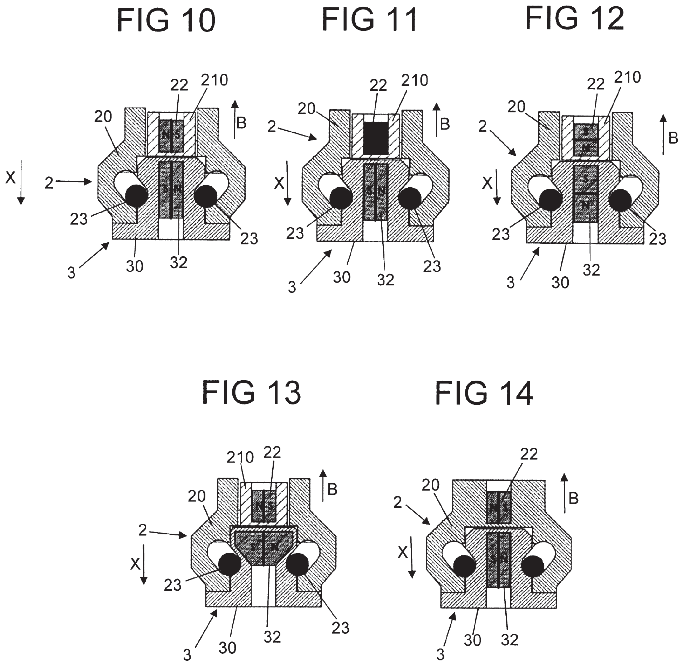

Bei dem in Fig. 1A-D bis Fig. 5A-D dargestellten Ausführungsbeispiel weist das erste Verschlussteil 2 eine an dem Verstellteil 21 angeordnete Magneteinrichtung 22 und das zweite Verschlussteil 3 eine an dem Eingriffselement 31 angeordnete Magneteinrichtung 32 auf. Die Magneteinrichtungen 22, 32 können grundsätzlich unterschiedlich ausgebildet sein, wie dies in Fig. 10-14 veranschaulicht ist.

Bei dem Ausführungsbeispiel gemäß Fig. 10 ist jede Magneteinrichtung 22, 32 durch einen Permanentmagneten mit Polen N, S gebildet, wobei die Permanentmagnete umgekehrt zueinander gepolt sind und sich somit ungleichnamige Pole an den Verschlussteilen 2, 3 anziehend gegenüberstehen. Die Pole sind hierbei entlang der Querrichtung Q nebeneinander angeordnet.

Bei dem Ausführungsbeispiel gemäß Fig. 11 ist die Magneteinrichtung 22 des ersten Verschlussteils 2 durch einen magnetischen Anker aus einem ferromagnetischen Material ausgestaltet. Die Magneteinrichtung 32 des zweiten Verschlussteils 3 ist demgegenüber durch einen Permanentmagneten gebildet, der magnetisch anziehend mit dem magnetischen Anker der Magneteinrichtung 22 zusammenwirkt.

Bei dem Ausführungsbeispiel gemäß Fig. 12 ist jede Magneteinrichtung 22, 32 durch einen Permanentmagneten gebildet, wobei die Pole N, S der Permanentmagneten entlang der Schließrichtung X (Betätigungsrichtung B) nebeneinander angeordnet sind.

Bei dem Ausführungsbeispiel gemäß Fig. 13 ist die Magneteinrichtung 32 des zweiten Verschlussteils 3 durch ein trapezförmiges Permanentmagnetelement gebildet. Dies hat den Vorteil, dass der Abstand zwischen dem Verriegelungselement 23 und der Magneteinrichtung 32 sehr klein sein kann und damit die auf das Verriegelungselement 23 wirkende Magnetkraft relativ stark ist.

Bei dem Ausführungsbeispiel gemäß Fig. 14 ist die Magneteinrichtung 22 des ersten Verschlussteils 2 nicht an dem Verstellteil 21, sondern an dem Körper 20 des ersten Verschlussteils 2 angeordnet.

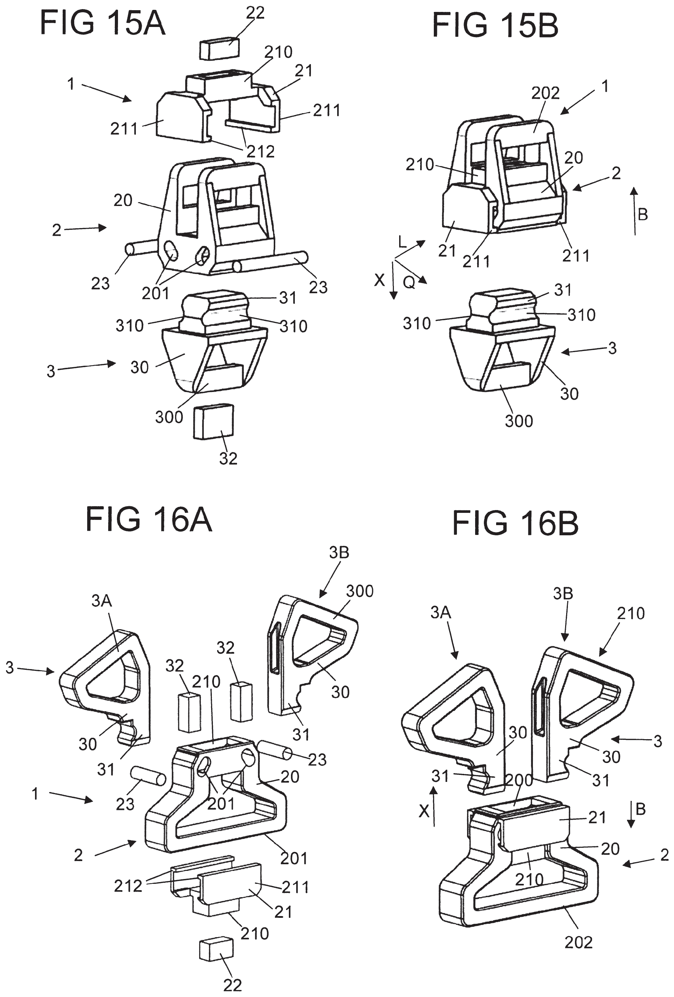

Fig. 15A, 15B zeigen eine Verschlussvorrichtung 1, die funktional identisch dem Ausführungsbeispiel gemäß Fig. 1A-D bis Fig. 5A-D ist, sodass vollumfänglich auf die obigen Ausführungen hierzu verwiesen werden soll. Die Verschlussvorrichtung 1 gemäß Fig. 15A, 15B ist dabei als Gurtverbinder ausgebildet. Entsprechend ist an dem ersten Verschlussteil 2 ein Befestigungsabschnitt 202 für eine Gurtbefestigung und an dem zweiten Verschlussteil 3 ein Befestigungsabschnitt 300 ebenfalls für eine Gurtbefestigung ausgebildet.

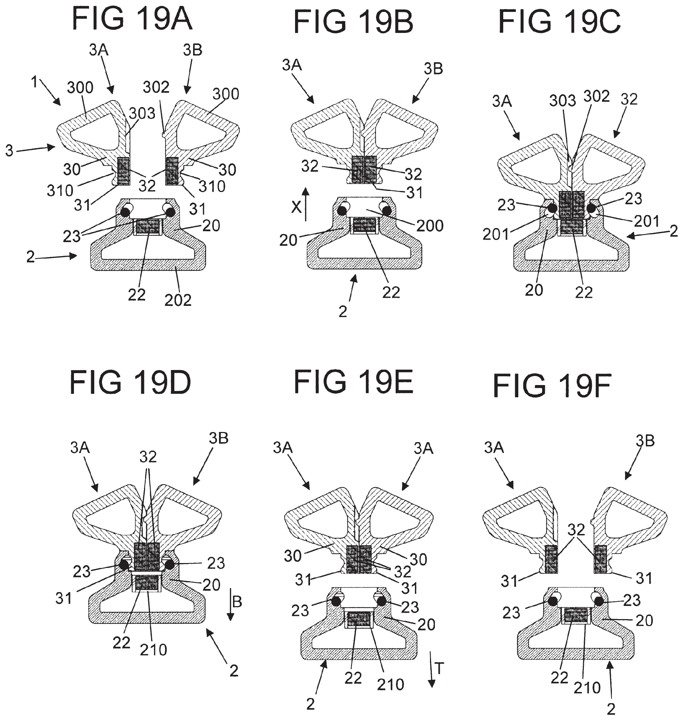

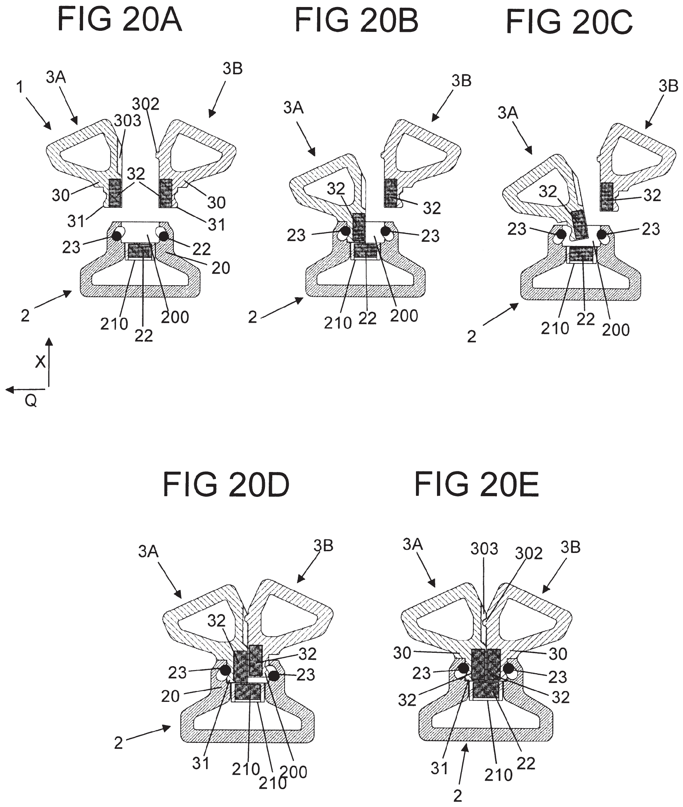

Fig. 16A, 16B zeigen ein Ausführungsbeispiel einer Verschlussvorrichtung 1, bei der zwei zweite Verschlussteile 3 an ein erstes Verschlussteil 2 anzusetzen sind, wie dies nachstehend noch anhand von Fig. 19A-F und 20A-E erläutert werden soll. Die Verschlussrichtung 1 gemäß Fig. 16A, 16B bildet somit eine Mehr-Punkt-Verbindung aus, wobei an jedem Verschlussteil 2, 3 beispielsweise ein Gurt für eine Mehr-Punkt-Gurtverbindung angeordnet sein kann.

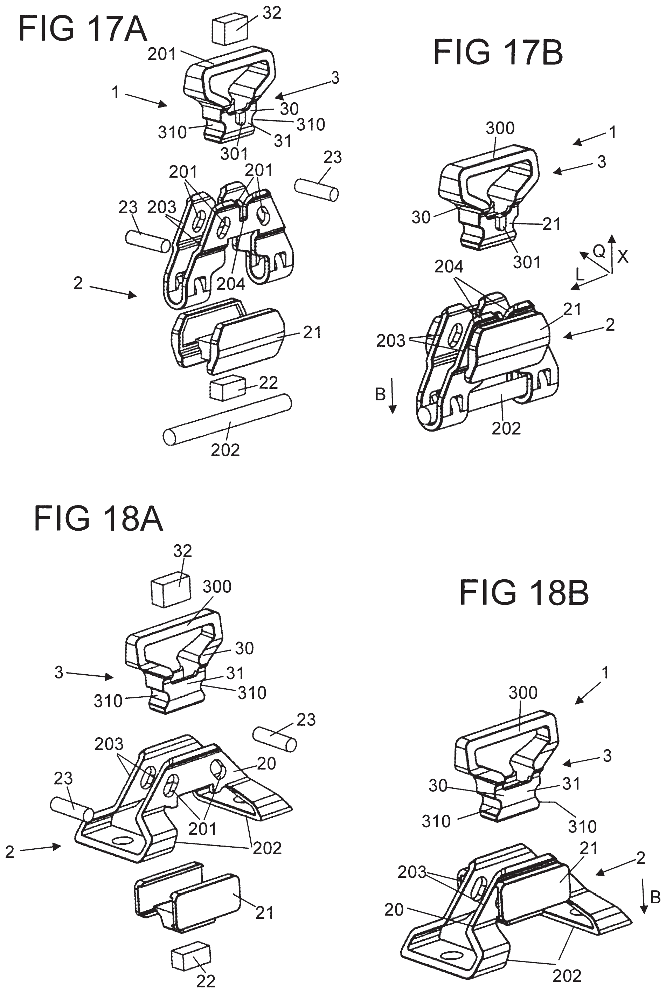

Fig. 17A, 17B zeigt ein Ausführungsbeispiel einer Verschlussvorrichtung 1, das funktional ebenfalls weitestgehend identisch dem Ausführungsbeispiel gemäß Fig. 1A-D bis Fig. 5A-D ist, sodass mit Blick auf die Funktion auf die obigen Ausführungen verwiesen werden soll.

Bei dem Ausführungsbeispiel gemäß Fig. 17A, 17B weist das erste Verschlussteil 2 Schenkel 203 auf, zwischen denen die Eingriffsöffnung 200 gebildet ist und zwischen die das zweite Verschlussteil 3 mit einem daran geformten Eingriffselement 31 eingesetzt werden kann, um die Verschlussvorrichtung 1 zu schließen. An oberen Kanten der Schenkel 203 ist ein Führungseingriff 204 geformt, in den zugeordnete Führungszapfen 301 am Eingriffselement 31 des zweiten Verschlussteils 3 eingreifen, wenn die Verschlussteile 2, 3 aneinander angesetzt werden.

An den Schenkeln 203 des ersten Verschlussteils 2 sind Aufnahmeöffnungen 201 geformt, die Verriegelungselemente 23 aufnehmen, sodass die Verriegelungselemente 23 zwischen den Schenkeln 203 erstreckt sind. Ein Verstellteil 21 dient, wie vorangehend anhand von Fig. 1A-D bis 5A-D beschrieben, zum Entriegeln der Verriegelungselemente 23.

An dem ersten Verschlussteil 2 ist ein Befestigungsabschnitt 202 in Form einer zwischen den Schenkeln 203 aufgenommenen Stange angeordnet, die als Gurtbefestigung dient. Ebenso weist das zweite Verschlussteil 3 einen Befestigungsabschnitt 300 zum Befestigen eines Gurts auf.

Ein in Fig. 18A, 18B dargestelltes Ausführungsbeispiel ist funktional weitestgehend identisch dem Ausführungsbeispiel gemäß Fig. 17A, 17B. Bei dem Ausführungsbeispiel gemäß Fig. 18A, 18B ist das erste Verschlussteil 2 über Befestigungsabschnitte 202 fest mit einer übergeordneten Baugruppe, beispielsweise einem Gehäuseabschnitt oder Wandungsabschnitt einer übergeordneten Baugruppe, zu verbinden ist.

Die Verschlussvorrichtung 1 des Ausführungsbeispiels gemäß Fig. 16A, 16B ist als Mehr-Punkt-Verbindung ausgebildet und weist ein erstes Verschlussteil 2 und zwei an das erste Verschlussteil 2 anzusetzende zweite Verschlussteile 3A, 3B auf. Das erste Verschlussteil 2 weist hierbei, wie aus Fig. 16A, 16B in Zusammenschau mit Fig. 19A-F ersichtlich, einen Körper 20 auf, in dem eine Eingriffsöffnung 200 geformt ist, in die die zweiten Verschlussteile 3A, 3B gemeinsam mit Eingriffselementen 31 eingesetzt werden können, wie dies aus Fig. 19A im Übergang hin zu Fig. 19C ersichtlich ist.

Bei dem dargestellten Ausführungsbeispiel können die zweiten Verschlussteile 3A, 3B zunächst zusammengesetzt und sodann gemeinsam in die Eingriffsöffnung 200 des ersten Verschlussteils 2 eingesetzt werden, wie dies in Fig. 19A-F dargestellt ist. Die zweiten Verschlussteile 3A, 3B weisen jeweils eine Magneteinrichtung 32 beispielsweise in Form eines Permanentmagneten auf, die magnetisch anziehend zusammenwirken, sodass bei Ansetzen aneinander die Verschlussteile 3A, 3B in eine bestimmungsgemäße Lage zueinander gelangen, wie dies aus Fig. 19B ersichtlich ist. In dieser zusammengesetzten Lage können die Verschlussteile 3A, 3B an das Verschlussteil 2 angesetzt und in Eingriff mit der Eingriffsöffnung 200 gebracht werden, sodass die Verschlussteile 3A, 3B in einer Schließstellung (Fig. 19C) über Verriegelungselemente 23 an dem Verschlussteil 2 in der Eingriffsöffnung 200 verriegeln.

Zum Lösen der Verschlussteile 2, 3A, 3B voneinander kann das Verstellteil 21 (Fig. 16A, 16B) in eine Betätigungsrichtung B betätigt werden, sodass die Verriegelungselemente 23 in die Betätigungsrichtung B verstellt und aufgrund der Führung in den Aufnahmeöffnungen 201 nach außen versetzt werden, wie dies aus Fig. 19B ersichtlich ist. Die Verriegelung ist somit aufgehoben, sodass die Verschlussteile 3A, 3B von dem Verschlussteil 2 entnommen und voneinander getrennt werden können (Fig. 19E, 19F).

Bei dem dargestellten Ausführungsbeispiel sind die Verschlussteile 3A, 3B auch getrennt voneinander an das Verschlussteil 2 ansetzbar, wie aus Fig. 20A-E ersichtlich. So kann zunächst eines der Verschlussteile 3A, 3B an das Anschlussteil 2 angesetzt werden, um sodann das andere der Verschlussteile 3B, 3A mit dem Verschlussteil 2 zu verbinden.

Damit das andere Verschlussteil 3B an das Verschlussteil 2 angesetzt werden kann, muss hierbei das zuerst angesetzte Verschlussteil 3A in lagerichtigem Eingriff in der Eingriffsöffnung 200 sein, wie dies aus Fig. 20C ersichtlich ist. Ist das Verschlussteil 3A nicht in lagerichtigem Eingriff, so wirkt das Verschlussteil 3B beim Einsetzen auf das Verschlussteil 3A ein und bewirkt, dass die Verschlussteile 3A, 3B gemeinsam in verriegelnden Eingriff mit dem Verschlussteil 2 gelangen.

An dem Verschlussteil 3A ist an einer dem anderen Verschlussteil 3B zugewandten Stirnseite eine Eingriffsnut 303 geformt, in die bei Ansetzen der Verschlussteile 3A, 3B aneinander eine Eingriffsnase 302 an dem Verschlussteil 302 eingreift, sodass dadurch das lagerichtige Ansetzen der Verschlussteile 3A, 3B aneinander beim Verbinden mit dem Verschlussteil 2 unterstützt wird.

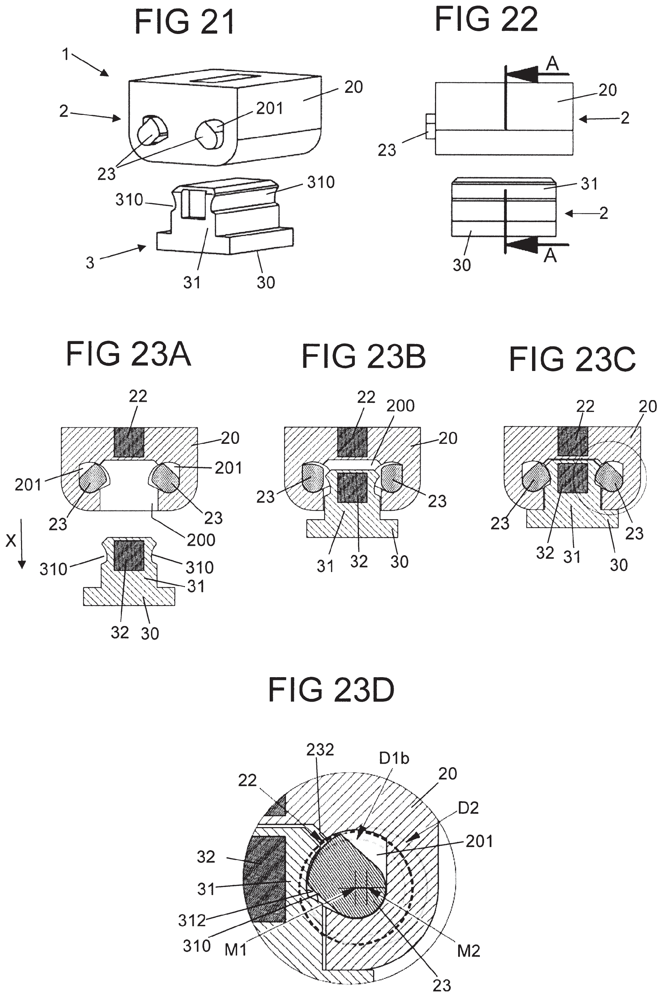

Fig. 21, 22 und 23A-D zeigen ein weiteres Ausführungsbeispiel einer Verschlussvorrichtung 1, bei der Verschlussteile 2, 3 entlang einer Schließrichtung X aneinander anzusetzen sind.

Während bei den vorangehend beschriebenen Ausführungsbeispielen die Verriegelungselemente 23 entlang einer schräg zur Schließrichtung X und schräg zur Querrichtung Q gerichteten Verstellrichtung in den zugeordneten Aufnahmeöffnungen 201 bewegbar sind, sind bei dem Ausführungsbeispiel gemäß Fig. 21-23 Verriegelungselemente 23 in Aufnahmeöffnungen 201 eines Körpers 20 des Verschlussteils 2 verschwenkbar gelagert. Die Verriegelungselemente 23 sind magnetisch und wirken mit Magneteinrichtungen 22, 32 der Verschlussteile 2, 3 zusammen.

Zum Schließen der Verschlussvorrichtung 1 kann das Verschlussteil 2 mit einem an einer Basis 30 geformten Eingriffselement 31 in eine Eingriffsöffnung 200 im Körper 20 des Verschlussteils 2 eingesteckt werden, wie dies im Übergang von Fig. 23A zu Fig. 23B ersichtlich ist. Die Verriegelungselemente 23 werden hierbei beiseite gedrängt, wobei nach Erreichen der Schließstellung (Fig. 23C) die Verriegelungselemente 23 aufgrund der magnetischen Wechselwirkung mit der Magneterrichtung 32 des Verschlussteils 3 in Eingriff mit Eingriffsabschnitten 310 an dem Eingriffselement 31 des Verschlussteils 3 gezogen werden, sodass die Verschlussteile 2, 3 miteinander verriegelt werden.

Der Verbindung zwischen den Verschlussteilen 2, 3 ist hierbei (weitestgehend) spielfrei, wie dies in Fig. 23D skizziert ist. So ist ein jedes Verriegelungselement 23 um einen Mittelpunkt M1 zu dem Körper 20 schwenkbar. An einer dem Eingriffsabschnitt 310 zugewandten Seite weist ein jedes Verriegelungselement 23 hierbei eine gekrümmte Anlagefläche 232 auf, deren Krümmung einem zum Mittelpunkt M1 exzentrischen Kreis D2 um einen Mittelpunkt M2 folgt. Entsprechend ist auch eine zugeordnete Anlagefläche 312 an dem Eingriffsabschnitt 310 geformt.

Aufgrund der Exzentrizität ergibt sich an der Anlagefläche 232 des Verriegelungselements 23 eine sich nach innen verjüngende Keilform, bedingt dadurch, dass eine äußere Kante sich bei einem Verschwenken des Verriegelungselements 23 entlang eines äußeren Kreises D1a und eine innere Kante des Verriegelungselements 23 entlang eines inneren Kreises D1b bewegt. Zum Beispiel bei einer Vibrationsbelastung zwischen den Verschlussteilen 2, 3 bewirkt die Keilform, dass die Verriegelungselemente 23 weiter in Eingriff mit den Eingriffsabschnitten 310 gezogen werden und dadurch die Verschlussteile 2, 3 spielfrei zueinander festlegen.

Die Verbindung ist bei Überschreiten einer Grenzkraft selbsttätig lösbar, indem die Verriegelungselemente 23 bei Überschreiten der Grenzkraft aufgrund der Exzentrizität der Anlageflächen 233, 312 beiseite gedrängt werden.

Die Anlageflächen 232, 312 können auch umgekehrt exzentrisch ausgestaltet werden (mit einem zu dem Mittelpunkt M1 hin zum Eingriffsabschnitt 310 versetzten Mittelpunkt M2). In diesem Fall ist der Eingriff der Verriegelungselemente 23 in die Eingriffsabschnitte 310 selbstsichernd und verstärkt sich bei einer Belastung zwischen den Verschlussteilen 2, 3.

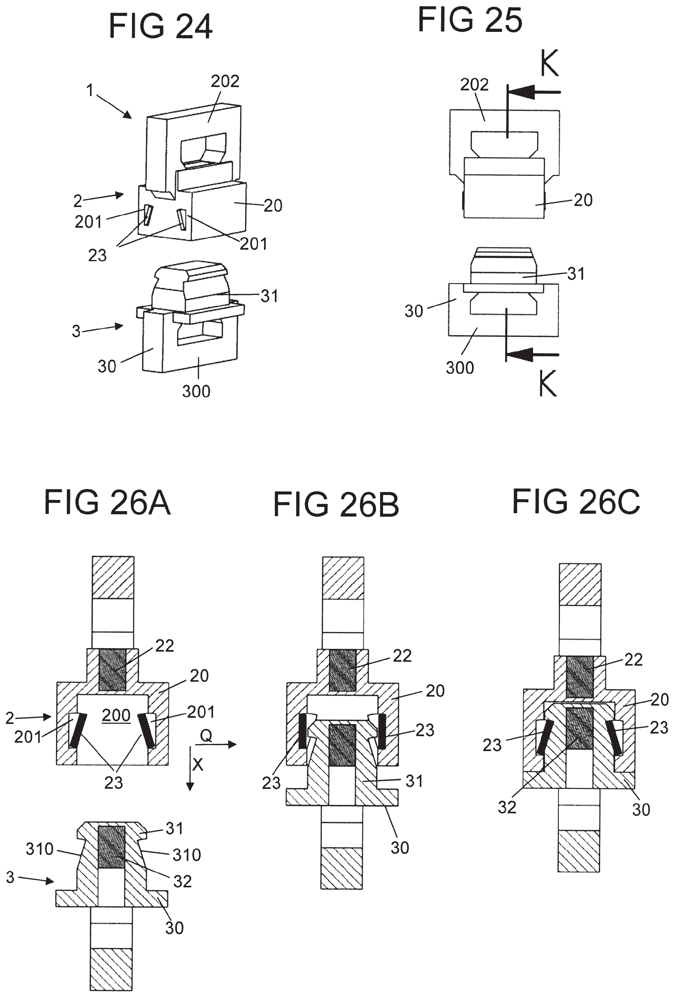

Bei einem in Fig. 24, 25 und 26A-C dargestellten Ausführungsbeispiel sind die Verriegelungselemente 23 als schwenkbar an Aufnahmeöffnungen 201 aufgenommene Platten ausgebildet. Die Verriegelungselemente 23 sind wiederum magnetisch und werden in der Schließstellung (Fig. 26C) in Eingriff mit Eingriffsabschnitten 310 an dem Eingriffselement 31 des Verschlussteils 3 gezogen, sodass die Verbindung zwischen den Verschlussteilen 2, 3 verriegelt ist.

Ansonsten ist die Funktionsweise des Ausführungsbeispiels gemäß Fig. 24, 25 und 26A-C analog dem vorangehend Ausgeführten.

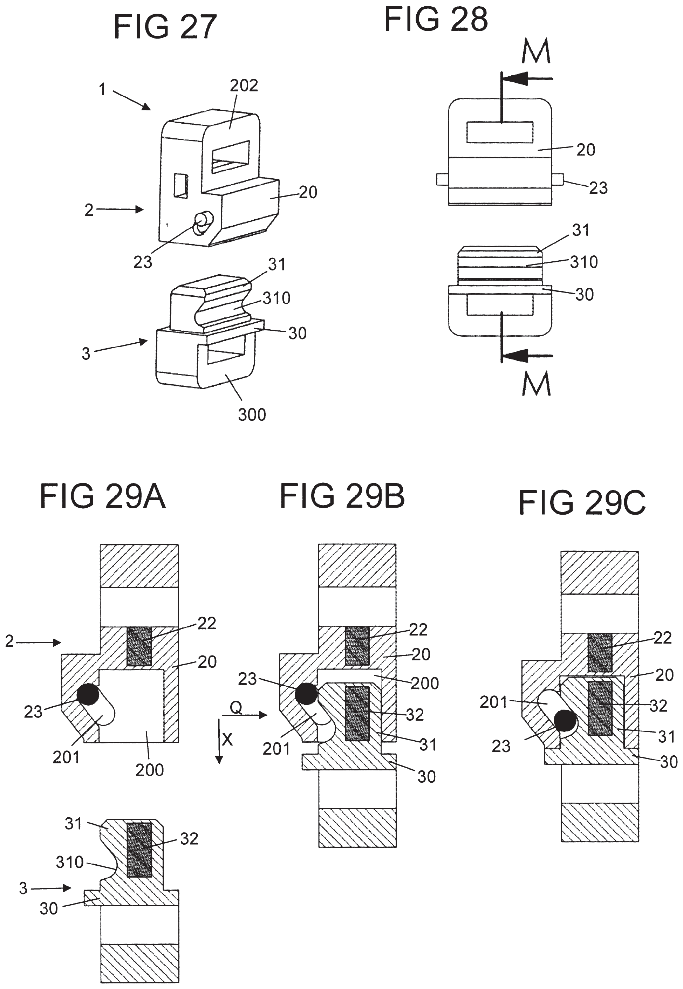

Bei einem in Fig. 27, 28 und 29A-C dargestellten Ausführungsbeispiel wird lediglich eine einseitige Verriegelung zwischen Verschlussteilen 2, 3 hergestellt, indem lediglich an einer Seite der an dem Körper 20 geformten Eingriffsöffnung 201 ein Verriegelungselement 23 in Form eines in einer Aufnahmeöffnung 201 aufgenommenen, längserstreckten Bolzens angeordnet ist. In der Schließstellung (Fig. 29C) greift das magnetische Verriegelungselement 23 in den zugeordneten Eingriffsabschnitt 310 am Eingriffselement 31 des Verschlussteils 3 ein und verriegelt dadurch die Verschlussteile 2, 3 miteinander.

Ansonsten ist die Funktionsweise des Ausführungsbeispiels gemäß Fig. 27, 28 und 29A-C identisch dem vorangehend Ausgeführten, insbesondere dem Ausführungsbeispiel gemäß Fig. 1A-D bis Fig. 5A-D.

Bei den vorangehend beschriebenen Ausführungsbeispielen kann das zumindest eine Verriegelungselement 23 händisch durch unmittelbares Einwirken auf das Verriegelungselement 23 betätigt werden. Alternativ kann an dem ersten Verschlussteil 2 ein Verstellteil 21 zum Einwirken auf das Verriegelungselement 23 vorgesehen sein, das entlang einer Betätigungsrichtung B betätigbar ist, um die Verriegelungselemente 23 aus ihrer verriegelnden Stellung herauszubringen und die Verschlussteile 2, 3 somit voneinander lösen zu können.

Bei dem Ausführungsbeispiel gemäß Fig. 1A-D bis Fig. 5A-D ist die Betätigungsrichtung B hierbei parallel zur Schließrichtung X gerichtet, sodass durch Betätigen des Verstellteils 21 die Verriegelungselemente 23 in den zugeordneten Aufnahmeöffnungen 201 versetzt und somit entriegelt werden können.

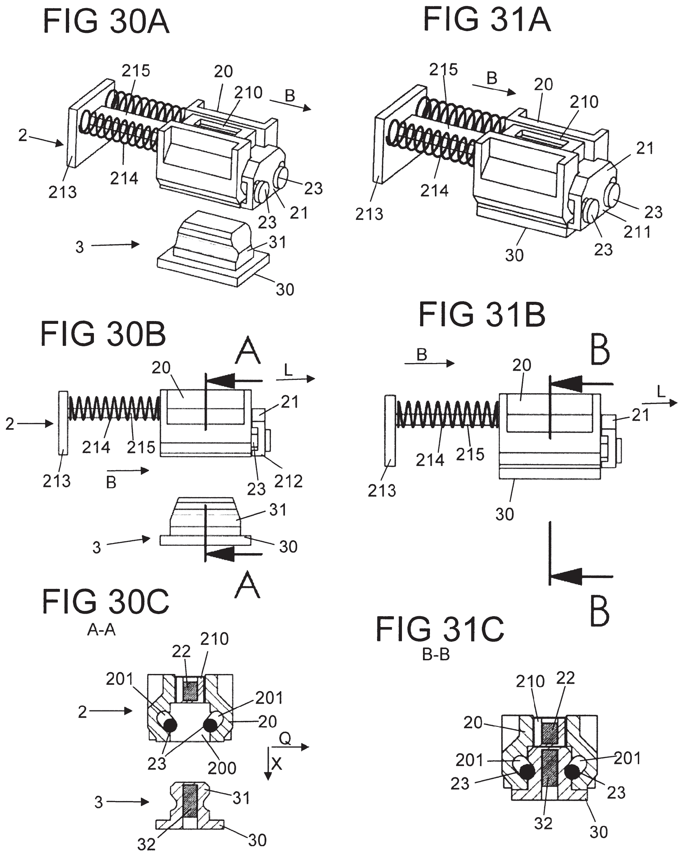

Bei einem in Fig. 30AC bis 33A-C dargestellten Ausführungsbeispiel sind die Verriegelungselemente 23 demgegenüber entriegelbar, indem das Verstellteil 21 in eine quer zur Schließrichtung X gerichtete Betätigungsrichtung B betätigbar ist, um die Verriegelungselemente 23 entlang der Betätigungsrichtung B aus dem Bereich der Aufnahmeöffnungen 201 heraus zu schieben. Das Verstellteil 21 weist hierzu ein Wirkelement 213 auf, das über einen Verbindungsabschnitt 215 mit dem Zwischenabschnitt 210 des Verstellteils 21 verbunden und über Federelemente 214 gegenüber dem Körper 20 des Verschlussteils 2 federvorgespannt ist.

Das Verstellteil 21 weist einen Flankenabschnitt 211 auf, an dem die Verriegelungselemente 23 axial befestigt sind, sodass durch Verstellen des Flankenabschnitts 211 in die Betätigungsrichtung B die Verriegelungselemente 23 aus dem Bereich der Aufnahmeöffnungen 201 herausgeschoben werden können.

In einer Ausgangsstellung, in Richtung derer das Verstellteil 21 durch die Federelemente 214 vorgespannt ist, können die Verschlussteile 2, 3 aneinander angesetzt werden und verriegeln in der Schließstellung miteinander (Fig. 31A-C). Insbesondere greifen die in den Aufnahmeöffnungen 201 im Körper 20 aufgenommenen Verriegelungselemente 23 in zugeordnete Eingriffsabschnitte 310 am Eingriffselement 31 des Verschlussteils 3 ein und stellen auf diese Weise eine Verbindung zwischen den Verschlussteilen 2, 3 her.

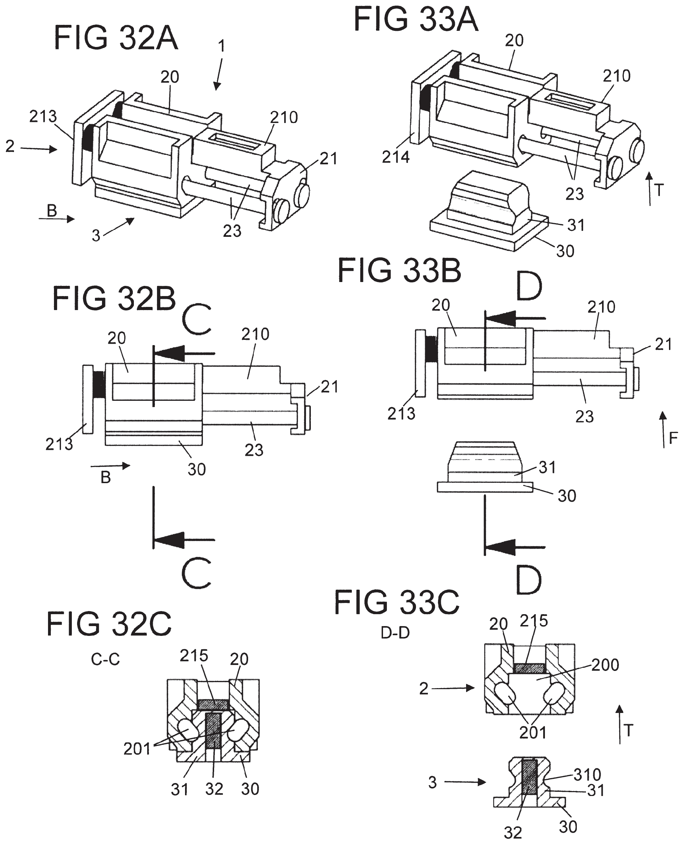

Um die Verbindung zwischen den Verschlussteilen 2, 3 zu lösen, kann ein Nutzer auf das Wirkelement 213 einwirken und das Verstellteil 21 in die Betätigungsrichtung B zu dem Körper 20 verschieben, wie dies aus Fig. 32A-C ersichtlich ist. Dadurch werden die Verriegelungselemente 23 aus den Aufnahmeöffnungen 201 quer zur Schließrichtung X hinausgeschoben, sodass die Verriegelung zwischen den Verschlussteilen 2, 3 aufgehoben ist. Die Verschlussteile 2, 3 können somit entlang der Trennrichtung T voneinander getrennt werden (Fig. 33A-C).

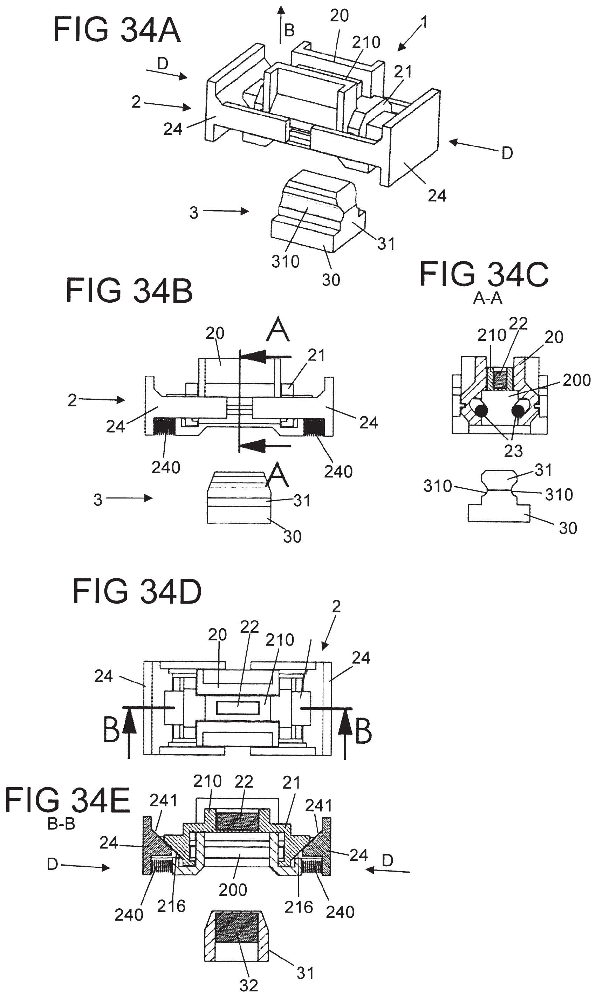

Bei einem in Fig. 34A-E bis 37A-E dargestellten Ausführungsbeispiel sind die Verschlussteile 2, 3 und insbesondere ein an dem Verschlussteil 2 angeordnetes Verstellteil 21 funktional identisch wie bei dem Ausführungsbeispiel gemäß Fig. 1A-D bis 5A-D ausgebildet. Zusätzlich ist an dem Verschlussteil 2 jedoch beidseits des Verstellteils 21 je ein Wirkelement 24 angeordnet, das mit dem Verstellteil 21 wirkverbunden ist und entlang einer Wirkrichtung D zu dem Körper 20 verstellbar ist, um dadurch auf das Verstellteil 21 einzuwirken und das Verstellteil 21 in die Betätigungsrichtung B zu dem Körper 20 zu betätigen, um die Verschlussteile 2, 3 voneinander zu lösen.

Ein jedes Wirkelement 24 weist einen Umlenkabschnitt 241 in Form einer schiefen Ebene auf, die in Anlage mit einem zugeordneten Umlenkabschnitt 216 in Form einer schiefen Ebene an dem Verstellteil 21 ist, wie dies insbesondere aus Fig. 34E ersichtlich ist. Ein jedes Wirkelement 24 ist hierbei über ein Federelement 240 gegenüber dem Körper 20 des Verschlussteils 2 federvorgespannt und befindet sich somit in einem nicht belasteten Zustand in der in Fig. 34A-E dargestellten Ausgangsstellung.

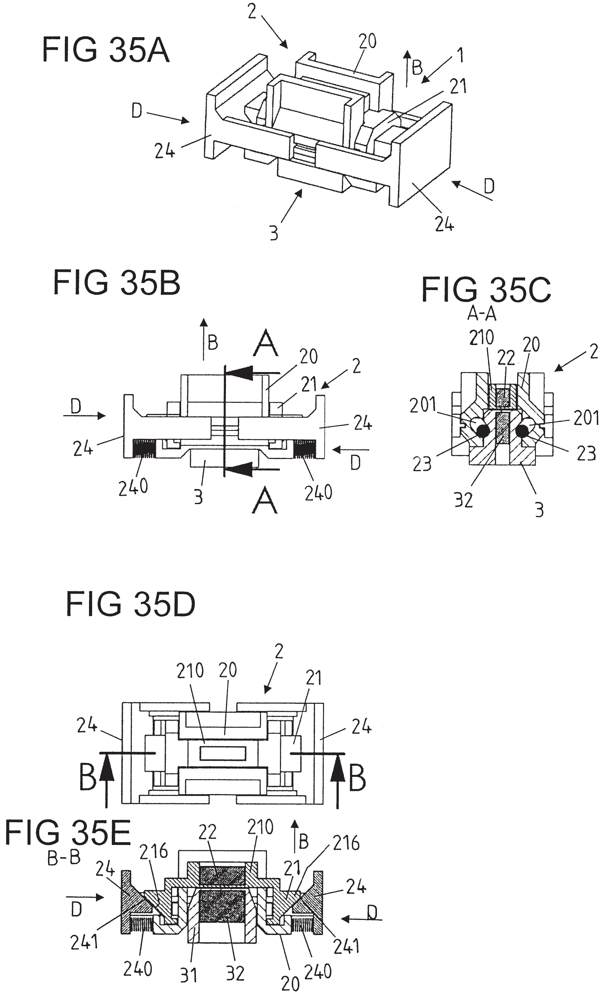

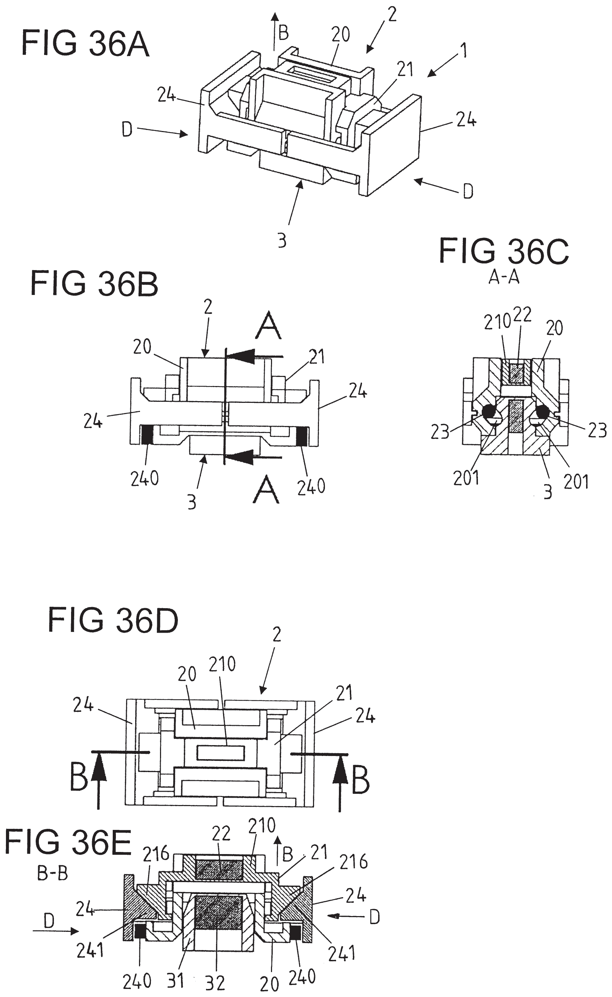

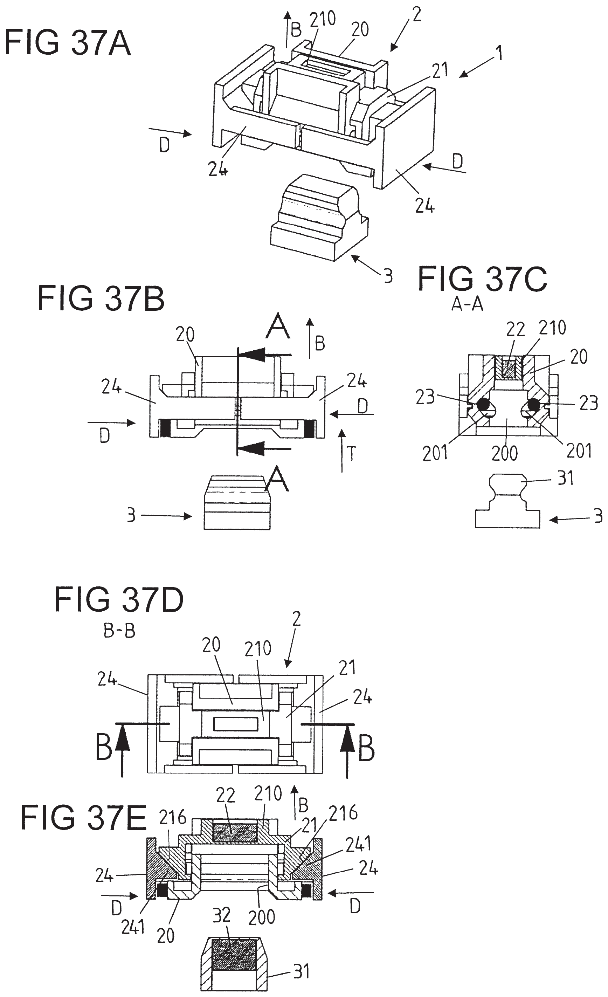

Sollen die Verschlussteile 2, 3 aus ihrer Schließstellung (Fig. 35A-D) voneinander gelöst werden, kann ein Nutzer beidseits auf die Wirkelemente 24 drücken und diese entgegen der Federvorspannung der Federelemente 240 hin zum Körper 20 und somit aufeinander zu drücken. Dadurch gleiten die Umlenkabschnitte 241 der Wirkelemente 24 an den Umlenkabschnitten 216 des Verstellteils 21 und bewegen das Verstellteil 21 in die Betätigungsrichtung B zu dem Körper 20 des Verschlussteils 2, sodass dadurch die Verriegelungselemente 23 angehoben und in den Aufnahmeöffnungen 201 nach außen bewegt werden, wie dies aus Fig. 36C ersichtlich ist. Die Verriegelung zwischen den Verschlussteilen 2, 3 ist somit aufgehoben, und die Verschlussteile 2, 3 können entlang der Trennrichtung T voneinander getrennt werden (Fig. 37A-E).

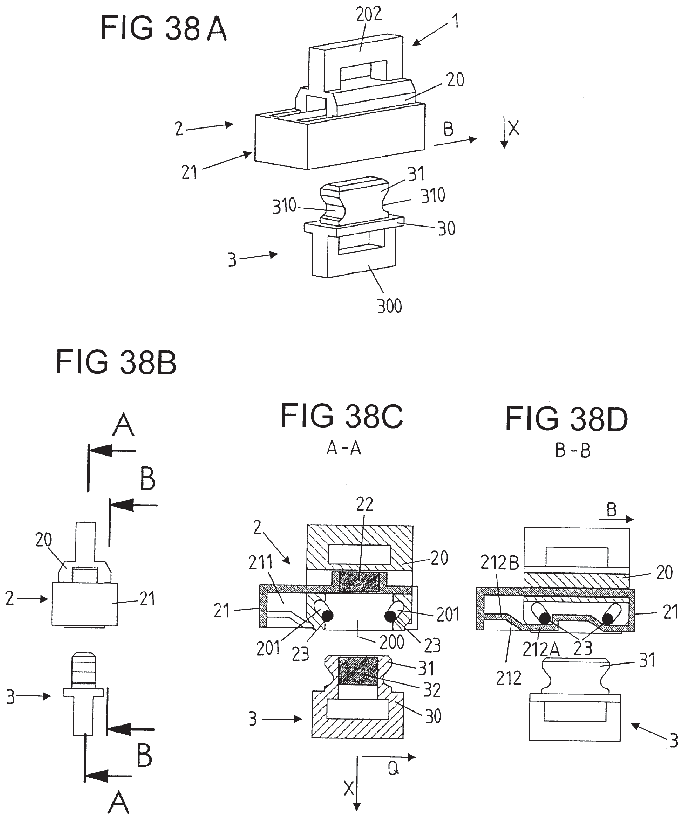

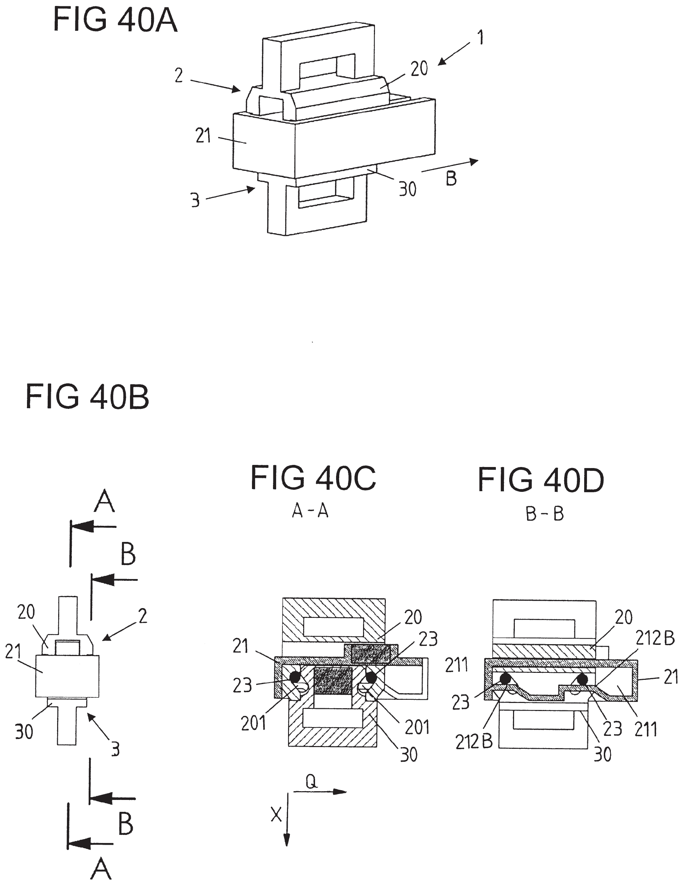

Bei einem in Fig. 38A-D bis 41A-D dargestellten Ausführungsbeispiel ist das Verstellteil 21 entlang einer Querrichtung Q an dem Körper 20 des Verschlussteils 2 verschiebbar und weist an Flankenabschnitten 211 Betätigungselemente 212 in Form von nach innen weisenden Führungskanten auf. Die Betätigungselemente 212 an den Innenseiten der Flankenabschnitte 211 weisen hierbei unterschiedliche Abschnitte 212A, 212B auf, die entlang der Schließrichtung X zueinander versetzt und über eine schiefe Ebene miteinander verbunden sind.

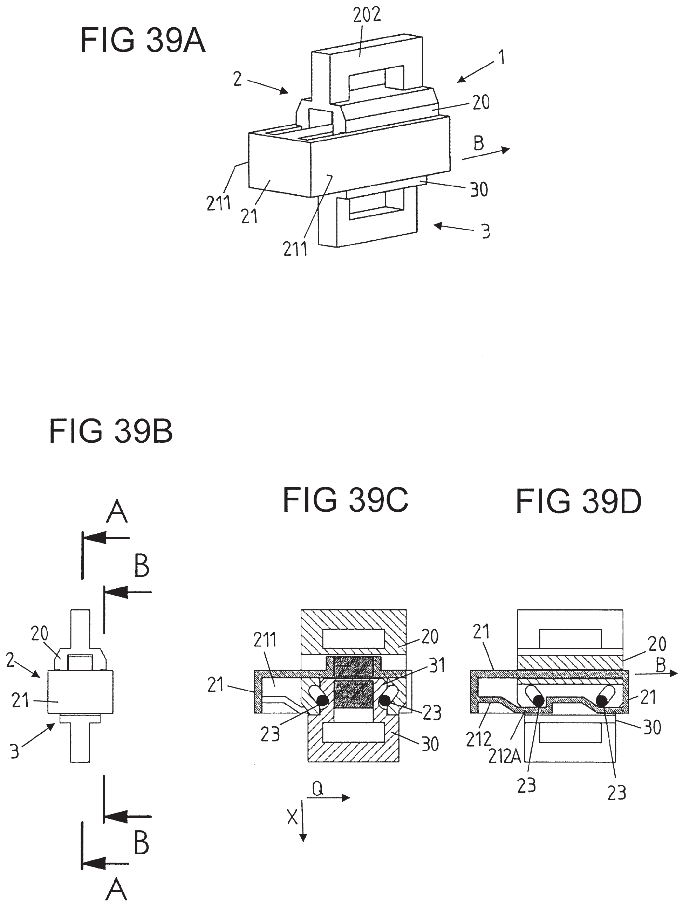

Mit Blick auf die Verriegelungselemente 23 und die Verriegelung zwischen den Verschlussteilen 2, 3 in der Schließstellung (Fig. 39A-D) ist das Ausführungsbeispiel gemäß Fig. 38A-D bis 41A-D identisch dem Ausführungsbeispiel gemäß Fig. 1A-D bis 5A-D, unterscheidet sich aber mit Blick auf das Verstellteil 21.

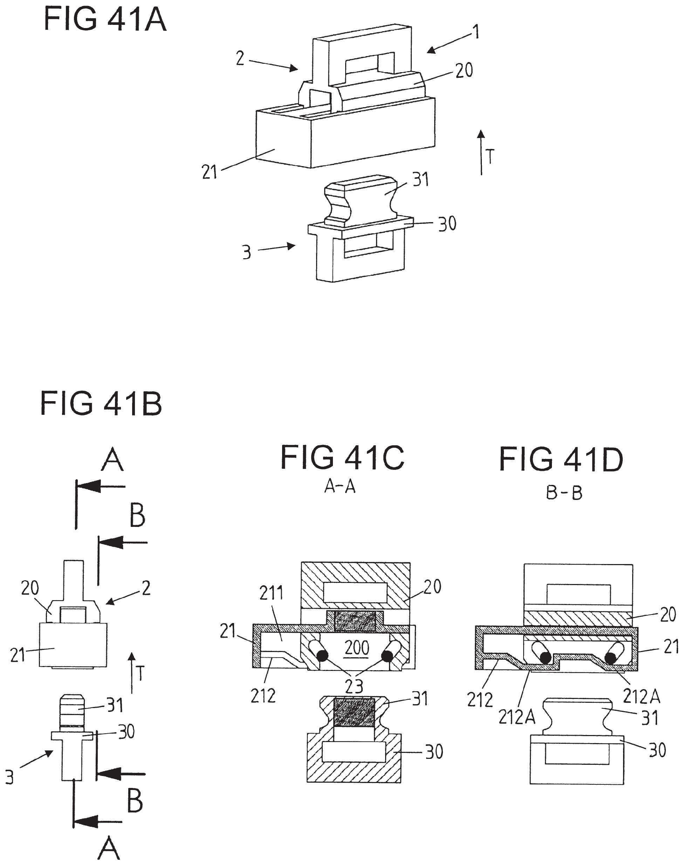

So wird das Verstellteil 21 zum Lösen der Verschlussteile 2, 3 voneinander quer zur Schließrichtung X in die Betätigungsrichtung B zu dem Körper 20 des Verschlussteils 2 verschoben, wodurch die Verriegelungselemente 23 auf die Abschnitte 212B der Betätigungselemente 212 innenseitig der Flankenabschnitte 211 auflaufen, wie dies im Übergang von Fig. 39A-D hin zu Fig. 41A-D ersichtlich ist. Dadurch werden die Verriegelungselemente 23 in den Aufnahmeöffnungen 201 angehoben und nach außen versetzt und somit aus ihrem verriegelnden Eingriff mit den Eingriffsabschnitten 310 des Eingriffselements 31 des Verschlussteils 3 gebracht. Die Verschlussteile 2, 3 können somit entlang der Trennrichtung T voneinander gelöst werden (Fig. 41A-D ).

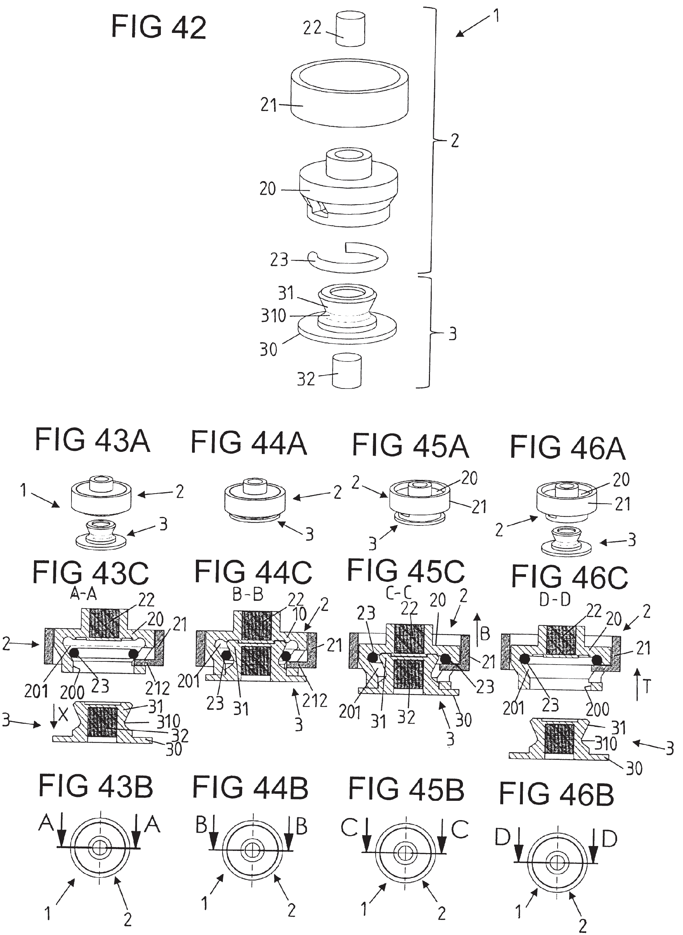

Bei den vorangehend beschriebenen Ausführungsbeispielen sind das eine oder die mehreren Verriegelungselemente 23 jeweils entlang einer Längsrichtung L längserstreckt beispielsweise als zylindrische Bolzen, als schwenkbare Elemente (Fig. 21-23) oder plattenförmig (Fig. 24-26) ausgebildet. Bei einem in Fig. 42 bis 46A-C dargestellten Ausführungsbeispiel ist demgegenüber ein Verriegelungselement 23 vorgesehen, das als geöffneter Ring ausgestaltet ist und in einer zugeordneten Aufnahmeöffnung 201 um eine Eingriffsöffnung 200 in einem Körper 20 eines Verschlussteils 2 aufgenommen ist.

Das Verriegelungselement 23 ist hierbei radial dehnbar, sodass durch Verstellen in der Aufnahmeöffnung 201 das Verriegelungselement 23 radial geweitet und somit aus einem verriegelnden Eingriff mit einem umlaufenden Eingriffsabschnitt 310 an einem Eingriffselement 31 eines Verschlussteils 2 gebracht werden kann.

Das Verriegelungselement 23 ist magnetisch ausgebildet. Beim Ansetzen der Verschlussteile 2, 3 aneinander gelangt das Verriegelungselement 23 aufgrund magnetischer Wechselwirkung mit einer Magneteinrichtung 32 am Verschlussteil 3 in verriegelnden Eingriff mit dem Eingriffsabschnitt 310 an dem Eingriffselement 31 des Verschlussteils 3 (Fig. 44A-C), sodass die Verschlussteile 2, 3 in einer Schließstellung fest miteinander verbunden sind.

Das Verschlussteil 2 weist ein Verstellteil 21 auf, das entlang einer parallel zur Schließrichtung X gerichteten Betätigungsrichtung B an dem Körper 20 verschiebbar ist und ein Betätigungselement 212 in Form eines nach innen vorspringenden Rands aufweist, mit dem das Verstellteil 21 bei einem Betätigen in die Betätigungsrichtung B auf das Verriegelungselement 23 einwirkt und dieses in der Aufnahmeöffnung 201 bewegt und dadurch radial weitet (Fig. 45A-C). Dadurch wird die Verriegelung zwischen den Verschlussteilen 2, 3 aufgehoben, sodass die Verschlussteile 2, 3 entlang einer Trennrichtung T voneinander getrennt werden können (Fig. 46A-C).

Vorteilhafterweise können auch mehrere Betätigungselemente 212 auf das Verriegelungselement 23einwirken.

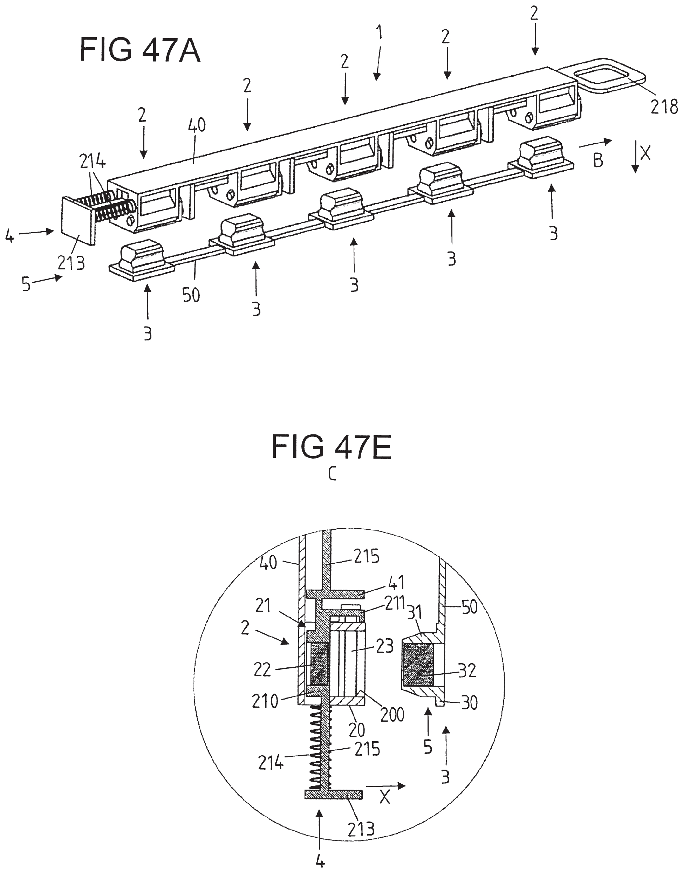

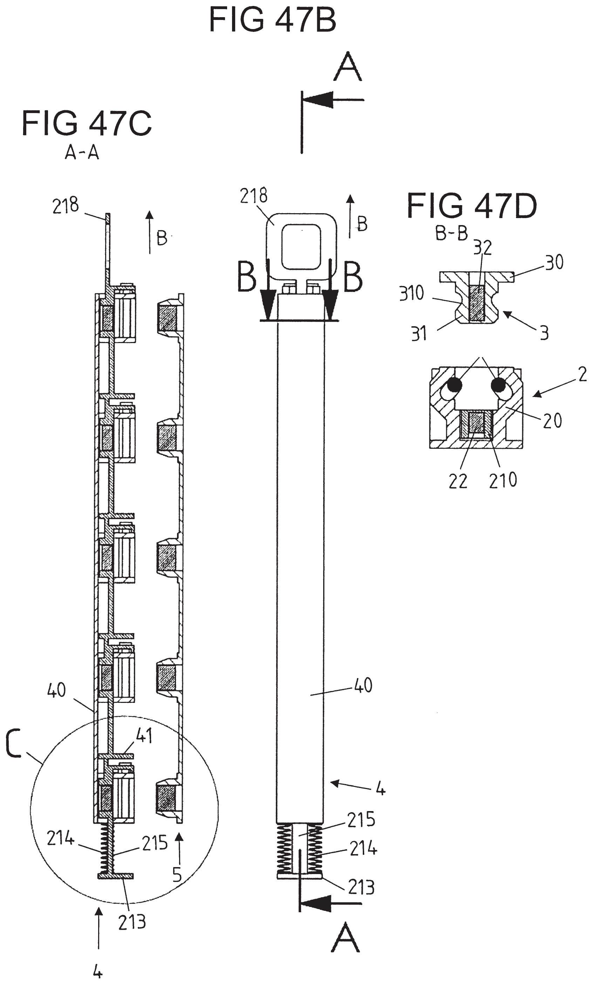

Bei einem in Fig. 47A-E bis 50A-E dargestellten Ausführungsbeispiel sind mehrere Verschlussvorrichtungen 1 zu einem Verschlusssystem miteinander kombiniert. So sind in einer ersten Baugruppe 4 mehrere erste Verschlussteile 2 von mehreren Verschlussvorrichtungen 1 über Verbindungsabschnitte 40 miteinander verbunden. In einer zweiten Baugruppe 5 sind demgegenüber zweite Verschlussteile 3 von Verschlussvorrichtungen 1 über Verbindungsabschnitte 50 miteinander verbunden. Die Baugruppen 4, 5 können entlang einer Schließrichtung X aneinander angesetzt werden, unter Verbindung der Verschlussteile 2, 3 miteinander.

Die Verschlussteile 2, 3 einer jeden Verschlussvorrichtung 1 sind analog dem Ausführungsbeispiel gemäß Fig. 30A-C bis 33A-C ausgebildet. Insbesondere weist ein jedes erstes Verschlussteil 2 ein Verstellteil 21 auf, das über einen Flankenabschnitt 211 mit Verriegelungselementen 23 des Verschlussteils 2 verbunden ist, sodass die Verriegelungselemente 23 entlang einer quer zur Schließrichtung X gerichteten Betätigungsrichtung B aus den Aufnahmeöffnungen 201 im Körper 20 des Verschlussteils 2 herausgeschoben werden können, um die Verschlussteile 2, 3 voneinander zu entriegeln und die Baugruppen 4, 5 voneinander zu trennen.

Die Verstellteile 21 der ersten Verschlussteile 2 sind hierbei über Verbindungsabschnitte 215 so miteinander verbunden, das über ein (einziges) Wirkelement 213 die Verstellteil 21 gemeinsam in die Betätigungsrichtung B verschoben werden können, um die Verschlussvorrichtungen 1 gemeinsam zu entriegeln.

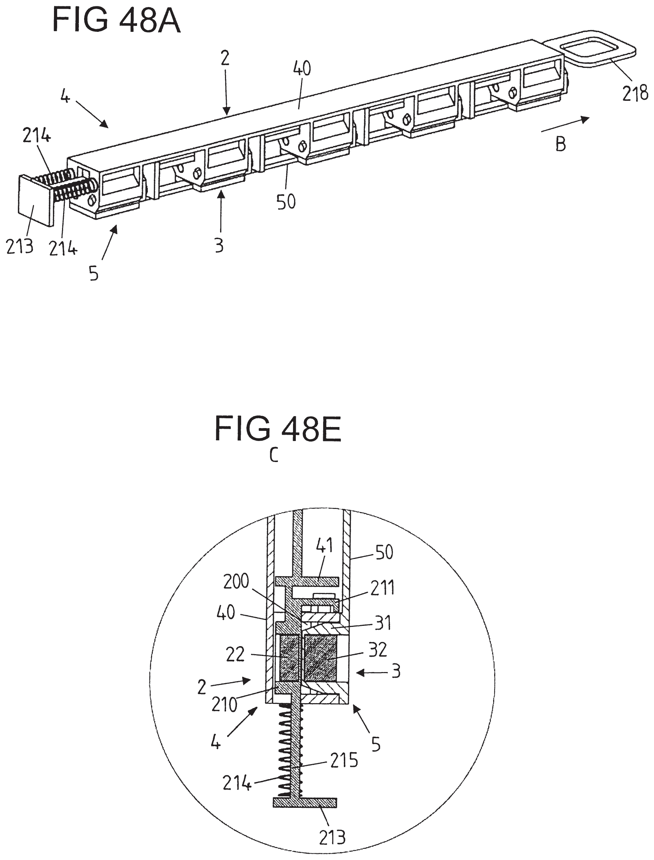

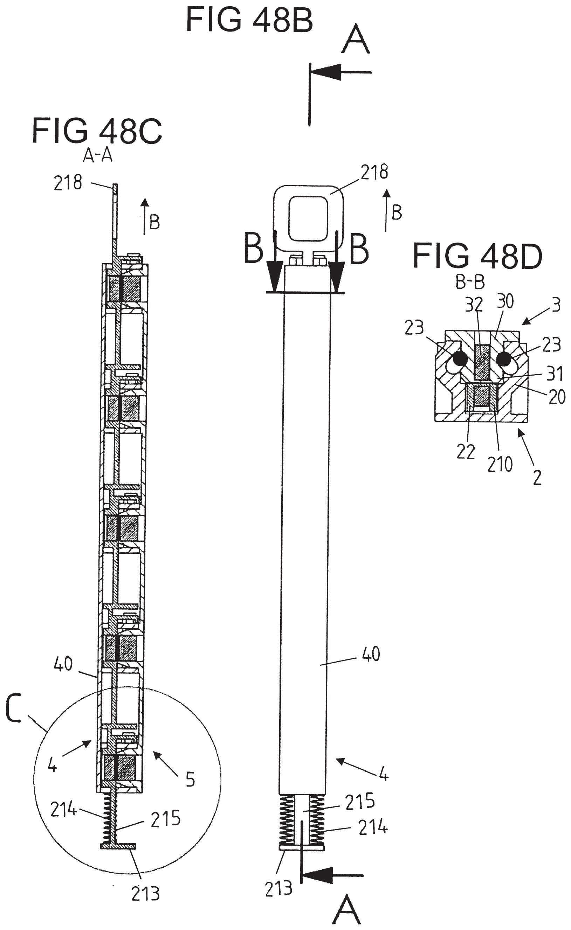

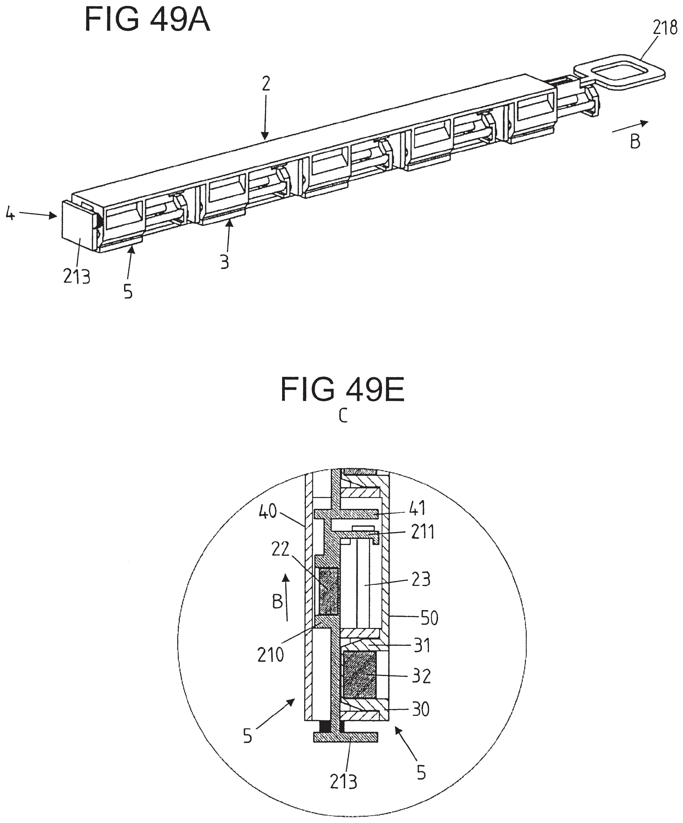

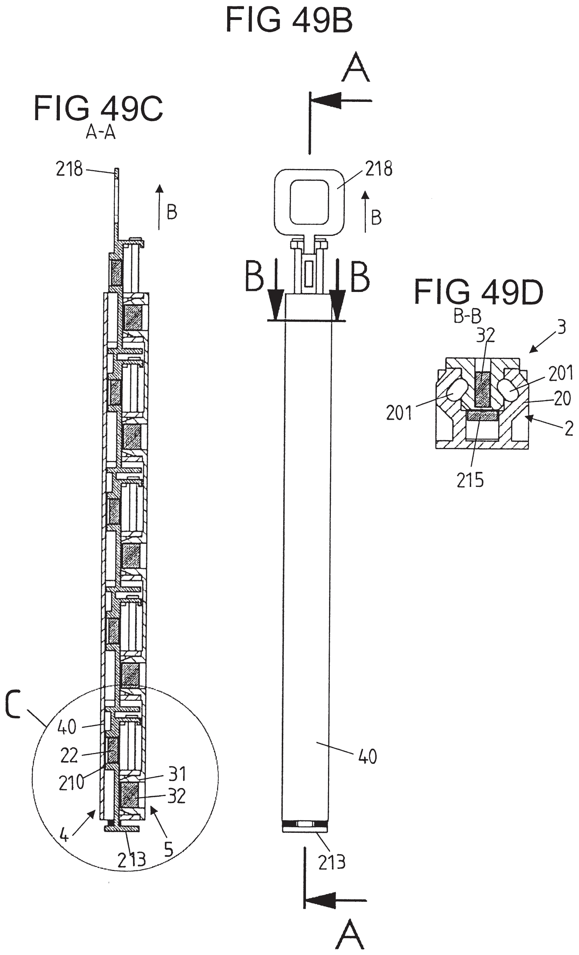

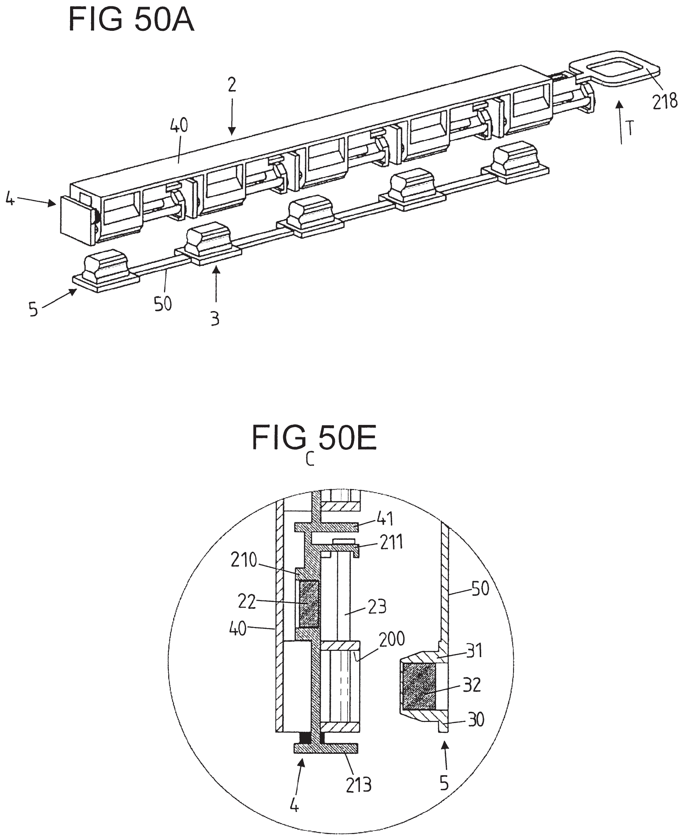

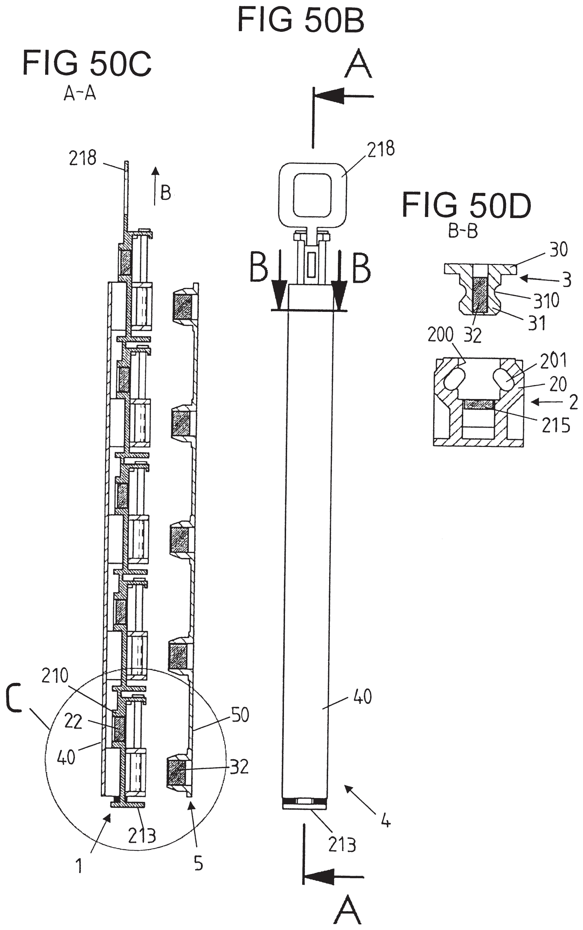

In der Schließstellung (Fig. 48A-E) greifen sämtliche Verschlussteile 2, 3 ineinander ein und sind durch Eingriff der Verriegelungselemente 23 in zugeordnete Eingriffsabschnitte 310 an den Eingriffselementen 31 der zweiten Verschlussteil 3 miteinander verriegelt (Fig. 48B). Durch gemeinsames Betätigen der Verstellteile 21 (Fig. 49A-E) werden die Verriegelungselemente 23 eines jeden ersten Verschlussteils 2 aus dem Bereich der Aufnahmeöffnungen 201 herausgeschoben, sodass die Verriegelung aufgehoben ist (Fig. 49D) und die Baugruppen 4, 5 somit entlang einer Trennrichtung T voneinander getrennt werden können (Fig. 50A-E).

Das Wirkelement 213 ist hierbei über Federelemente 214 gegenüber einem benachbarten Verschlussteil 2 federvorgespannt, sodass nach Beendigung einer Betätigung die Verstellteile 21 der Verschlussteile 2 selbsttätig in die in Fig. 47A dargestellte Ausgangsstellung zurück gelangen.

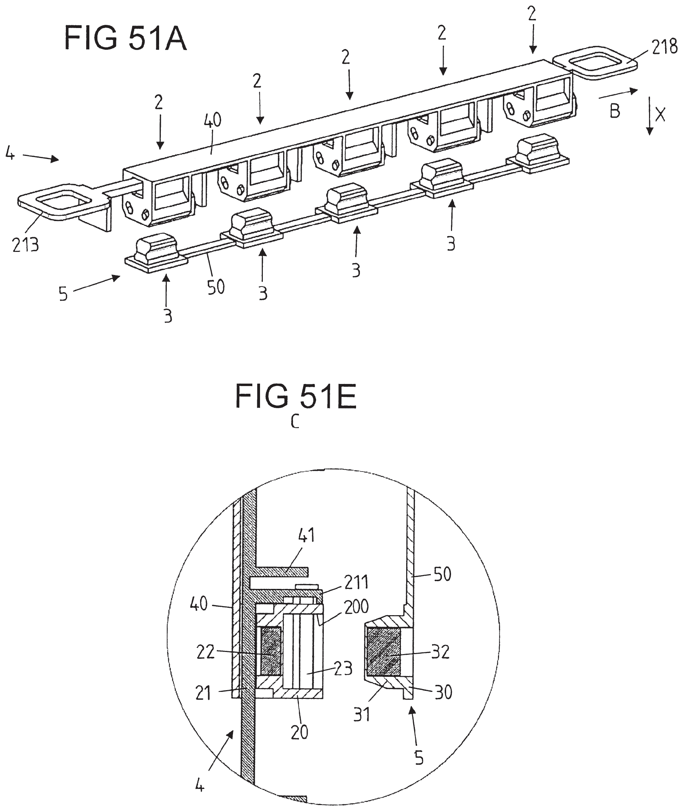

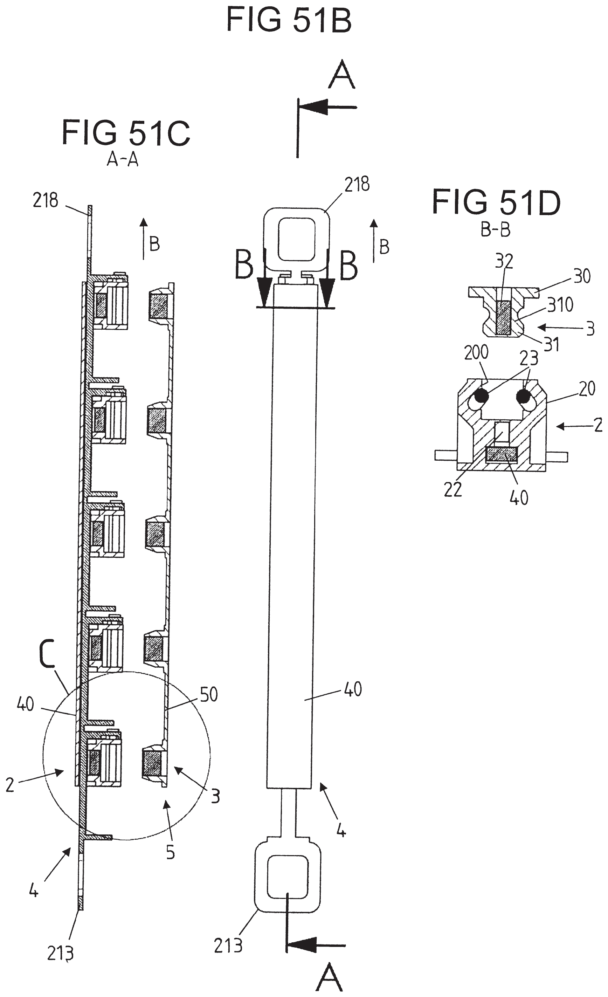

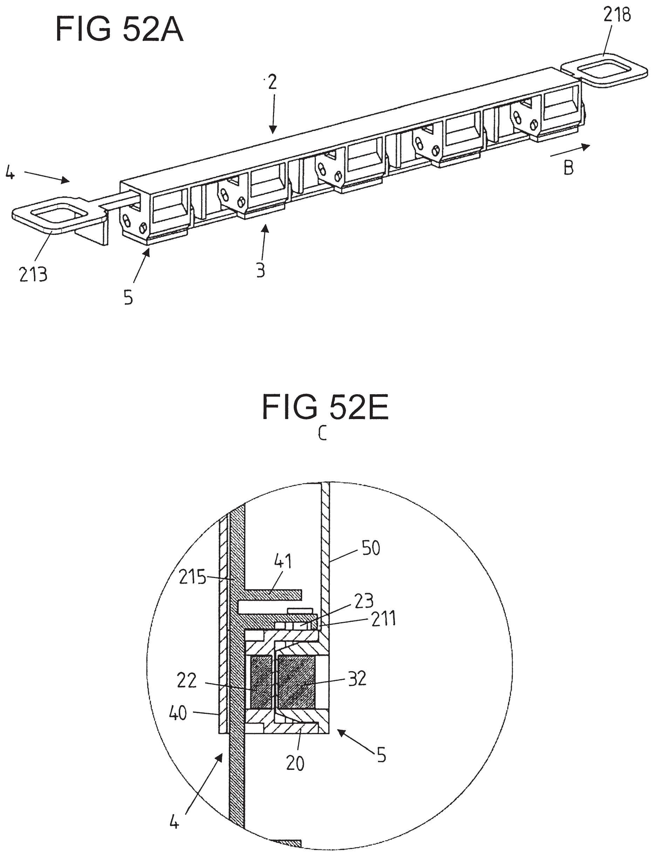

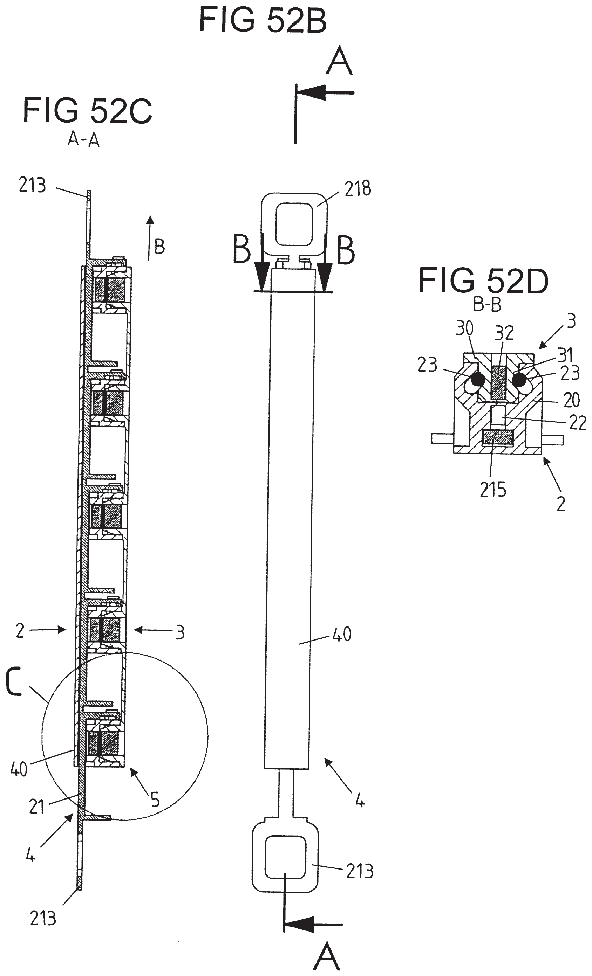

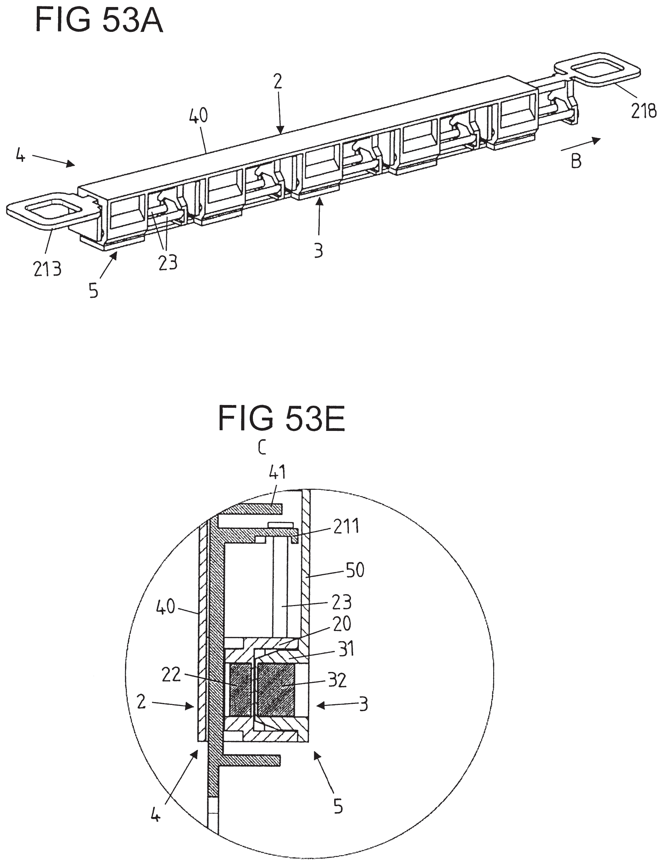

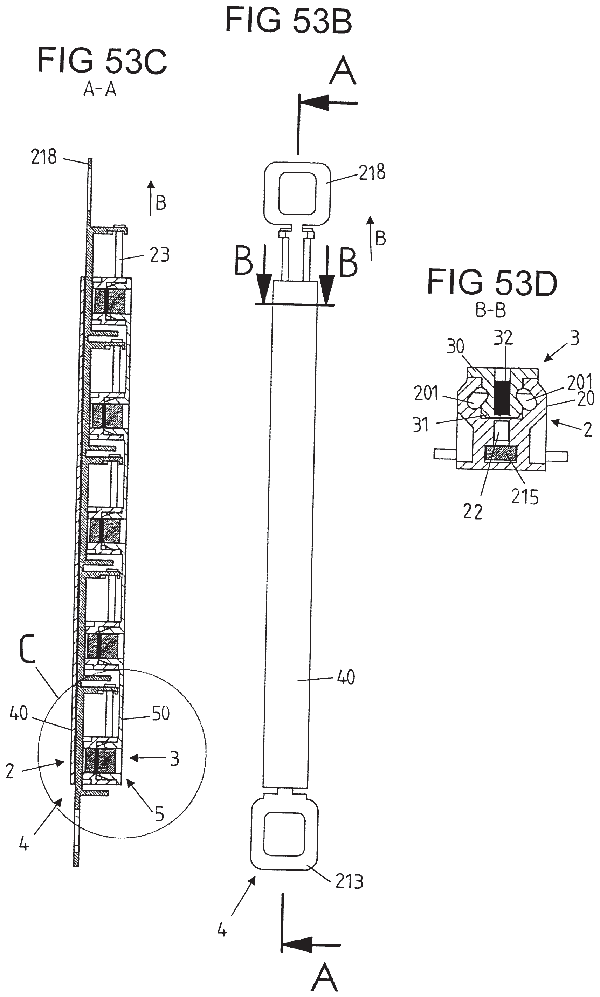

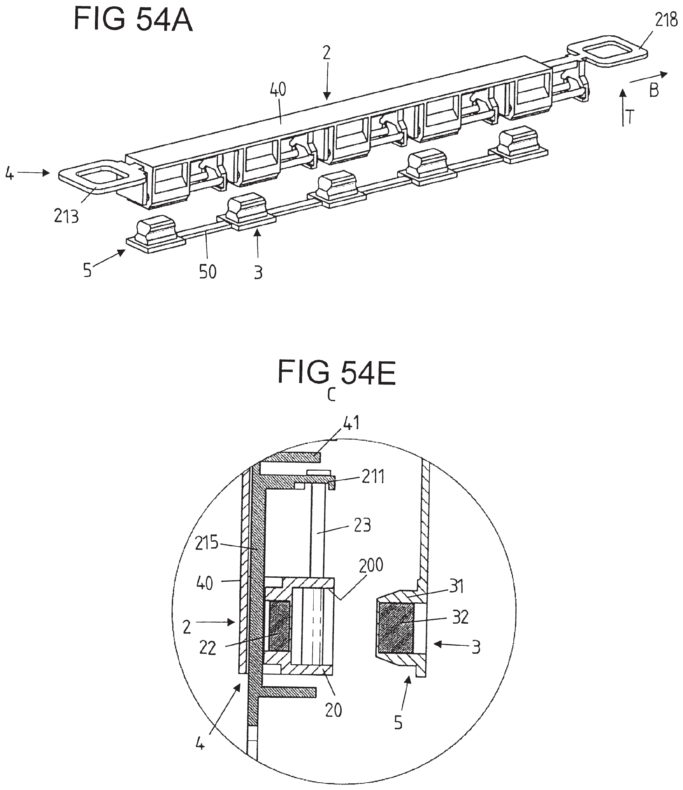

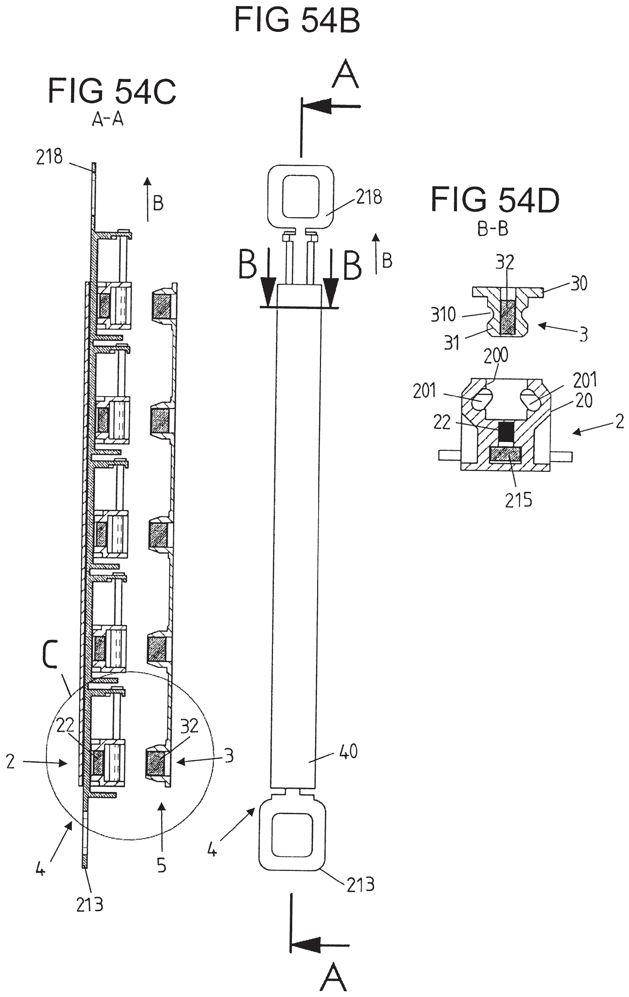

Ein in Fig. 51A-E bis Fig. 54A-E dargestelltes Ausführungsbeispiel ist funktional weitestgehend identisch dem Ausführungsbeispiel gemäß Fig. 47A-E bis Fig. 50A-E. Das Ausführungsbeispiel gemäß Fig. 51A-E bis Fig. 54A-E unterscheidet sich von dem Ausführungsbeispiel gemäß Fig. 47A-E bis Fig. 50A-E lediglich dadurch, dass bei dem Ausführungsbeispiel gemäß Fig. 51A-E bis Fig. 54A-E beidseits der Baugruppe 4 Wirkelemente 213, 218 in Form von Zugösen angeordnet sind und das Wirkelement 213 nicht gegenüber dem benachbarten Verschlussteil 2 federvorgespannt ist. Nach erfolgter Betätigung sind das Wirkelement 213 und darüber die Verstellteil 21 der Verschlussteile 2 somit entgegen der Betätigungsrichtung B in die Ausgangsstellung gemäß Fig. 51A manuell zurückzuziehen.

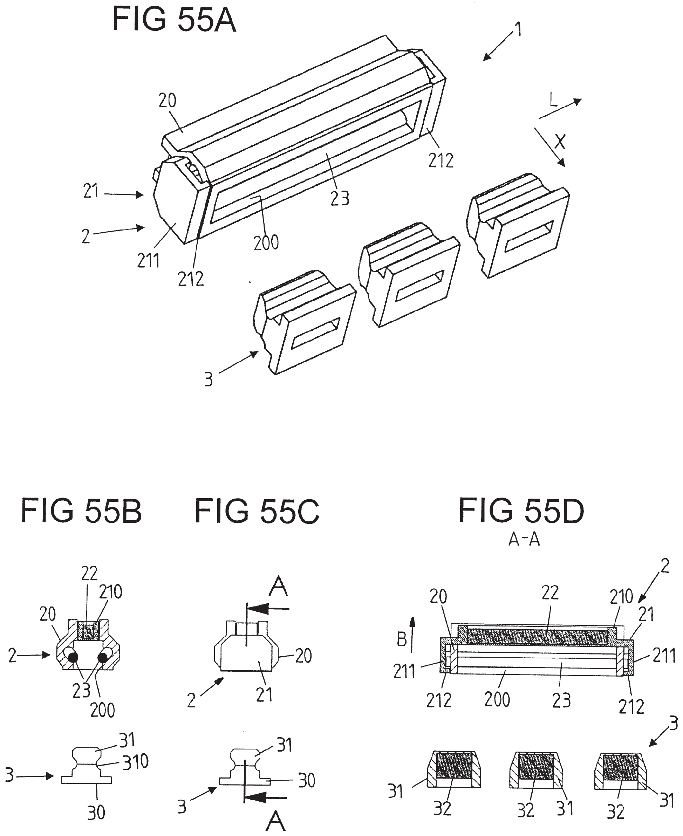

Bei einem in Fig. 55A-D bis 59A-D dargestellten Ausführungsbeispiel können an ein erstes Verschlussteil 2 mehrere (nämlich bei dem dargestellten Ausführungsbeispiel drei) zweite Verschlussteil 3 angesetzt werden, wobei die zweiten Verschlussteile 3 alleine oder gemeinsam an das erste Verschlussteil 2 angesetzt werden können.

Das erste Verschlussteil 2 ist funktional identisch dem Ausführungsbeispiel gemäß Fig. 1A-D bis Fig. 5A-D ausgebildet. Auch die zweiten Verschlussteile 3 sind jeweils identisch wie bei dem Ausführungsbeispiel gemäß Fig. 1A-D bis 5A-D ausgebildet, wobei die zweiten Verschlussteile 3 entlang der Längsrichtung L jedoch so kurz und die Eingriffsöffnung 200 im Körper 20 des ersten Verschlussteils 2 so lang sind, dass mehrere zweite Verschlussteile 3 gemeinsam in die Eingriffsöffnung 200 eingesetzt werden können.

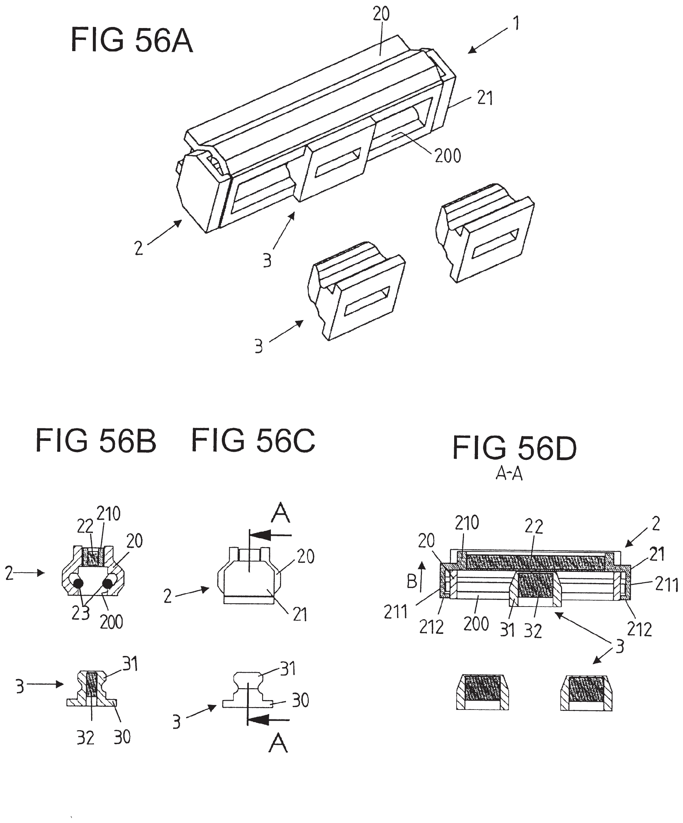

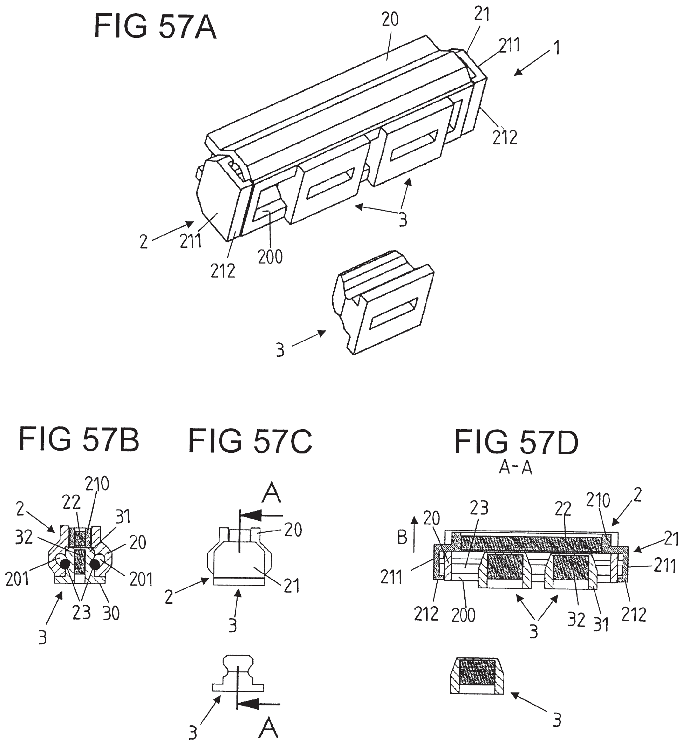

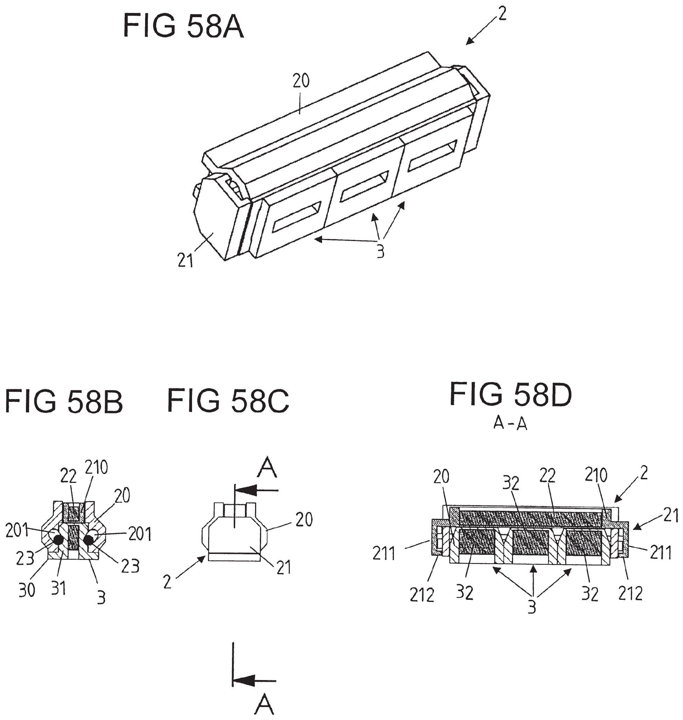

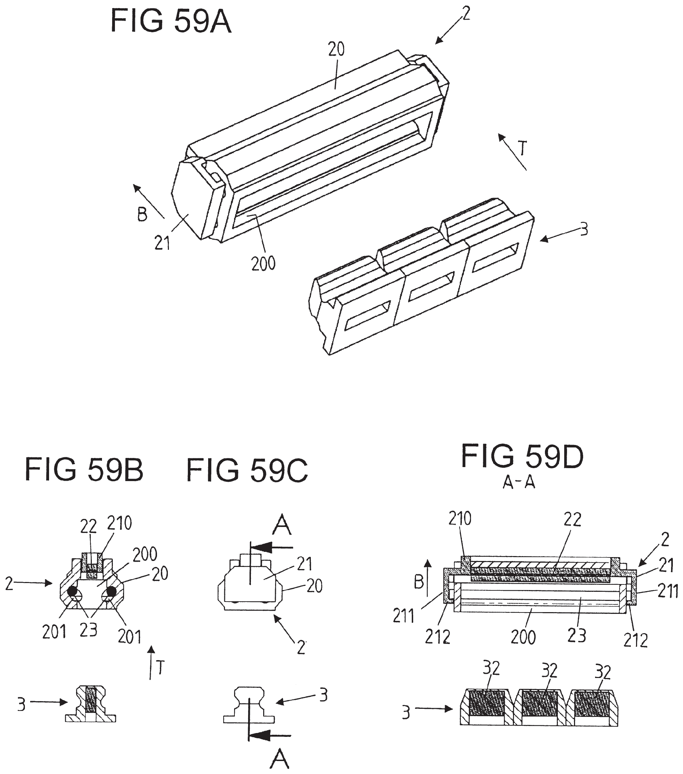

Ein jedes zweites Verschlussteil 3 kann hierbei separat in der Eingriffsöffnung 200 verriegeln (siehe Fig. 56A-D für ein eingesetztes zweites Verschlussteil 3, Fig. 57A-D für zwei eingesetzte zweite Verschlussteile 3 und Fig. 58A-D für drei eingesetzte zweite Verschlussteile 3). Die zweiten Verschlussteile 3 können hierbei durch Betätigung des Verstellteils 21 des ersten Verschlussteils 2 gemeinsam entriegelt und somit entlang der Trennrichtung T von dem ersten Verschlussteil 2 entnommen werden (Fig. 59A-D).

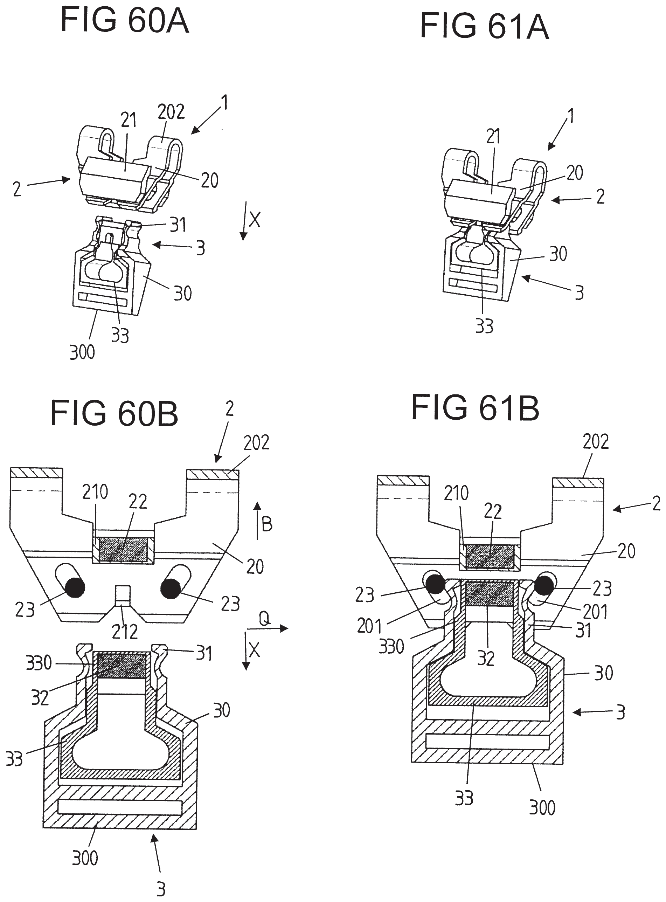

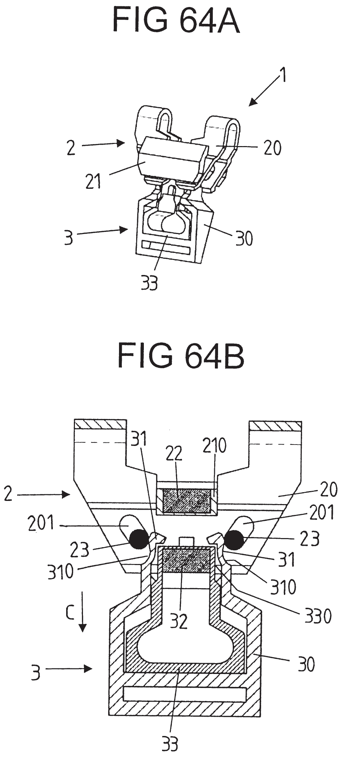

Bei einem Fig. 60A, 60B bis 64A, 64B dargestellten Ausführungsbeispiel ist das erste Verschlussteil 2 identisch dem Ausführungsbeispiel gemäß Fig. 17A, 17B ausgebildet. Im Vergleich zum Ausführungsbeispiel gemäß Fig. 17A, 17B weist das zweite Verschlussteil 3 bei dem Ausführungsbeispiel gemäß Fig. 60A, 60B bis 64A, 64B jedoch eine Basis 30 mit daran geformten, elastisch verstellbaren Eingriffsabschnitten 310 sowie ein zu der Basis 30 verstellbares Sperrstück 33 auf.

Die Magneteinrichtung 32 des Verschlussteils 3 ist bei dem dargestellten Ausführungsbeispiel an dem Sperrstück 33 angeordnet. Bei Ansetzen der Verschlussteile 2, 3 aneinander gelangen die Eingriffsabschnitte 310 in verriegelnden Eingriff mit dem Verriegelungselement in 32 des Verschlussteils 2, wobei das Sperrstück 33 aufgrund der magnetischen Wechselwirkung zwischen den Magneteinrichtungen 22, 32 der Verschlussteile 2, 3 in eine Sperrstellung gelangt und mit einem Sperrabschnitt 330 zwischen den Eingriffsabschnitten 310 zu liegen kommt, sodass eine elastische Ausweichbewegung der Eingriffsabschnitte 310 nach innen verhindert ist.

Bei der Verschlussvorrichtung 1 gemäß Fig. 60A, 60B bis 64A, 64B ist eine Entriegelung zum einen durch Betätigen des Verstellteils 21 möglich, ganz analog wie dies vorangehend beschrieben worden ist.

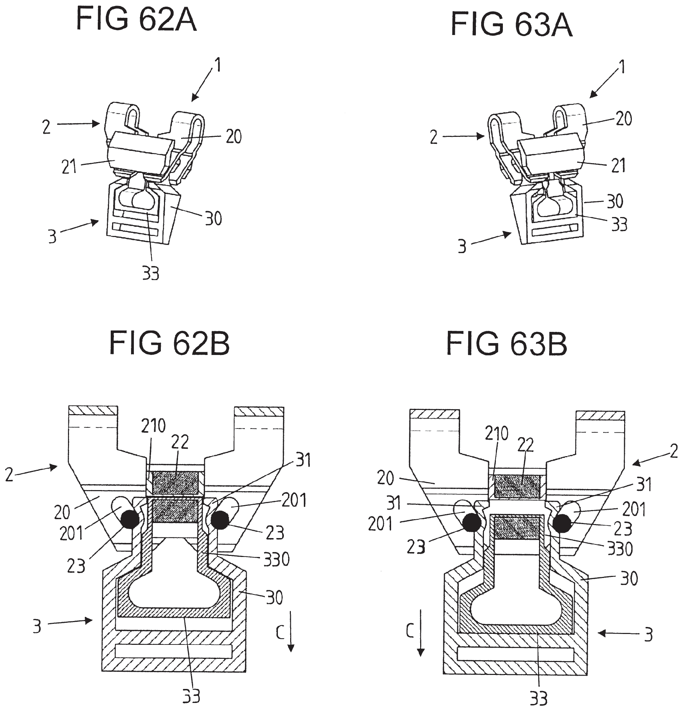

Zum anderen kann das Sperrstück 33 entlang einer Betätigungsrichtung C an der Basis 30 des Verstellteils 3 betätigt werden, wie dies im Übergang von Fig. 62A, 62B hin zu Fig. 63A, 63B dargestellt ist. Dadurch wird der Sperrabschnitt 330 gegenüber den Eingriffsabschnitten 310 zurückgezogen, sodass die Eingriffsabschnitte 310 nicht mehr gesperrt sind und elastisch nach innen ausweichen können. Dies macht ein Entnehmen der Verstellteile 2, 3 voneinander unter elastischer Auslenkung der Eingriffsabschnitte 310 möglich, wie dies in Fig. 64A, 64B dargestellt ist.

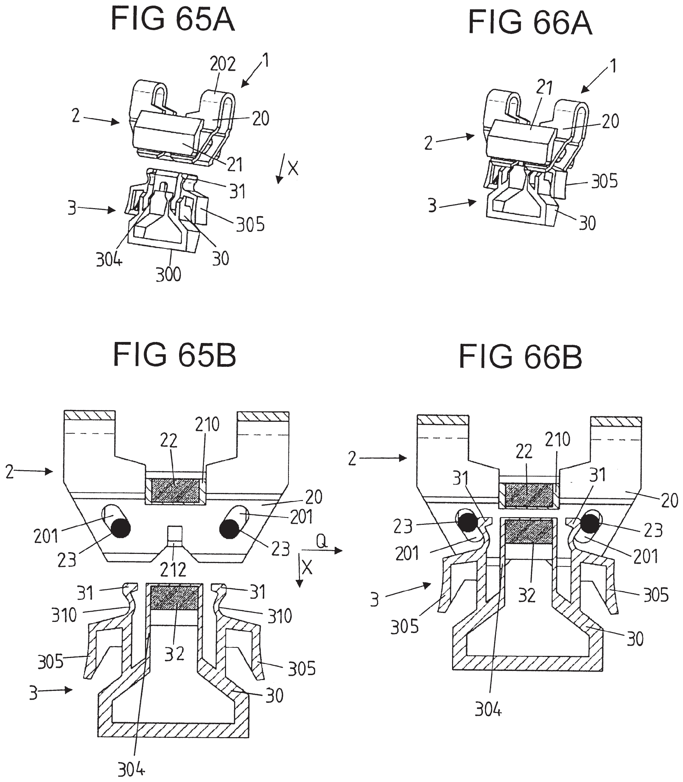

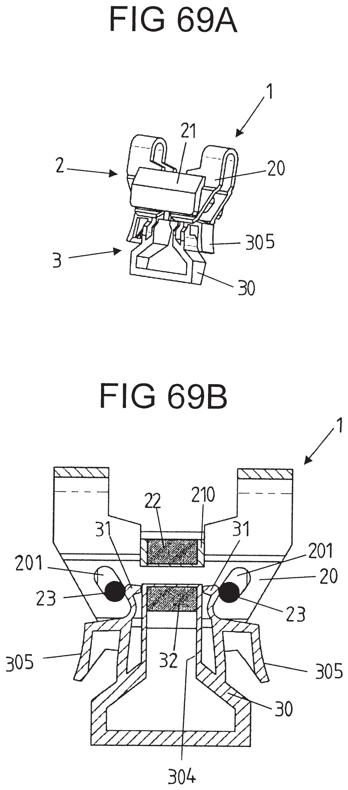

Bei dem Ausführungsbeispiel gemäß Fig. 65A, 65B bis 69A, 69B sind Eingriffsabschnitte 310 elastisch an der Basis 30 des Verstellteils 3 geformt, wobei jedoch kein Sperrstück wie bei dem vorangehend beschriebenen Ausführungsbeispiel vorgesehen ist, sondern die Eingriffsabschnitte 310 über Betätigungsabschnitte 305 händisch verformt und somit entriegelt werden können. Das Verschlussteil 3 ist hierbei integral geformt und weist einen zentralen Tragabschnitt 304 auf, an dem die Magneteinrichtung 32 angeordnet ist.

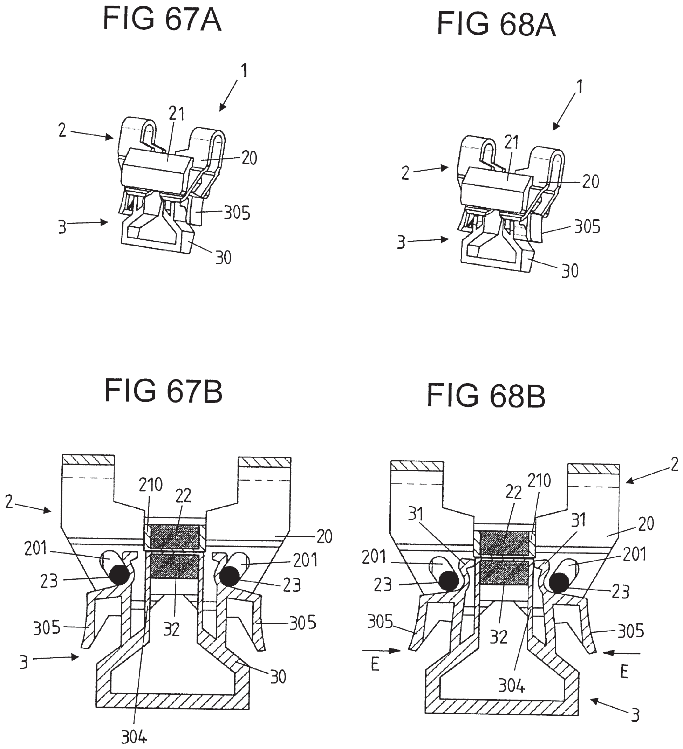

Das erste Verschlussteil 2 ist identisch wie bei dem Ausführungsbeispiel gemäß Fig. 17A, 17B ausgebildet. Zum Schließen kann das zweite Verschlussteil 3 entlang der Schließrichtung X an das erste Verschlussteil 2 angesetzt werden und ist in der Schließstellung (Fig. 67A, 67B) über die Verriegelungselemente 23 des ersten Verschlussteils 2 verriegelt. Zum Trennen der Verschlussteile 2, 3 voneinander kann ein Nutzer händisch auf die Betätigungsabschnitte 305 des zweiten Verschlussteils 3 einwirken und diese in eine Betätigungsrichtung E so nach innen drücken, dass die Eingriffsabschnitte 310 nach innen versetzt werden und die Verriegelung somit aufgehoben ist. Die Verschlussteile 2, 3 können somit voneinander getrennt werden (Fig. 69A, 69B).

Dieses Ausführungsbeispiel stellt einen Verschluss bereit, der ab einer durch die Federelastizität der verformbaren Eingriffsabschnitte 310 vorbestimmten Kraft auslöst.

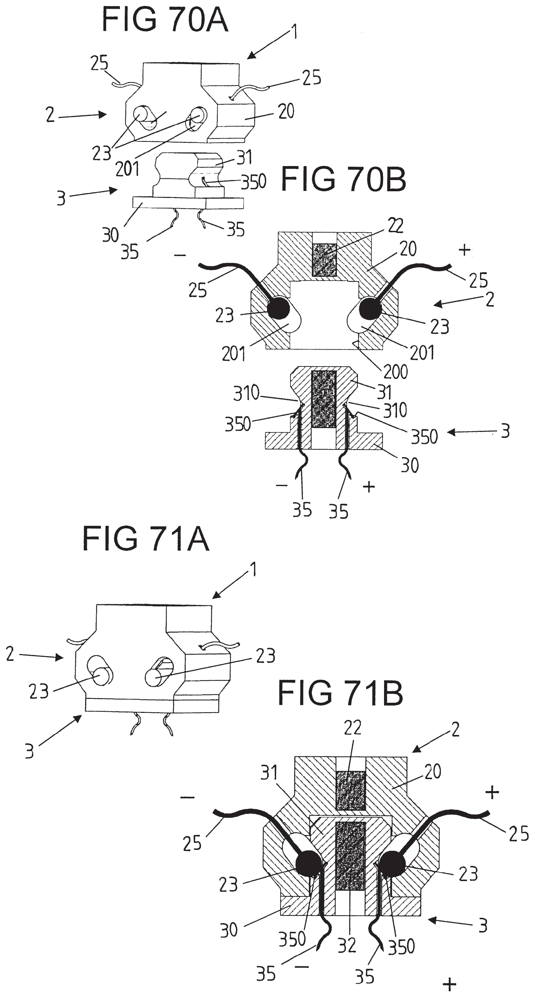

Bei einem in Fig. 70A, 70B und 71A, 71B dargestellten Ausführungsbeispiel einer Verschlussvorrichtung 1 weist ein erstes Verschlussteil 2 einen Körper 20 mit einer darin geformten Eingriffsöffnung 200 und in Aufnahmeöffnungen 201 aufgenommenen Verriegelungselementen 23 auf, analog wie dies anhand des Ausführungsbeispiels gemäß Fig. 1A-D bis Fig. 5A-D beschrieben worden ist, wobei bei dem Ausführungsbeispiel gemäß Fig. 70A, 70B, 71A, 71B das erste Verschlussteil 2 kein Verstellteil 21 aufweist und die Magneteinrichtung 22 an dem Körper 20 angeordnet ist. Ein zweites Verschlussteil 3 ist funktional analog wie bei dem Ausführungsbeispiel gemäß Fig. 1A-D bis Fig. 5A-D ausgebildet.

Bei dem Ausführungsbeispiel gemäß Fig. 70A, 70B, 71A, 71B sind elektrische Anschlüsse 25 mit den Verriegelungselementen 23 verbunden. Im Bereich der Eingriffsabschnitte 310 des zweiten Verschlussteils 3 sind elektrische Kontaktelemente 350 angeordnet, die mit elektrischen Anschlüssen 35 verbunden sind. In der Schließstellung (Fig. 71A, 71B) liegen die elektrisch leitfähigen Verriegelungselemente 23 an den Kontaktelementen 350 an, sodass die Anschlüsse 25, 35 elektrisch miteinander verbunden sind und in der Schließstellung somit eine elektrische Verbindung hergestellt ist.

Durch Trennen der Verschlussteile 2, 3 voneinander kann die elektrische Verbindung aufgehoben werden.

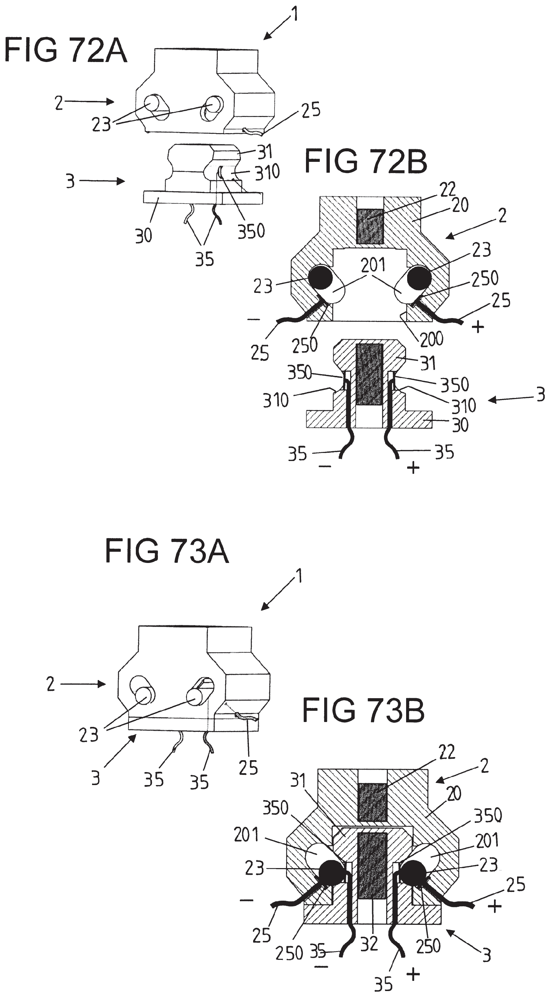

Bei einem in Fig. 72A, 72B, 73A, 73B dargestellten Ausführungsbeispiel sind Anschlüsse 25, im Vergleich zum Ausführungsbeispiel gemäß Fig. 70A, 70B und 71A, 1B, nicht mit den Verriegelungselementen 23 verbunden, sondern mit Kontaktelementen 250 im Bereich der Aufnahmeöffnungen 201. Die Kontaktelemente 350 sind hierbei derart angeordnet, dass in der Schließstellung der Verschlussvorrichtung 1 (Fig. 73A, 73B) die elektrisch leitfähigen Verriegelungselemente 23 an den Kontaktelementen 250 des ersten Verschlussteils 2 und auch an Kontaktelementen 350 des zweiten Verschlussteils 3 anliegen, sodass über die Verriegelungselemente 23 eine elektrische Verbindung zwischen den Anschlüssen 25, 35 hergestellt ist, wie dies aus Fig. 73B ersichtlich ist.

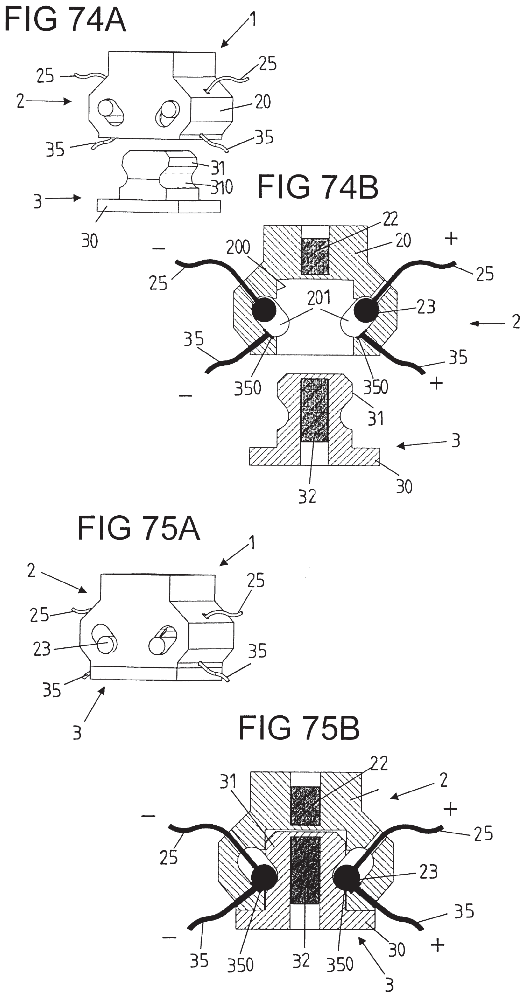

Bei einem in Fig. 74A, 74B, 75A, 75B dargestellten Ausführungsbeispiel sind elektrische Anschlüsse 25, 35 ausschließlich an dem ersten Verschlussteil 2 angeordnet, wobei eine elektrische Verbindung in der Schließstellung in Wechselwirkung mit dem zweiten Verschlussteil 3 hergestellt wird. So sind Anschlüsse 25 mit den Verriegelungselementen 23 verbunden. In der Schließstellung (Fig. 75B) liegen die Verriegelungselemente 23 hierbei an Kontaktelementen 350 im Bereich der nach innen gewandten Enden der Aufnahmeöffnung 201 an, sodass darüber eine elektrische Verbindung zwischen den Anschlüssen 25, 35 hergestellt ist.

In getrennter Stellung befinden sich die Verriegelungselemente 23 in der in Fig. 74B dargestellten Stellung, aufgrund der magnetischen Wechselwirkung mit der Magneteinrichtung 22 des ersten Verschlussteils 2. In der getrennten Stellung ist die elektrische Verbindung zwischen den Anschlüssen 25, 35 somit aufgehoben.

Möglich ist auch eine Ausführungsform mit umgedrehter Funktionalität: die Kontaktelemente 250 sind so in der Aufnahmeöffnung 201 angeordnet, dass in der Offenstellung der Verriegelungselemente 23 diese an den Kontaktelementen 250 anliegen. Somit kann die Offenstellung elektrisch detektiert werden.

Es ist darüber hinaus ein Ausführungsbeispiel möglich, an dem in jeder Aufnahmeöffnung 201 jeweils zwei Kontaktelemente so angeordnet sind, dass das eine der Kontaktelemente die Offenstellung elektrisch detektiert und das andere die Schließstellung.

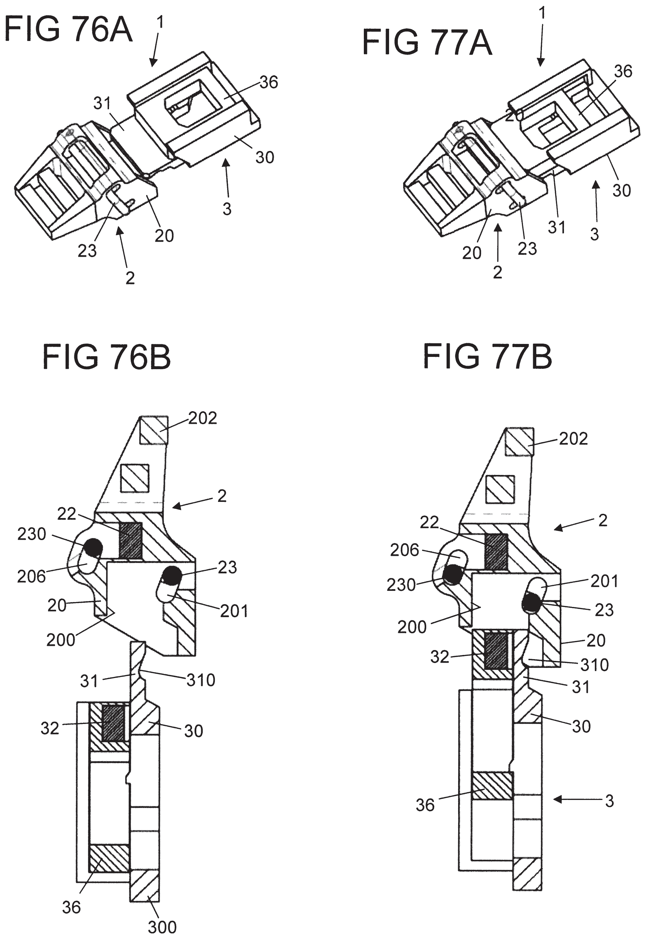

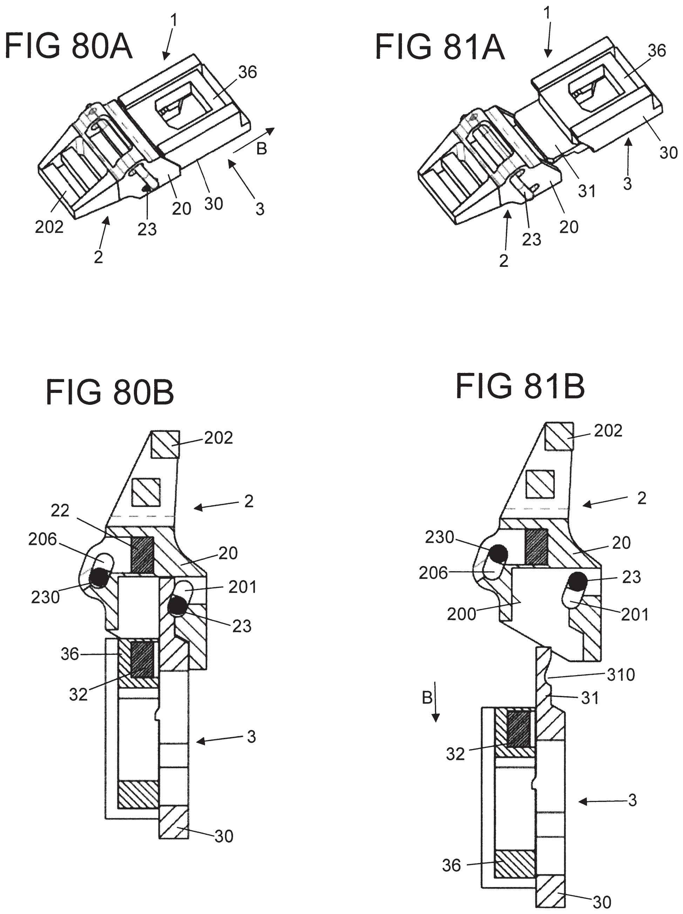

Bei einem in Fig. 76A, 76B bis 81A, 81B dargestellten Ausführungsbeispiel weist ein erstes Verschlussteil 2 einen Körper 20 mit einer darin geformten Eingriffsöffnung 200 auf, mit der ein zweites Verschlussteil 3 mit einem an einer Basis 30 geformten Eingriffselement 31 in Eingriff gebracht werden kann.

Das erste Verschlussteil 2 weist ein Verriegelungselement 23 auf, das als Ringelement (zum Beispiel als geöffneter C-Ring oder als geschlossener D-Ring) ausgebildet ist und mit einem Abschnitt in einer schräg zur Schließrichtung X erstreckten Aufnahmeöffnung 201 und zudem mit einem parallel erstreckten Führungsabschnitt 231 an einer Führungsöffnung 206 am Körper 20 geführt ist.

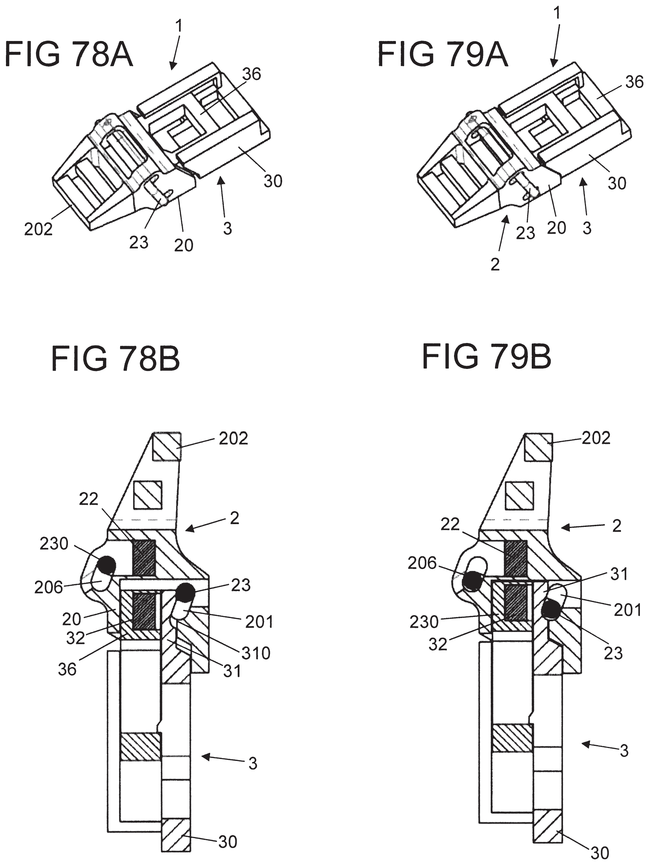

Zum Verbinden der Verschlussteile 2, 3 miteinander werden die Verschlussteile 2, 3 so aneinander angesetzt, dass das Eingriffselement 31 des zweiten Verschlussteils 3 in Eingriff mit der Eingriffsöffnung 200 des ersten Verschlussteils 2 gelangt und die Verschlussteile 2, 3 durch Eingriff des Verriegelungselements 23 in den an dem Eingriffselement 31 geformten Eingriffsabschnitt 310 miteinander verriegelt werden, wie dies aus dem Übergang von Fig. 76A, 76B hin zu Fig. 79A, 79B ersichtlich ist.

Das erste Verschlussteil 2 weist an dem Körper 20 eine Magnetanordnung 22 auf. An dem zweiten Verschlussteil 3 ist demgegenüber ein Verstellteil 36 angeordnet, das entlang einer Betätigungsrichtung B an der Basis 30 des Verstellteils 3 verschiebbar ist und eine Magneteinrichtung 32 trägt. Aufgrund der magnetischen Wechselwirkung werden die Verschlussteile 2, 3 bei Ansetzen aneinander in Eingriff miteinander gezogen, wobei aufgrund der magnetischen Anziehungskraft der Magneteinrichtung 32 das Verriegelungselement 23 in die verriegelnde Stellung gemäß Fig. 79B gebracht und dort gehalten wird. In der Schließstellung sind die Verschlussteile 2, 3 somit miteinander verriegelt.

Die Verriegelung zwischen den Verschlussteilen 2, 3 kann bei dem dargestellten Ausführungsbeispiel dadurch gelöst werden, dass das Verstellteil 36 in die Betätigungsrichtung B zu der Basis 30 des Verschlussteils 3 verschoben wird, wie dies in Fig. 80A, 80B dargestellt ist. Dadurch kann der Verschluss auf mehrere mögliche Wirkungen entriegelt werden. Entweder wird durch das Entfernen der Magneteinrichtung 32 von dem Verriegelungselement 23 das Verriegelungselement 23 magnetisch von der Magneteinrichtung 22 des Verschlussteils 2 angezogen, sodass das Verriegelungselement 23 in die in Fig. 81A, 81B dargestellte entriegelte Stellung gelangt und die Verschlussteile 2, 3 somit entriegelt sind. Zusätzlich oder alternativ wird durch das Entfernen des Verstellteils 36 aus der Eingriffsöffnung 200 ein Außer-Eingriff-Bringen des Eingriffsabschnitts 310 von dem Verriegelungselement 23 möglich. Die Verschlussteile 2, 3 können somit, wie in Fig. 81A, 81B dargestellt, voneinander getrennt werden.

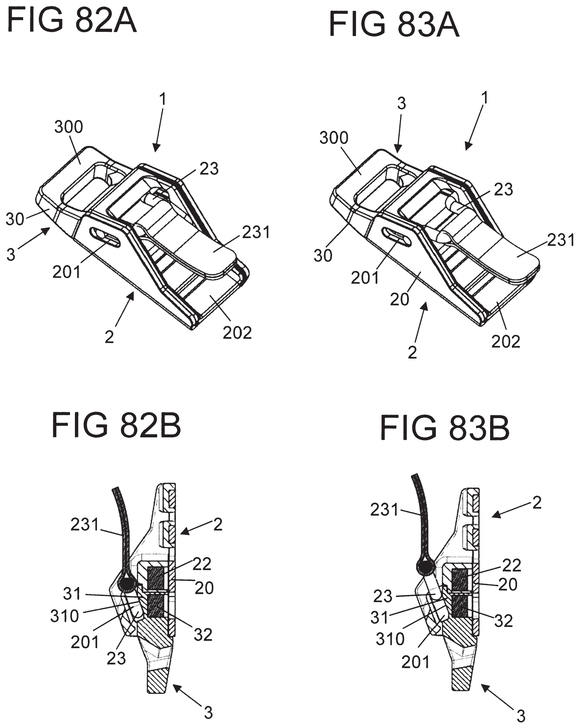

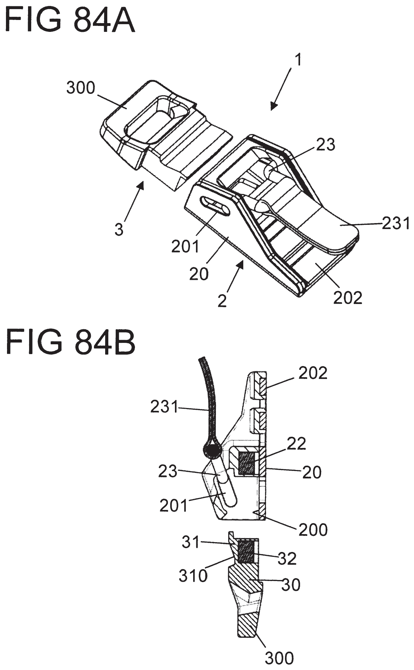

Bei einem in Fig. 82A, 82B bis 84A, 84B dargestellten Ausführungsbeispiel weist ein erstes Verschlussteil 2 einen Körper 20 mit einer darin geformten Eingriffsöffnung 201 und einer an dem Körper 20 angeordneten Magneteinrichtung 22 auf. An dem Körper 20 ist eine Aufnahmeöffnung 201 geformt, in der ein gebogenes Verriegelungselement 23 verschiebbar aufgenommen ist. Ein zweites Verschlussteil 3 weist eine Basis 30 und ein starr daran geformtes Eingriffselement 31 auf, das mit der Eingriffsöffnung 200 des ersten Verschlussteils 2 zum Verbinden der Verschlussteile 2, 3 miteinander in Eingriff gebracht werden kann.

In einer Schließstellung (Fig. 82A, 2B) liegt das Eingriffselement 31 des zweiten Verschlussteils 3 in der Eingriffsöffnung 200 des ersten Verschlussteils 2 ein, und die Verschlussteile 2, 3 sind durch Eingriff des Verriegelungselements 23 in den zugeordneten Eingriffsabschnitt 310 am Eingriffselement 31 miteinander verriegelt. Das Verriegelungselement 23 wird hierbei durch die Magneteinrichtung 32 des Verschlussteils 3 in Eingriff mit dem Eingriffsabschnitt 13 gezogen und dort verriegelnd gehalten.

Das Verriegelungselement 23 ist mit einer Lasche 231 verbunden, an der ein Nutzer ziehen kann, um das Verriegelungselement 23 zu entriegeln, wie dies im Übergang von Fig. 82A, 82B hin zu Fig. 83A, 83B ersichtlich ist. Nach Entriegeln können die Verschlussteile 2, 3 voneinander getrennt werden, wie dies aus Fig. 84A, 84B ersichtlich ist.

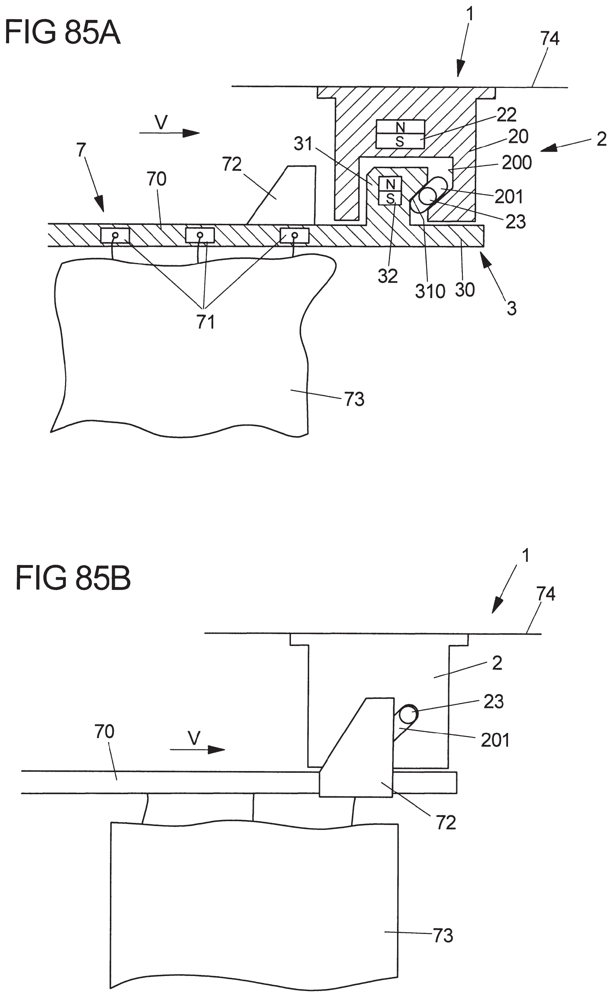

Fig. 85A und 85B zeigen schematische Ansichten eines weiteren Ausführungsbeispiels einer Verschlussvorrichtung 1, die bei diesem Ausführungsbeispiel zum Verbinden einer Verbindungsbaugruppe 7 mit einer übergeordneten Baugruppe, in diesem Fall einer Wandung 74, dient.

Die Verbindungsbaugruppe 7 kann beispielsweise als Duschvorhang oder als anderer Vorhang (Gardine) ausgebildet sein und weist ein Stangenelement 70 auf, das über die Verschlussvorrichtung 1 mit einer zugeordneten Wandung 74 verbunden werden soll. Die Verbindungsbaugruppe 7 weist einen Behang 73 auf, der über Gleiter 71 an dem Stangenelement 70 entlang einer Verstellrichtung V verstellbar geführt ist und somit geöffnet und geschlossen werden kann.

Bei dem dargestellten Ausführungsbeispiel weist die Verschlussvorrichtung 1 ein erstes Verschlussteil 2 mit einem Körper 20 und einer darin geformten Eingriffsöffnung 200 auf, in die in einer Schließstellung ein an einer Basis 30 geformtes Eingriffselement 31 eines zweiten Verschlussteils 3 eingreift. Die Basis 30 ist hierbei durch ein Ende des Stangenelements 70 der Verbindungsbaugruppe 7 geformt.

An dem Körper 20 ist, analog wie vorangehend für unterschiedliche Ausführungsbeispiele beschrieben, eine Aufnahmeöffnung 201 geformt, in der ein Verriegelungselement 23 in Form einer bolzenförmigen Stange aufgenommen ist. In einer Schließstellung (Fig. 85A) steht das Verriegelungselement 23 mit einem Eingriffsabschnitt 310 an dem Eingriffselement 31 des zweiten Verschlussteils 3 verriegelnd in Eingriff, sodass das zweite Verschlussteil 3 an dem ersten Verschlussteil 2 gehalten und darüber das Stangenelement 70 der Verbindungsbaugruppe 7 über die Verschlussvorrichtung 1 mit der Wandung 74 fest verbunden ist.

Die Verschlussteile 2, 3 weisen jeweils eine Magneteinrichtung 22, 32 auf, die magnetisch anziehend zusammenwirken und somit, analog wie vorangehend beschrieben, das Ansetzen der Verschlussteile 2, 3 aneinander magnetisch unterstützen. Die Magneteinrichtung 32 wirkt zudem mit dem Verriegelungselement 23 zusammen und zieht das Verriegelungselement 23 in verriegelnden Eingriff mit dem Eingriffsabschnitt 310, sodass darüber das Verriegelungselement 23 auch in seiner verriegelnden Position gehalten ist.

An dem letzten, der Verschlussvorrichtung 1 zugewandten Gleiter 71 der Verbindungsbaugruppe 7 ist bei dem dargestellten Ausführungsbeispiel ein Betätigungsstück 72 angeordnet, das beim Schließen des Behangs 73 in die Verstellrichtung V der Verschlussvorrichtung 1 angenähert wird und so zu der Verschlussvorrichtung 1 verstellt werden kann, dass das Betätigungsstück 72 an dem ersten Verschlussteil 2 auf das Verriegelungselement 23 einwirkt und das Verriegelungselement 23 so in der Aufnahmeöffnung 201 verstellt, dass die Verschlussvorrichtung 1 entriegelt wird, wie dies in Fig. 85B dargestellt ist. In dieser Stellung des Betätigungsstücks 72 ist die Verriegelung zwischen den Verschlussteilen 2, 3 somit gelöst, wobei die Verschlussteile 2, 3 zunächst noch durch die Magneteinrichtungen 22, 32 magnetisch aneinandergehalten sind, durch einen Nutzer aber außer Eingriff gezogen werden können.

Die Entriegelung erfolgt bei diesem Ausführungsbeispiel somit durch ein Betätigungsstück 72, das ein Verstellteil verwirklicht, das von den Verschlussteilen 2, 3 unabhängig zu bewegen ist, aber zum Entriegeln auf das Verriegelungselement 23 einwirken kann, wie dies aus Fig. 85B ersichtlich ist.

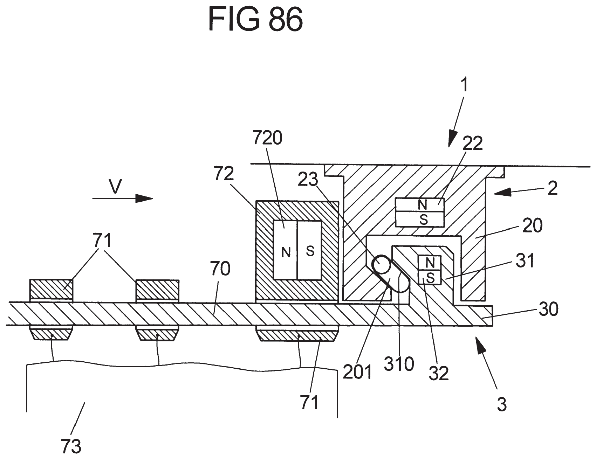

Bei einem schematisch in Fig. 86 dargestellten Ausführungsbeispiel ist, in Modifikation des Ausführungsbeispiels gemäß Fig. 85A, 85B, an dem letzten, der Verschlussrichtung 1 zugewandten Gleiter 71 ein Betätigungsstück 72 angeordnet, das eine Magneteinrichtung 720 in Form eines Permanentmagneten aufweist. Bei diesem Ausführungsbeispiel wirkt das Betätigungsstück 72 magnetisch mit dem Verriegelungselement 23 zusammen derart, dass bei Annäherung an die Verschlussrichtung 1 die Magnetkräfte der Magneteinrichtung 720 des Betätigungsteils 72 die Magnetkräfte insbesondere der Magneteinrichtung 32 des zweiten Verschlussteils 3 übersteigen und somit das Verriegelungselement 23 bei Annäherung des Betätigungsteils 72 an die Verschlussvorrichtung 1 aus dem verriegelnden Eingriff mit dem Eingriffsabschnitt 310 des zweiten Verschlussteils 3 gezogen wird, wie dies aus Fig. 86 ersichtlich ist. Über das Betätigungsstück 72 kann bei dem Ausführungsbeispiel gemäß Fig. 86 die Verschlussvorrichtung 1 somit magnetisch entriegelt werden.

Ansonsten ist das Ausführungsbeispiel gemäß Fig. 86 vergleichbar dem Ausführungsbeispiel gemäß Fig. 85A und 85B, sodass auch auf die vorangehenden Ausführungen hierzu verwiesen werden soll.

In anderer Ausgestaltung kann das Betätigungsstück 72 eine Magneteinrichtung 720 aufweisen, die als ferromagnetischer Anker ausgebildet ist und von den Magneteinrichtungen 22, 32 der Verschlussvorrichtung 1 angezogen wird. eine Entriegelung kann in diesem Fall beispielsweise mechanisch wie bei dem Ausführungsbeispiel gemäß Fig. 85A, 85B erfolgen.

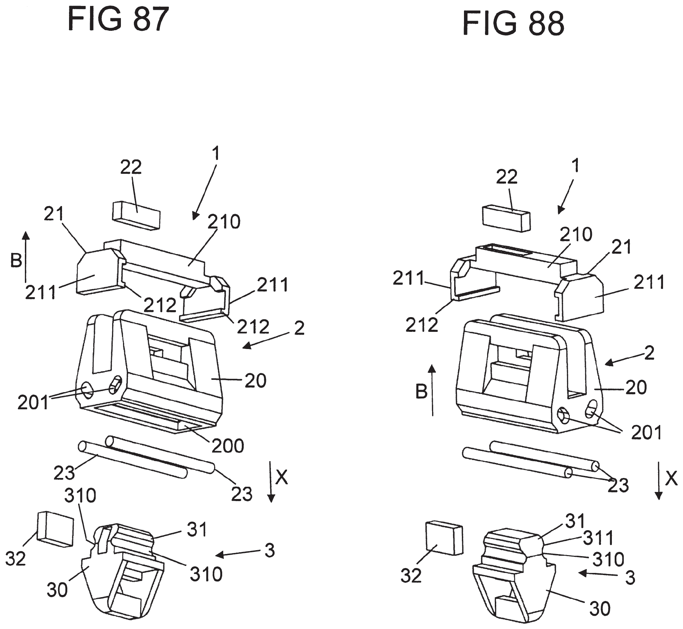

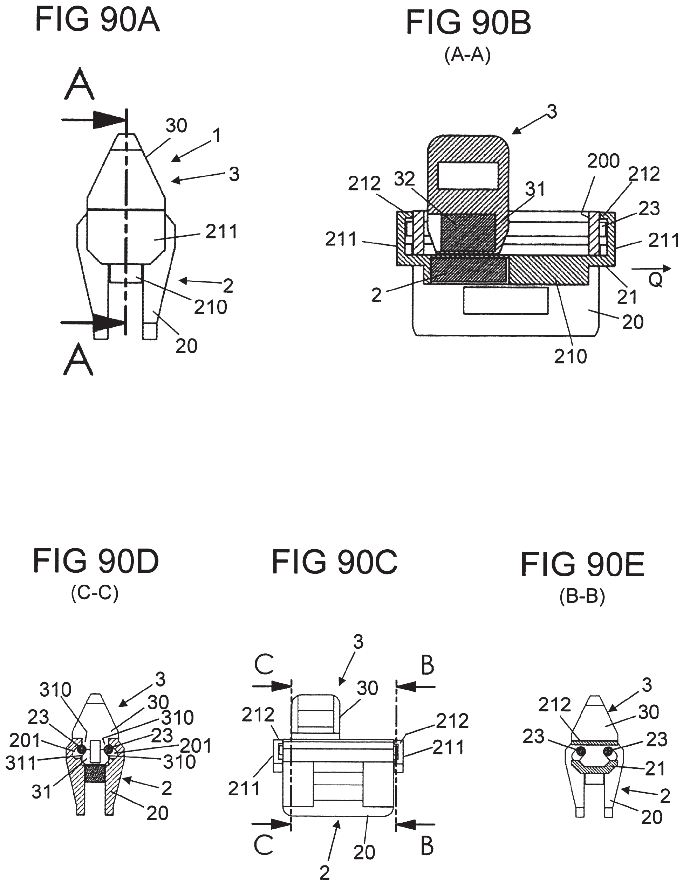

In einem in Fig. 87 bis 93A-93E dargestellten Ausführungsbeispiel weist ein erstes Verschlussteil 2 einen Körper 20 auf, an dem ein Verstellteil 21 entlang einer Betätigungsrichtung B verstellbar angeordnet ist. Der Körper 20 bildet eine Eingriffsöffnung 200 aus, über die das Verschlussteil 2 mit einem zweiten Verschlussteil 3 entlang einer Schließrichtung X in Eingriff gebracht werden kann, sodass in einer Schließstellung (Fig. 90A bis 90E) die Verschlussteile 2, 3 verriegelnd aneinander gehalten sind.

An dem Verschlussteil 2 sind zwei stabförmige Verriegelungselemente 23 angeordnet und dazu in Aufnahmeöffnungen 201 an beidseitigen Stirnseiten des Körpers 20 aufgenommen. Die Aufnahmeöffnungen 201 sind schräg zur Schließrichtung X gestellt und dabei als Langlöcher ausgebildet, sodass die Verriegelungselemente 23 in einer senkrecht zur Längserstreckungsrichtung der Verriegelungselemente 23 gerichteten Ebene verstellbar sind.

Die Verriegelungselemente 23 ragen beidseits mit ihren Enden über den Körper 20 hinaus. Das Verstellteil 21 weist über einen Zwischenabschnitt 210 miteinander verbundene Flankenabschnitte 211 auf, an denen Betätigungselemente 212 in Form von nach innen vorstehenden Kanten gebildet sind, über die das Verstellteil 21 mit den Enden der Verriegelungselemente 23 in Eingriff steht. Durch Betätigen des Verstellteils 21 in die Betätigungsrichtung B relativ zu dem Körper 20 des Verschlussteils 2 können die Verriegelungselemente 23 in den Aufnahmeöffnungen 201 verstellt werden, insbesondere um die Verriegelungselemente 23 entlang der Aufnahmeöffnungen 201 nach außen zu bewegen.

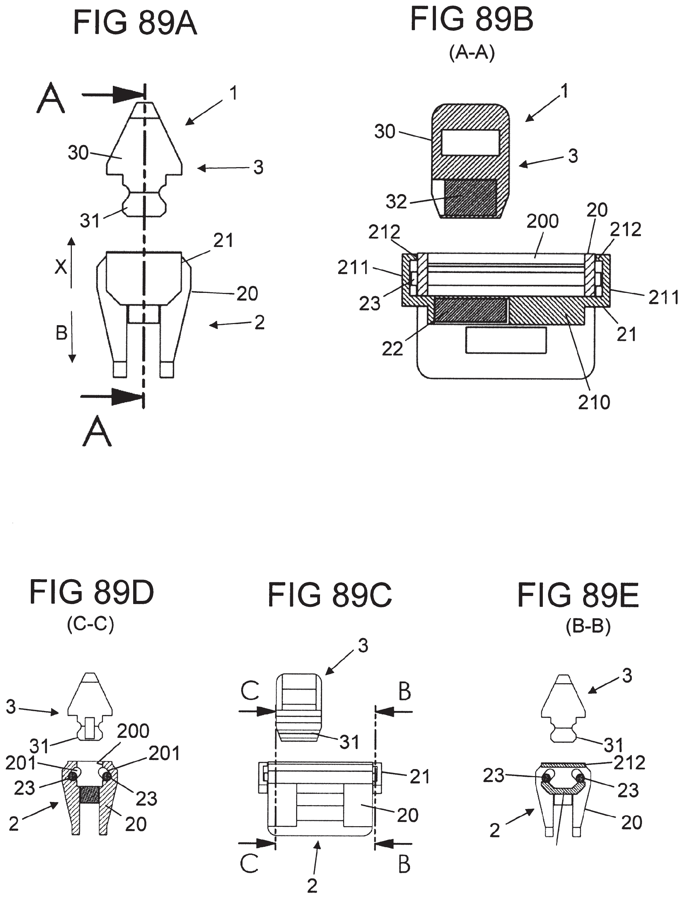

Zum Schließen der Verschlussvorrichtung 1 können die Verschlussteile 2, 3 entlang der Schließrichtung X, wie aus Fig. 89A bis 89E ersichtlich, aneinander angesetzt werden. In der Schließstellung, dargestellt in Fig. 90A bis 90E, greift das Verschlussteil 3 mit einem daran geformten Eingriffselement 31 in die Eingriffsöffnung 200 des Körpers 20 des Verschlussteils 2 ein, wobei die Verriegelungselemente 23 in Eingriffsabschnitte 310 in Form von Vertiefungen beidseits des Eingriffselements 31 eingreifen, wie dies aus Fig. 90D und 90E ersichtlich ist.

Die Verschlussteile 2, 3 weisen jeweils ein Magnetelement 22, 32 auf, die magnetisch anziehend zusammenwirken, sodass das Schließen der Verschlussvorrichtung 1 unter magnetischer Anziehung und somit selbsttätig erfolgen kann.

Zudem sind auch die Verriegelungselemente 23 magnetisch und werden somit beim Schließen der Verschlussrichtung 1 aufgrund der Wechselwirkung mit dem Magnetelement 32 des Verschlussteils 3 in Eingriff mit den Eingriffsabschnitten 310 am Eingriffselement 31 des Verschlussteils 3 belastet.

Bei dem dargestellten Ausführungsbeispiel ist die Eingriffsöffnung 200 am Körper 20 des Verschlussteils 2 entlang einer Querrichtung Q derart längserstreckt, dass das Verschlussteil 3 in der Eingriffsöffnung 200 entlang der Querrichtung Q bewegt werden kann. Durch Bewegen entlang der Querrichtung Q kann die Verschlussvorrichtung 1 hierbei geöffnet werden.

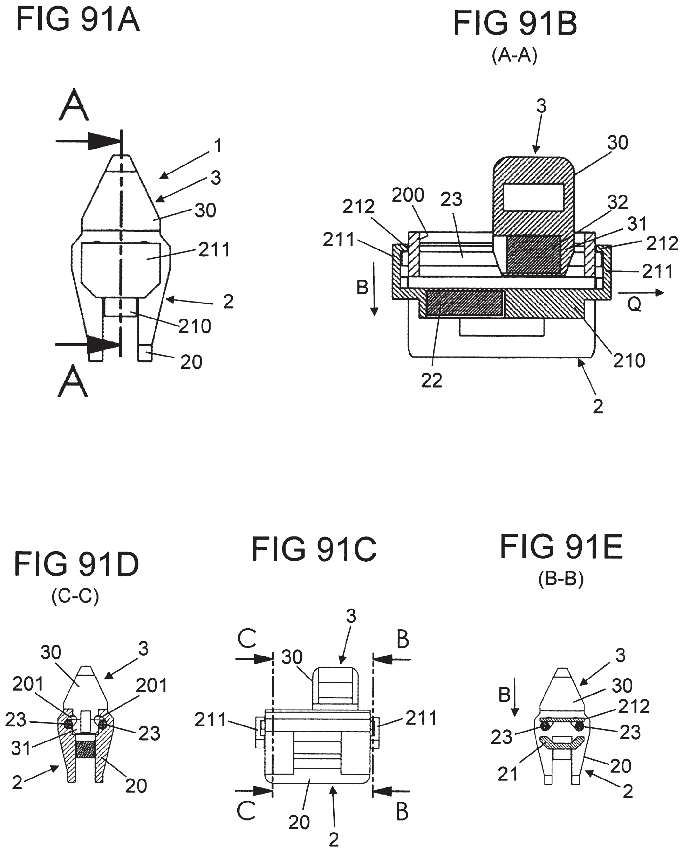

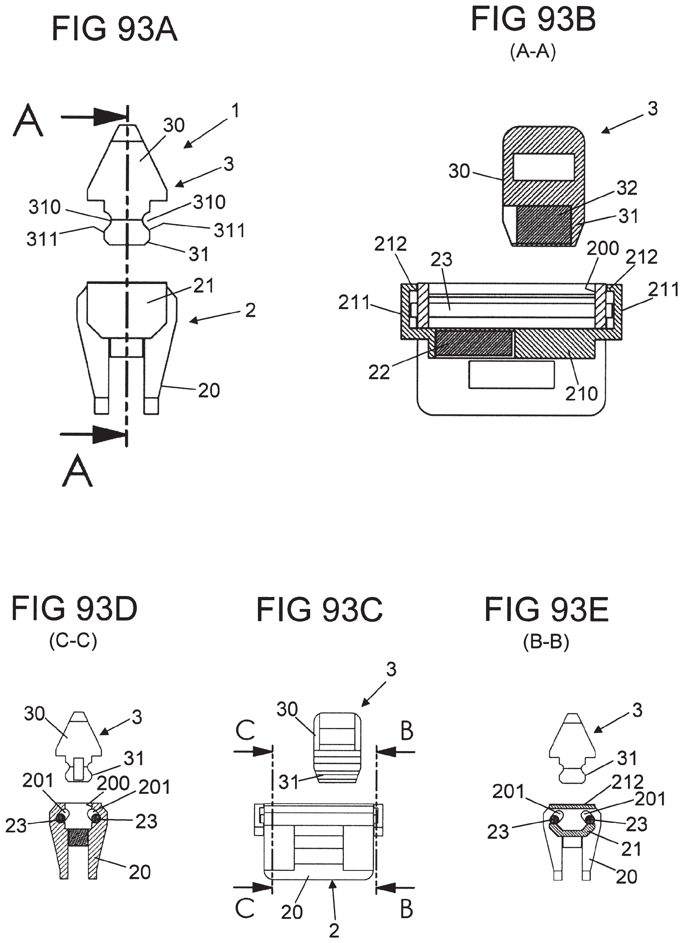

Ist die Verschlussvorrichtung 1 nicht belastet, wirken also keine Belastungskräfte zwischen den Verschlussteilen 2, 3, so erfolgt ein Öffnen wie in Fig. 91A bis 91E dargestellt. Bei Querbewegung des Verschlussteils 3 in der Eingriffsöffnung 200 werden die Magnetelemente 22, 32, ausgebildet durch Permanentmagnete, quer zueinander bewegt und somit voneinander abgeschert. Hierbei kommt es zu einer Umkehr der Magnetwirkung aufgrund eines sogenannten Kanteneffekts, der auftritt, wenn die Magnetelemente 22, 32 um einen gewissen Weg außer Deckung voneinander gebracht sind. Aufgrund der Umkehr der Magnetwirkung von einer Anziehung in eine Abstoßung wird das Verstellteil 21 in die Betätigungsrichtung B zu dem Körper 20 des Verschlussteils 2 bewegt, sodass die Verriegelungselemente 23 in den Aufnahmeöffnungen 201 verstellt und, wie aus Fig. 91D und 91E ersichtlich, nach außen verstellt werden. Die Verriegelung wird somit aufgehoben und die Verschlussteile 2, 3 können, wie aus Fig. 93A bis 93E ersichtlich, voneinander abgenommen werden.

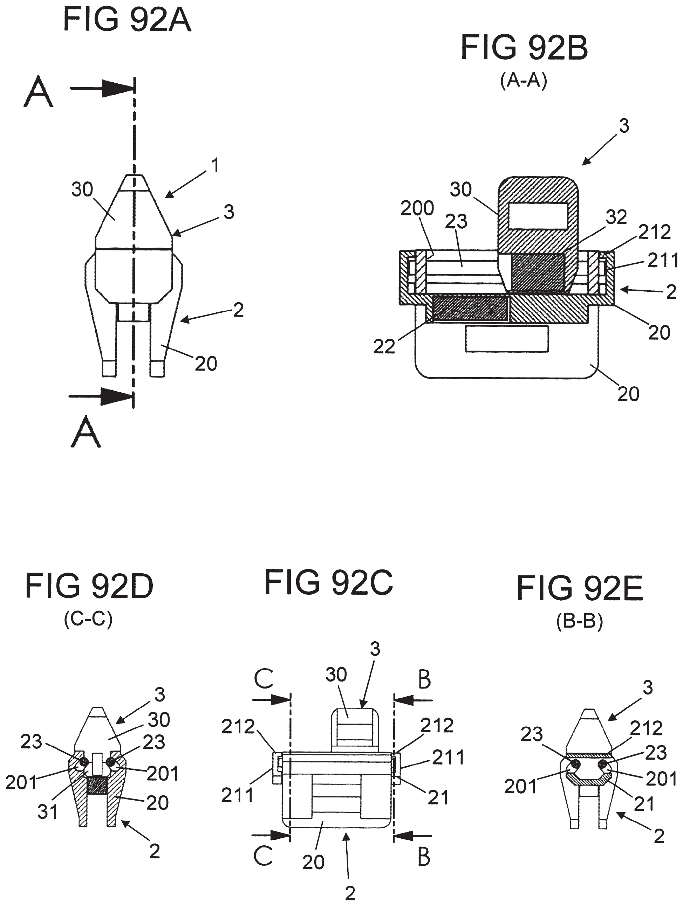

Erfolgt das Öffnen unter Last, wie dies in Fig. 92A bis 92E dargestellt ist, so sind die Verriegelungselemente 23 in den Aufnahmeöffnungen 201 aufgrund der Wechselwirkung mit den Verschlussteilen 2, 3 kraftschlüssig arretiert und können sich nicht ohne weiteres in den Aufnahmeöffnungen 201 verstellen, aufgrund einer Reibwirkung zwischen den am Körper 20 des Verschlussteils 2 einerseits und den Eingriffsabschnitten 310 andererseits geformten Schrägflächen 205, 311. Erst nach Entlastung der Verschlussvorrichtung 1 gelangt die Verschlussrichtung 1 in den Zustand gemäß Fig. 91A bis 91E, sodass sich das Verstellteil 21 aufgrund der Umkehr der Magnetwirkung selbsttätig verstellt und die Verriegelung somit gelöst wird, sodass die Verschlussteile 2, 3 voneinander abgenommen werden können.

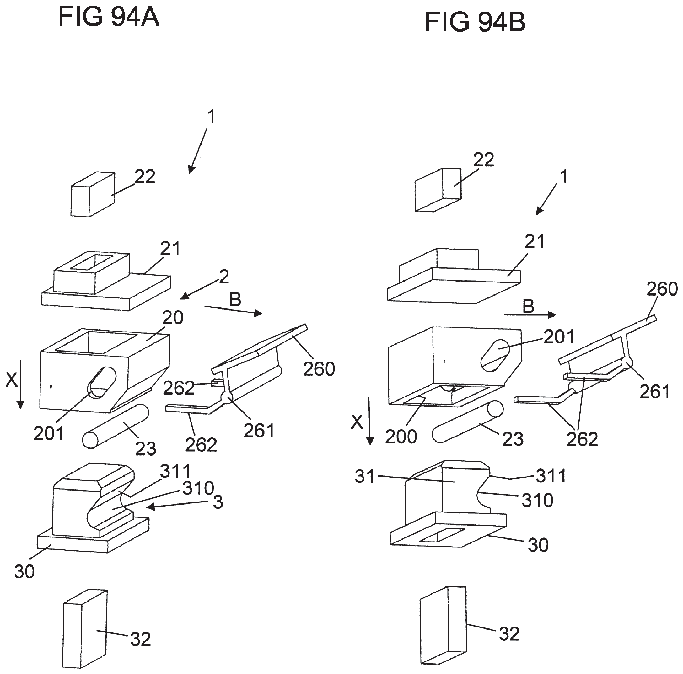

Bei einem in Fig. 94A, 94B bis 99A-99D dargestellten Ausführungsbeispiel einer Verschlussvorrichtung 1 sind Verschlussteile 2, 3 entlang einer Schließrichtung X aneinander anzuordnen. An einem Körper 20 des einen Verschlussteils 2 ist eine Eingriffsöffnung 200 geformt, in die das andere Verschlussteil 3 mit einem Eingriffselement 31 eingesteckt werden kann, um die Verschlussteile 2, 3 miteinander zu verbinden.

Beim Ausführungsbeispiel gemäß Fig. 94A, 94B bis 99A-99D ist ein (einziges) Verriegelungselement 23 in Aufnahmeöffnungen 201 an stirnseitigen Wandungen des Körpers 20 des Verschlussteils 2 aufgenommen und in den schräg gestellten, als Langlöcher ausgebildeten Aufnahmeöffnungen 201 verstellbar. In einer Schließstellung bei miteinander verbundenen Verschlussteilen 2, 3 greift das Verriegelungselement 23 in einen Eingriffsabschnitt 310 in Form einer Vertiefung an dem Eingriffselement 31 des Verschlussteils 3 ein, sodass dadurch die Verschlussteile 2, 3 miteinander verriegelt sind.

An den Verschlussteilen 2, 3 ist jeweils ein Magnetelement 22, 32 in Form eines Permanentmagneten angeordnet. Zudem ist das Verriegelungselement 23 magnetisch ausgebildet und wird bei Einstecken des Verschlussteils 3 durch das Magnetelement 32 des Verschlussteils 32 belastet, sodass das Verriegelungselement 23 in Eingriff mit dem Eingriffsabschnitt 310 gezogen wird.

Bei dem dargestellten Ausführungsbeispiel ist ein Verstellteil 21 verschiebbar entlang einer quer zur Schließrichtung X gerichteten Betätigungsrichtung B an dem Körper 20 des Verschlussteils 2 angeordnet. Zu dem Körper 20 ist zudem ein Wippenelement 26 um eine Schwenkachse 261 schwenkbar gelagert, wobei das Wippenelement 26 so zu dem Verstellteil 21 angeordnet ist, dass bei einem Verschieben des Verstellteils 21 das Wippenelement 26 betätigt wird.

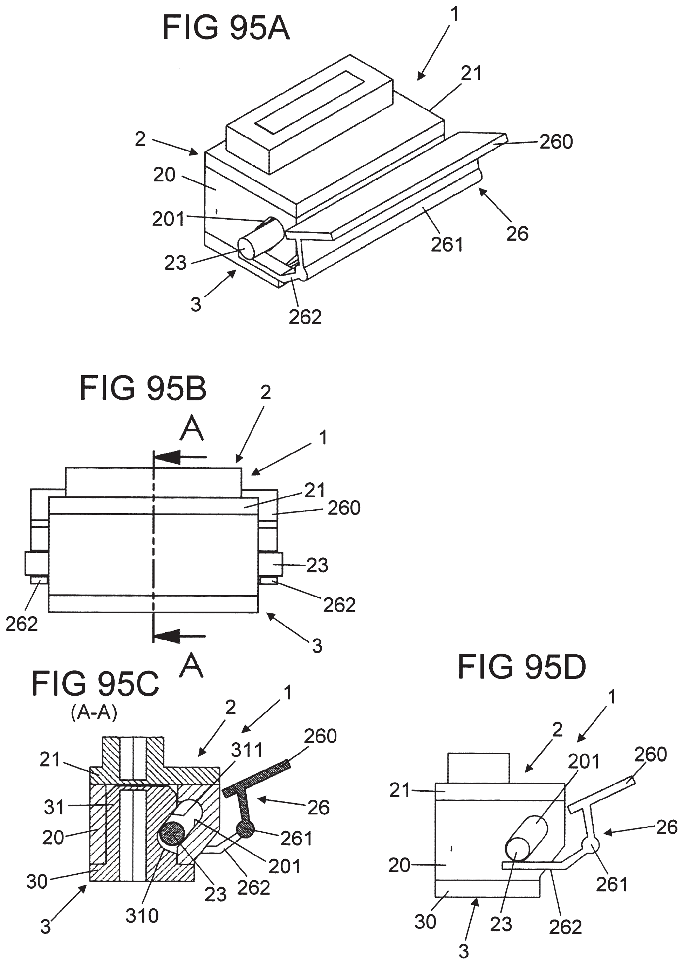

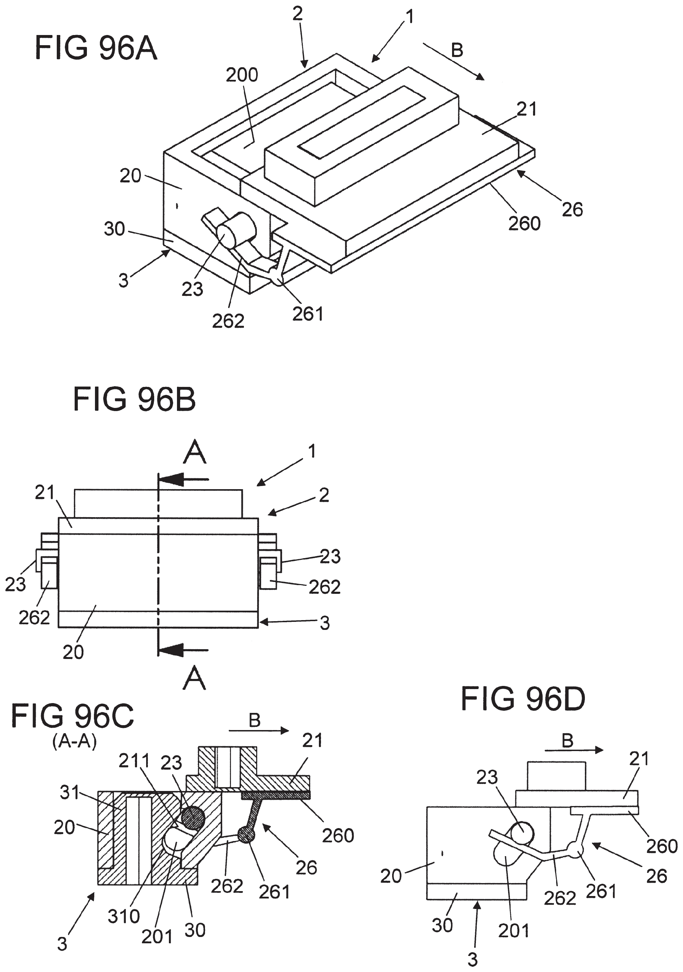

Dies ist im Übergang von Fig. 95A-95D zu Fig. 96A-96D dargestellt. In einer Schließstellung (Fig. 95A-95D) sind die Verschlussteile 2, 3 miteinander in Eingriff und über das Verriegelungselement 23 miteinander verriegelt. Durch Betätigung des Verstellteils 21 (Fig. 96A-96D) wird das Wippenelement 26 um seine Schwenkachse 261 verschwenkt, indem das Verstellteil 21 auf einen Hebelabschnitt 260 des Wippenelements 26 einwirkt.

Von der Schwenkachse 261 des Wippenelements 26 stehen Betätigungsabschnitte 262 vor, die dazu ausgebildet sind, auf relativ zum Körper 20 vorstehende Enden des Verriegelungselements 23 einzuwirken. Bei Verschwenken des Wippenelements 26 wird entsprechend, wie aus Fig. 96A-96D ersichtlich, das Verriegelungselement 23 in den Aufnahmeöffnungen 201 des Körpers 20 verstellt und dadurch nach außen versetzt, sodass der Eingriff zwischen dem Verriegelungselement 23 und dem Eingriffsabschnitt 310 des Verriegelungselements 31 aufgehoben wird und die Verschlussteile 2, 3 somit voneinander entriegelt werden.

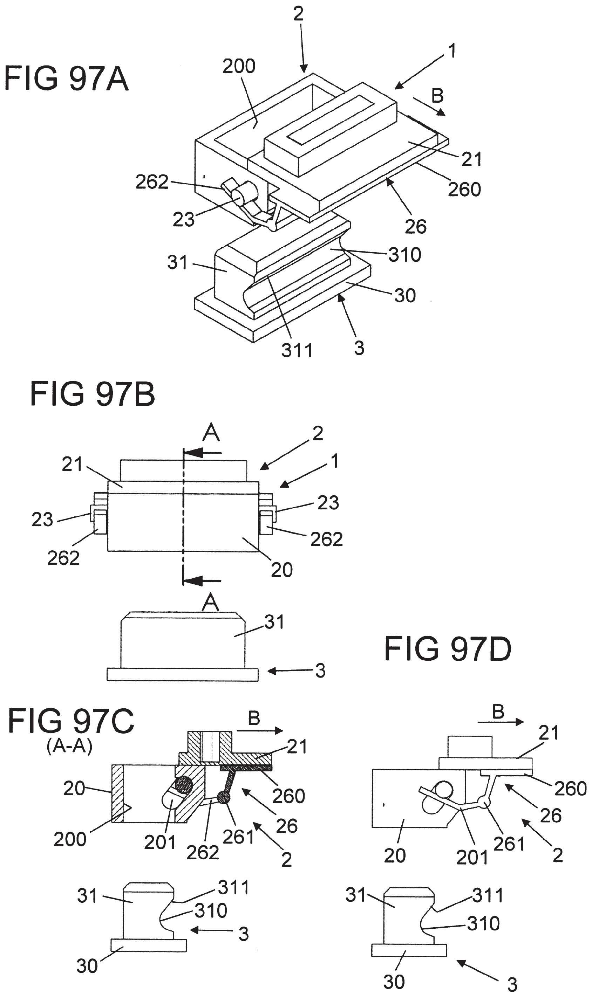

Die Verschlussteile 2, 3 können somit voneinander getrennt werden, wie dies aus Fig. 97A-97D ersichtlich ist. Weil durch Verstellen des Verstellteils 21, an dem das Magnetelement 22 des Verschlussteils 2 angeordnet ist, auch die magnetische Anziehungskraft zwischen den Magnetelementen 22, 32 abgeschwächt wird, ergibt sich ein einfaches Öffnen der Verschlussvorrichtung 1.

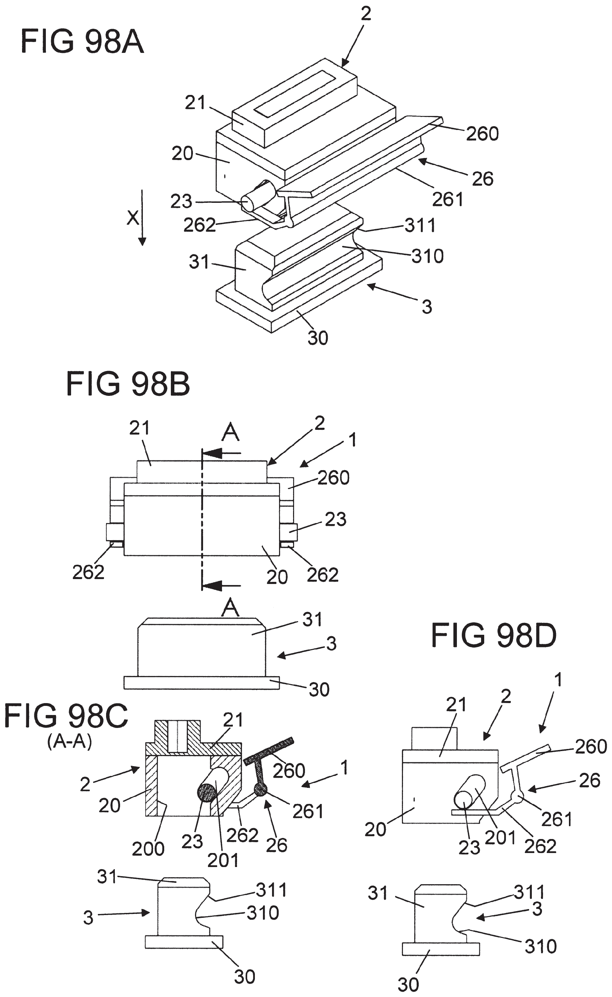

Wird das Verstellteil 21 zurückgestellt, wie aus Fig. 98A-98D ersichtlich, so kann auch das Wippenelement 26 zurückgestellt werden. Aufgrund einer magnetischen Anziehung zu dem Magnetelement 22 am Verstellteil 21 kann hierbei auch das Verriegelungselement 23 in den Aufnahmeöffnungen 201 verstellt werden.

Das Verstellteil 21 und das Wippenelement 26 können beispielsweise in Richtung eines Rückstellens federvorgespannt sein, sodass das Rückstellen gemäß Fig. 98A-98D selbsttätig erfolgt.

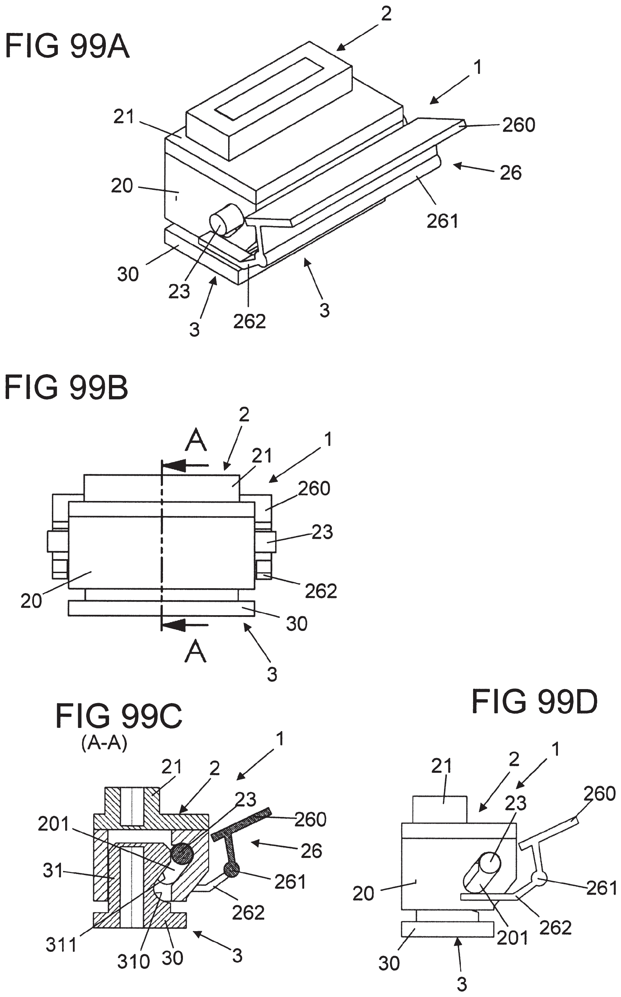

Nach Rückstellen des Verstellteils 21 und des Wippenelements 26 können die Verschlussteile 2, 3 wiederum miteinander verbunden werden, wie dies aus Fig. 99A-99D ersichtlich ist. Bei Ansetzen der Verschlussteile 2, 3 aneinander wird das Verriegelungselement 23 hierbei zunächst in den Aufnahmeöffnungen 201 beidseits des Körpers 20 des Verschlussteils 2 ausgelenkt, wie dies aus Fig. 99C und 99D ersichtlich ist, bis das Verriegelungselement 23 mit dem Eingriffsabschnitt 310 des Verriegelungselements 31 des Verschlussteils 3 in Eingriff gelangen kann und somit eine Verriegelung zwischen den Verschlussteilen 2, 3 hergestellt wird.

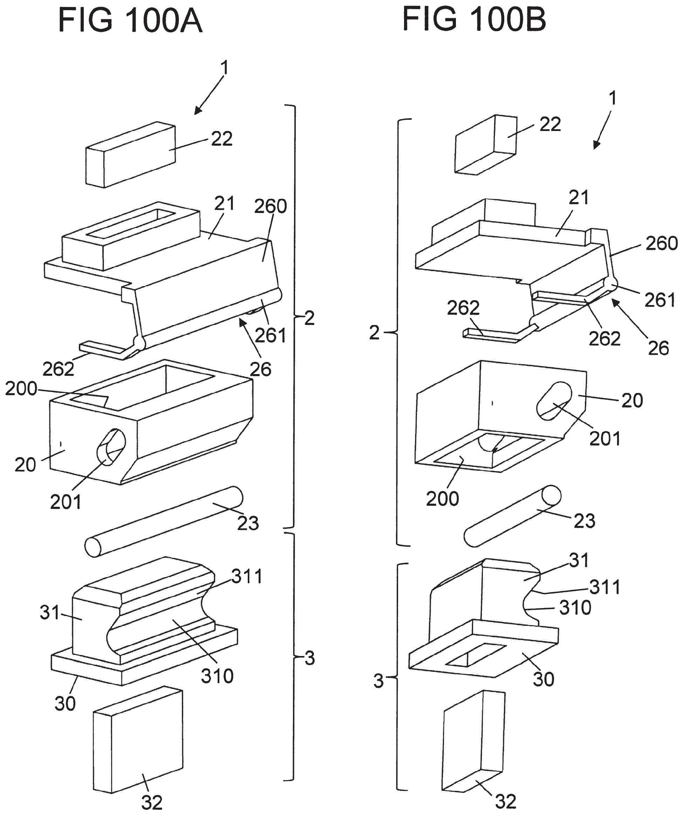

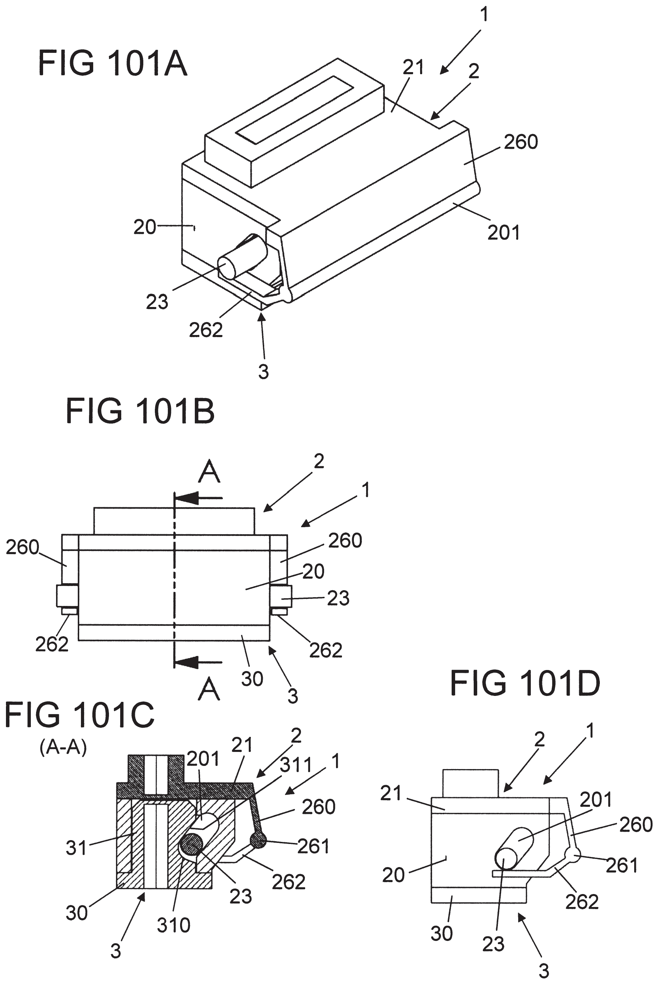

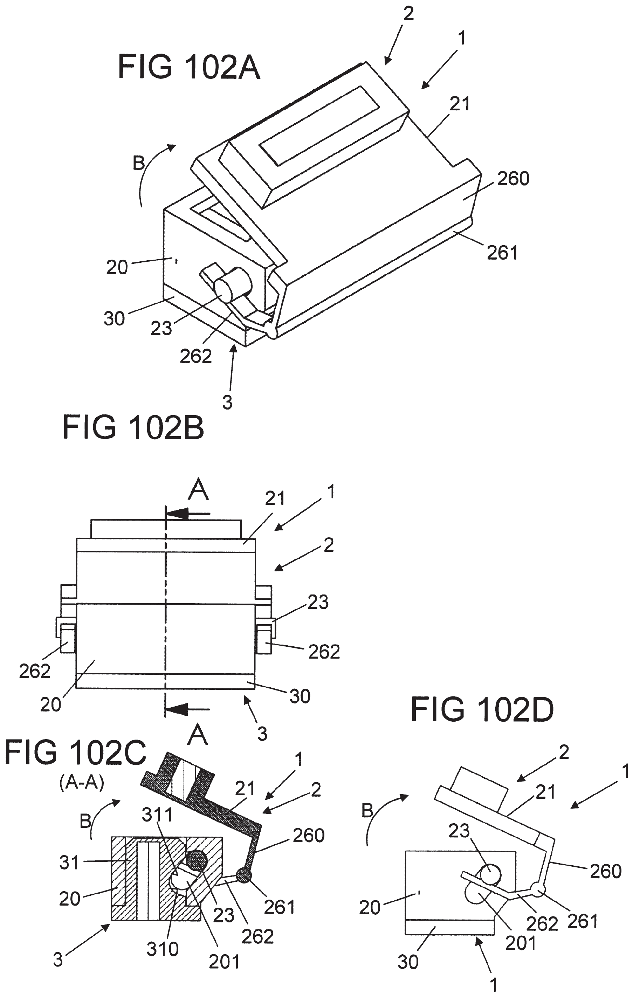

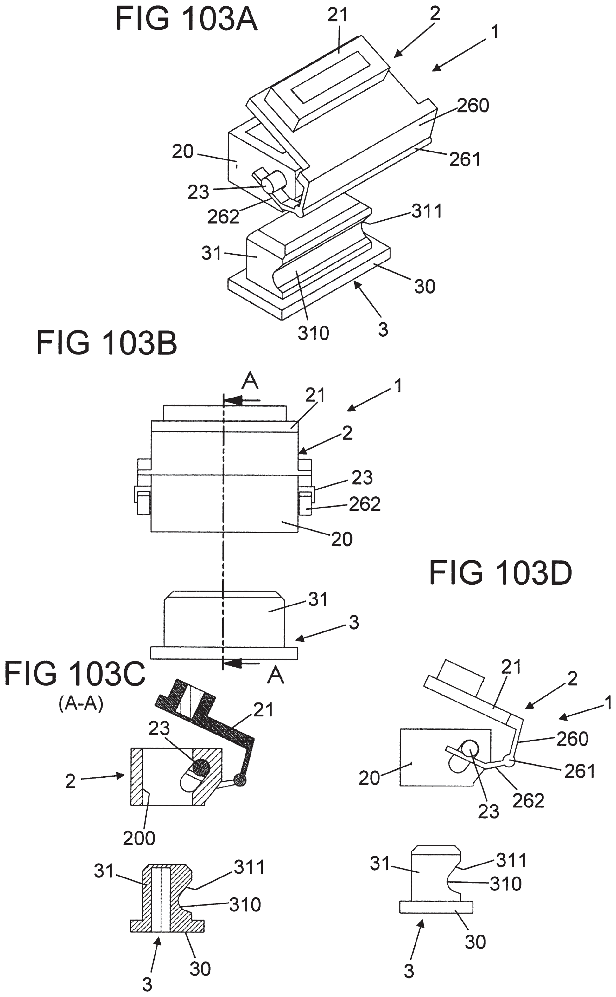

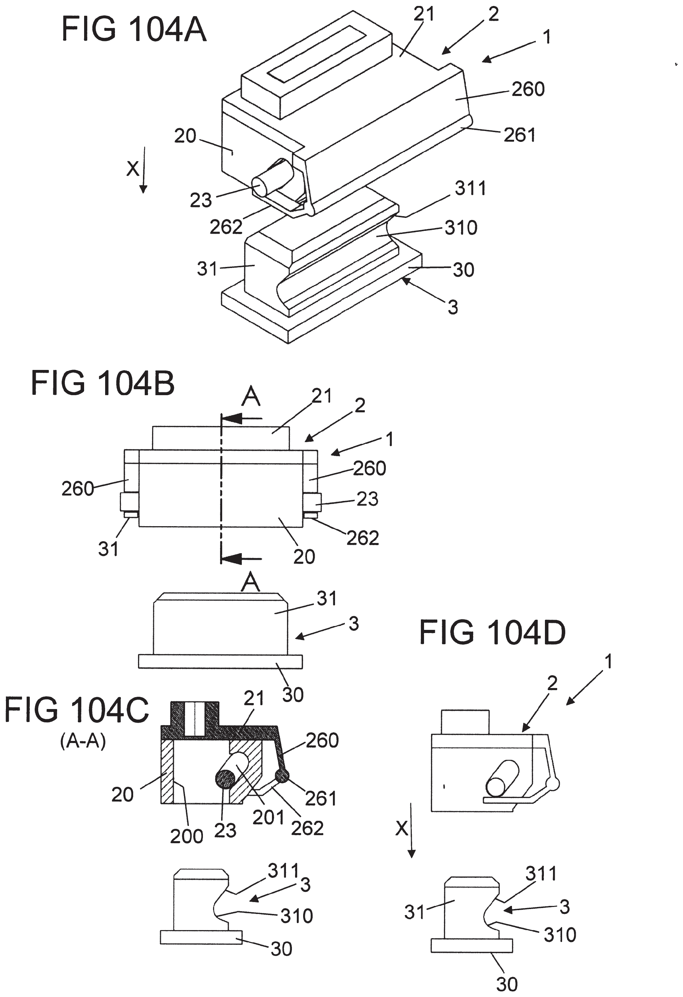

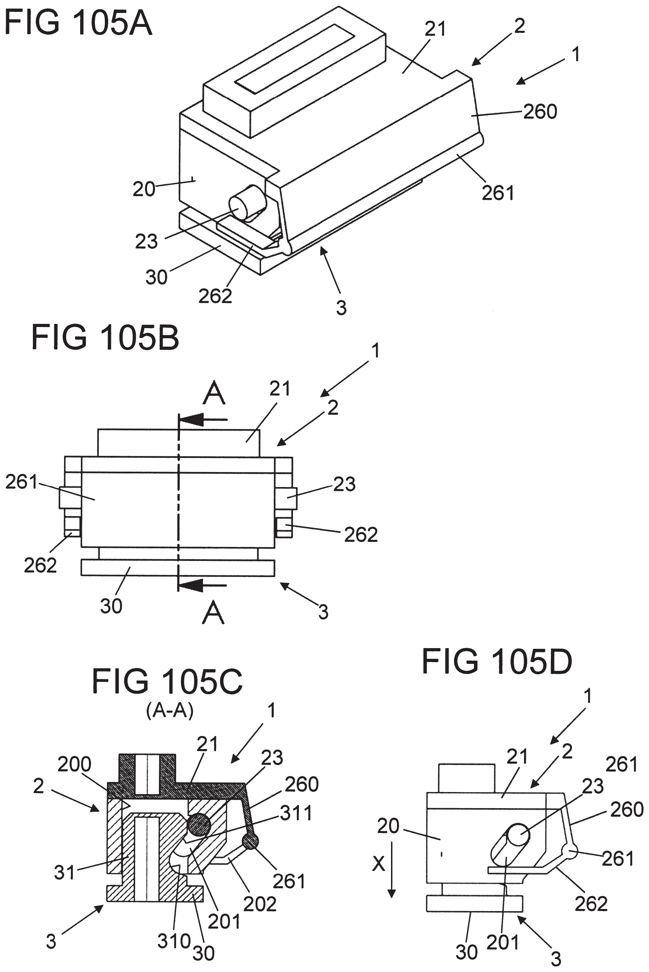

Bei einem in Fig. 100A,100B bis 105A-105D dargestellten Ausführungsbeispiel ist, im Unterschied zum Ausführungsbeispiel gemäß Fig. 94A, 94B bis 99A-99D, das Verstellteil 21 integral und einstückig mit dem Wippenelement 26 ausgebildet. Das Verstellteil 21 ist somit entlang einer gekrümmten Betätigungsrichtung B schwenkbar um die Schwenkachse 261 des Wippenelements 26 zu dem Körper 20 des Verschlussteils 2 bewegbar, wie dies im Übergang von Fig. 101A-101D und Fig. 102A-102D ersichtlich ist.

Ansonsten ist das Ausführungsbeispiel funktional identisch dem Ausführungsbeispiel gemäß Fig. 94A, 94B bis 99A-99D, sodass auch auf die vorangehenden Ausführungen verwiesen werden soll.

Wie dies vorangehend beispielsweise anhand von Fig. 8A-8C und Fig. 9A-9D erläutert worden ist, kann die Verriegelung zwischen den Verschlussteilen 2, 3 bei den vorangehend geschilderten Ausführungsbeispielen beeinflusst werden durch eine Winkelstellung von Schrägflächen 205, 311 am Körper 20 des Verschlussteils 2 einerseits und am Eingriffsabschnitt 310 des Verriegelungselements 31 des Verschlussteils 3 andererseits. Wie vorangehend erläutert worden ist, kann abhängig von dem Winkel zwischen den Schrägflächen 205, 311 eine im Wesentlichen spielfreie Verbindung (Fig. 8A-8C) oder eine selbstverstärkende, auch bei Belastung sichere Verbindung (Fig. 9A-9D) erreicht werden.

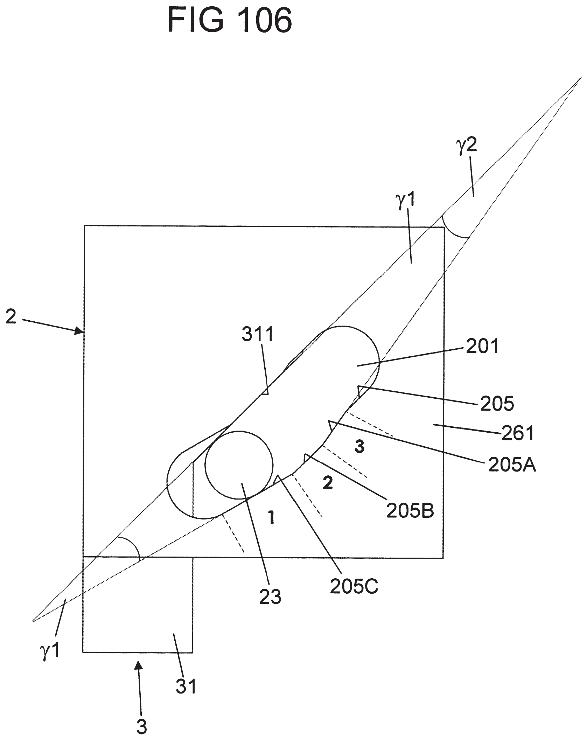

Dies ist, wie in Fig. 106 und Fig. 107A, 107B bis 109A, 109B veranschaulicht ist, auch miteinander kombinierbar.

So können an der Schrägfläche 205 auf Seiten des Körpers 20 des Verschlussteils 2 Abschnitte 205A-205C geformt sein, die sich in der winkligen Ausrichtung zu der Schrägfläche 311 des Verriegelungselements 31 des Verschlussteils 3 unterscheiden.

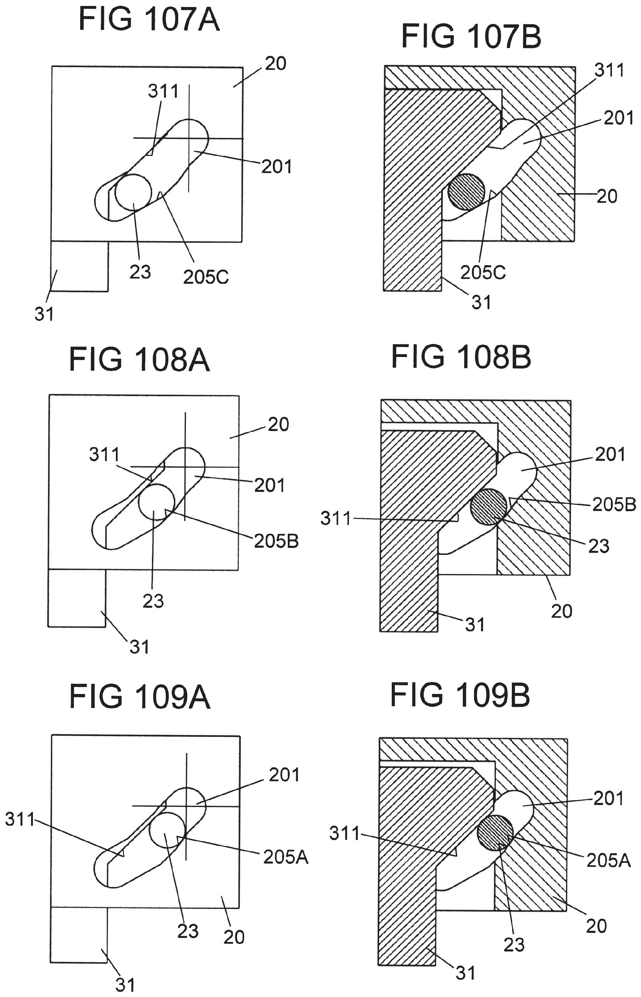

Bei dem in Fig. 106 sowie Fig. 107A, 107B bis 109A, 109B dargestellten Beispiel ist an der Schrägfläche 205 an einem innen gelegenen Ende ein Abschnitt 205C geformt, der unter einen Winkel γ1 größer Null zu der Schrägfläche 311 auf Seiten des Verriegelungselements 31 des Verschlussteils 3 gerichtet ist und somit zusammen mit der Schrägfläche 311 eine Keilform beschreibt, die sich nach außen hin weitet. In der Schließstellung der Verschlussteile 2, 3 liegt das Verriegelungselement 23, wie aus Fig. 106 in Zusammenschau mit Fig. 107A, 107B ersichtlich, zwischen dem Abschnitt 205C der Schrägfläche 205 und der Schrägfläche 311 ein, sodass die Verschlussteile 2, 3 im Wesentlichen spielfrei zueinander gehalten sind.

Ein an den Abschnitt 205C anschließender Abschnitt 205B ist demgegenüber parallel zur Schrägfläche 311 gerichtet, und ein an den Abschnitt 205B anschließender Abschnitt 205A weist einen Winkel γ2 zu der Schrägfläche 311 auf, der kleiner Null ist. Der Abschnitt 205A bildet somit gemeinsam mit der Schrägfläche 311 eine Keilform aus, die sich nach außen hin verjüngt, wie dies aus Fig. 106 ersichtlich ist.

Bei einer Belastung zwischen den Verschlussteilen 2, 3 in der Schließstellung sind die Verschlussteile 2, 3 in Richtung einer Annäherung der Schrägflächen 205, 311 aneinander belastet. Aufgrund des Winkels γ1 zwischen dem Abschnitt 205C und der Schrägfläche 311 wirkt somit eine Kraft auf das Verriegelungselement 23 nach außen, sodass bei großer Belastung das Verriegelungselement 23 in den Aufnahmeöffnungen 201 nach außen versetzt wird, wie dies im Übergang von Fig. 108A, 108B hin zu Fig. 109A, 109B ersichtlich ist. Das Verriegelungselement 23 passiert somit den Abschnitt 205B der Schrägfläche 205 und gelangt in den Bereich des Abschnitts 205A, in dem aufgrund des Winkels γ2 zwischen dem Abschnitt 205A und der Schrägfläche 311 eine Selbstverstärkung der Verbindung auftritt, sodass die Verschlussteile 2, 3 auch bei großer Belastung nicht voneinander gelöst werden können.

Durch das Vorsehen der unterschiedlichen Abschnitte 205A-205C wird somit zum einen eine spielfreie Verbindung zwischen den Verschlussteilen 2, 3 erreicht, wie aus Fig. 106 und 107A, 107B ersichtlich. Bei großer Belastung wirkt die Verbindung zudem selbstverstärkend, indem das Verriegelungselement 23 verkeilend zwischen dem Abschnitt 205A und der Schrägfläche 311 verklemmt wird.

Zusätzlich oder alternativ können auch an der Schrägfläche 311 auf Seiten des Verschlussteils 3 unterschiedlich ausgerichtete Abschnitte geformt sein.

Der der Erfindung zugrunde liegende Gedanke ist nicht auf die vorangehend geschilderten Ausführungsbeispiele beschränkt, sondern lässt sich auch in anderer Weise verwirklichen.

Eine Verschlussvorrichtung der beschriebenen Art kann in ganz unterschiedlicher Weise Verwendung finden.

So kann eine Verschlussvorrichtung zur Verbindung von Gurten zum Bereitstellen einer Zwei-Punkt-Verbindung oder auch einer Mehr-Punkt-Verbindung (zum Verbinden von mehr als zwei Gurten) Verwendung finden.

Eine Verschlussvorrichtung der beschriebenen Art kann zudem zum Verbinden eines elektronischen Geräts mit einer übergeordneten Baugruppe, zum Beispiel in oder an einem Fahrzeug, zum Beispiel einem Kraftfahrzeug oder Fahrrad, Verwendung finden. So kann über eine solche Vorrichtung beispielsweise ein Mobiltelefon an einem Armaturenbrett eines Kraftfahrzeugs oder an einer Lenkerstange eines Fahrrads (lösbar) festgelegt werden.

Die Verschlussvorrichtung kann aber auch zum Verbinden anderer Gegenstände miteinander, zum Beispiel als Verschluss für einen Helm, insbesondere Sporthelm, für eine Tasche oder für ein Kleidungsstück, Verwendung finden.

### Bezugszeichenliste

- 1: Verschlussvorrichtung
- 2: Verschlussteil
- 20: Körper
- 200: Eingriffsöffnung
- 201: Aufnahmeöffnung
- 202: Befestigungsabschnitt
- 203: Schenkel
- 204: Führungseingriff
- 205: Schrägfläche
- 206: Führungsöffnung
- 21: Verstellteil
- 210: Zwischenabschnitt
- 211: Flankenabschnitt
- 212: Betätigungselement
- 212A, 212B: Abschnitt
- 213: Wirkelement
- 214: Federelement
- 215: Verbindungsabschnitt
- 216: Umlenkabschnitt
- 217: Seitenwandung
- 218: Griffelement
- 22: Magneteinrichtung
- 23: Verriegelungselement
- 230: Abschnitt
- 231: Lasche
- 232: Anlagefläche
- 24: Wirkelement
- 240: Federelement
- 241: Umlenkabschnitt
- 25: Elektrischer Anschluss
- 250: Kontaktelement
- 26: Wippenelement
- 260: Hebelabschnitt
- 261: Schwenkachse
- 262: Betätigungsabschnitt
- 3: Verschlussteil
- 30: Basis
- 300: Befestigungsabschnitt
- 301: Führungszapfen
- 302: Eingriffsnase
- 303: Eingriffsnut
- 304: Tragabschnitt
- 305: Betätigungsabschnitt
- 31: Eingriffselement
- 310: Eingriffsabschnitt
- 311: Schrägfläche
- 312: Anlagefläche
- 32: Magneteinrichtung
- 33: Sperrstück
- 330: Sperrabschnitt
- 35: Elektrischer Anschluss
- 350: Kontaktelement
- 36: Verstellteil
- 4: Erste Baugruppe
- 40: Verbindungsabschnitt
- 41: Anschlagelement
- 5: Zweite Baugruppe
- 50: Verbindungsabschnitt
- 6: Elektronikgerät
- 7: Verbindungsbaugruppe (Duschvorhang)
- 70: Stangenelement
- 71: Gleiter
- 72: Betätigungsstück
- 720: Magneteinrichtung
- 73: Behang
- 74: Wandung
- α, β, γ1, γ2: Winkel
- B: Betätigungsrichtung
- C: Betätigungsrichtung
- D: Wirkrichtung
- D1a, D1b, D2: Drehkreis
- E: Betätigungsrichtung
- L: Längsrichtung
- M1, M2: Mittelpunkt
- Q: Querrichtung
- T: Trennrichtung
- X: Schließrichtung
- V: Verstellrichtung

## Patentansprüche

1. Verschlusssystem, das eine Mehrzahl von Verschlussvorrichtungen (1) aufweist, wobei jede Verschlussvorrichtung (1) aufweist:
ein einen Körper (20) aufweisendes erstes Verschlussteil (2) und ein zweites Verschlussteil (3), die zum Schließen der Verschlussvorrichtung (1) entlang einer Schließrichtung (X) aneinander ansetzbar und in einer Schließstellung miteinander verbunden sind, und
zumindest ein Verriegelungselement (23), das verstellbar an dem Körper (20) des ersten Verschlussteils (2) angeordnet ist, und zumindest einem Eingriffsabschnitt (310), der an dem zweiten Verschlussteil (3) geformt ist, wobei das zumindest eine Verriegelungselement (23) und der zumindest eine Eingriffsabschnitt (310) in einer Schließstellung derart miteinander in Eingriff stehen, dass das erste Verschlussteil (2) und das zweite Verschlussteil (3) miteinander verriegelt sind,
**dadurch gekennzeichnet, dass** das erste Verschlussteil (2) eine erste Magneteinrichtung (22) und das zweite Verschlussteil (3) eine zweite Magneteinrichtung (32) aufweisen, wobei die erste Magneteinrichtung (22) und die zweite Magneteinrichtung (32) bei Ansetzen des ersten Verschlussteils (2) und des zweiten Verschlussteils (3) aneinander magnetisch anziehend zusammenwirken und das zumindest eine Verriegelungselement (23) derart magnetisch ausgebildet ist, dass das zumindest eine Verriegelungselement (23) in der Schließstellung durch die erste Magneteinrichtung (22) und/oder die zweite Magneteinrichtung (32) in Richtung eines Eingriffs mit dem zumindest einen Eingriffsabschnitt (310) belastet ist,
wobei die ersten Verschlussteile (2) der Verschlussvorrichtungen (1) in einer ersten Baugruppe (4) und die zweiten Verschlussteile (3) der Verschlussvorrichtungen (1) in einer zweiten Baugruppe (5) miteinander verbunden sind,
wobei die ersten Verschlussteile (2) jeweils ein Verstellteil (21) aufweisen, das betätigbar ist, um das zumindest eine Verriegelungselement (23) des jeweils zugeordneten ersten Verschlussteils (2) zum Lösen des ersten Verschlussteils (2) und eines zugeordneten zweiten Verschlussteils (3) voneinander außer Eingriff von dem zumindest einen Eingriffsabschnitt (310) des zugeordneten zweiten Verschlussteils (3) zu bringen, wobei die Verstellteile (21) der ersten Verschlussteile (21) derart miteinander wirkverbunden sind, dass die Verstellteile (21) gemeinsam betätigbar sind.

2. Verschlusssystem nach Anspruch 1, **dadurch gekennzeichnet, dass** eines von erstem Verschlussteil (2) und zweitem Verschlussteil (3) jeder Verschlussvorrichtung (1) eine Eingriffsöffnung (200) aufweist, während das andere von erstem Verschlussteil (2) und zweitem Verschlussteil (3) ein Eingriffselement (31) aufweist, das in der Schließstellung der Verschlussvorrichtung (1) in die Eingriffsöffnung (200) eingreift.

3. Verschlusssystem nach Anspruch 1 oder 2, **dadurch gekennzeichnet, dass** das zumindest eine Verriegelungselement (23) jeder Verschlussvorrichtung (1) in einer Ebene, die durch die Schließrichtung (X) und eine quer zur Schließrichtung (X) erstreckte Querrichtung (Q) aufgespannt ist, linear verstellbar oder verschwenkbar an dem ersten Verschlussteil (2) angeordnet ist.

4. Verschlusssystem nach Anspruch 3, **dadurch gekennzeichnet, dass** das zumindest eine Verriegelungselement (23) verstellbar in einer Aufnahmeöffnung (201) des ersten Verschlussteils (2) aufgenommen ist.

5. Verschlussvorrichtung (1) nach Anspruch 3 oder 4, **dadurch gekennzeichnet, dass** das zumindest eine Verriegelungselement (23) senkrecht zu der durch die Schließrichtung (X) und die Querrichtung (Q) aufgespannten Ebene längserstreckt oder zumindest abschnittsweise umfänglich um die Schließrichtung (X) erstreckt ist.

6. Verschlussvorrichtung (1) nach einem der vorangehenden Ansprüche, **dadurch gekennzeichnet, dass** das Verstellteil (21) jeder Verschlussvorrichtung (1) in eine quer zur Schließrichtung (X) gerichtete Betätigungsrichtung (B) betätigbar ist, um das zumindest eine Verriegelungselement (23) zum Lösen des ersten Verschlussteils (2) und des zweiten Verschlussteils (3) voneinander außer Eingriff von dem zumindest einen Eingriffsabschnitt (310) zu bringen.

7. Verschlussvorrichtung (1) nach Anspruch 6, **dadurch gekennzeichnet, dass** das Verstellteil (21) jeder Verschlussvorrichtung (1) entgegen der Betätigungsrichtung (B) zu einem Abschnitt des ersten Verschlussteils (2) federvorgespannt ist.

8. Verschlussvorrichtung (1) nach Anspruch 6 oder 7, **dadurch gekennzeichnet, dass** die erste Magneteinrichtung (22) an dem Verstellteil (21) angeordnet und gemeinsam mit dem Verstellteil (21) verstellbar ist.

9. Verschlussvorrichtung (1) nach einem der Ansprüche 6 bis 8, **dadurch gekennzeichnet, dass** das erste Verschlussteil (2) jeder Verschlussvorrichtung (1) zumindest ein Wirkelement (24) aufweist, das entlang einer von der Betätigungsrichtung (B) unterschiedlichen Wirkrichtung (D) zu dem Verstellteil (21) verstellbar und derart mit dem Verstellteil (21) wirkverbunden ist, dass ein Verstellen des Wirkelements (24) in die Wirkrichtung (D) eine Betätigung des Verstellteils (21) in die Betätigungsrichtung (B) bewirkt.

10. Verschlussvorrichtung (1) nach Anspruch 9, **dadurch gekennzeichnet, dass** das Wirkelement (24) entgegen der Wirkrichtung (D) zu einem Abschnitt des ersten Verschlussteils (2) federvorgespannt ist.

11. Verschlussvorrichtung (1) nach einem der Ansprüche 6 bis 10, **dadurch gekennzeichnet, dass** das erste Verschlussteil (2) jeder Verschlussvorrichtung (1) ein Wippenelement (26) aufweist, das um eine Schwenkachse (261) zu dem Körper (20) des ersten Verschlussteils (2) verschwenkbar ist und durch das Verstellteil (21) zum Verstellen des zumindest einen Verriegelungselements (23) bewegbar ist.

12. Verschlussvorrichtung (1) nach Anspruch 11, **dadurch gekennzeichnet, dass** das Wippenelement (26) einen Betätigungsabschnitt (262) zum Einwirken auf das zumindest eine Verriegelungselement (23) aufweist, wobei das Wippenelement (26) verschwenkbar ist, um das zumindest eine Verriegelungselement (23) zum Lösen des ersten Verschlussteils (2) und des zweiten Verschlussteils (3) voneinander außer Eingriff von dem zumindest einen Eingriffsabschnitt (310) zu bringen.

13. Verschlussvorrichtung (1) nach einem der vorangehenden Ansprüche, **dadurch gekennzeichnet, dass** das erste Verschlussteil (2) zumindest einen ersten elektrischen Anschluss (25) und das erste Verschlussteil (2) und/oder das zweite Verschlussteil (3) zumindest einen zweiten elektrischen Anschluss (35) aufweisen, wobei der erste elektrische Anschluss (25) und der zweite elektrische Anschluss (35) in der Schließstellung elektrisch miteinander verbunden, bei getrennten Verschlussteilen (2, 3) aber elektrisch voneinander getrennt sind.

14. Verschlussvorrichtung (1) nach Anspruch 13, **dadurch gekennzeichnet, dass** der erste elektrische Anschluss (25) elektrisch mit dem zumindest einen Verriegelungselement (23) verbunden ist.

15. Verschlussvorrichtung (1) nach Anspruch 13 oder 14, **dadurch gekennzeichnet, dass** der zweite elektrische Anschluss (35) elektrisch mit einem an dem Eingriffsabschnitt (310) angeordneten elektrischen Kontaktelement (350) verbunden ist.
